# EUROPEAN PATENT SPECIFICATION

(11) **EP 3 992 683 B1**
(45) Date of publication and mention of the grant of the patent: **09.07.2025**
(21) Application number: 21205835.8
(22) Date of filing: 01.11.2021
(51) Int. Cl.: G02B 6/38, G02B 6/44

(54) **SPLICE PATCH ARRANGEMENT WITH MOVABLE ADAPTERS**
SPLEISSBARE PATCH-ANORDNUNG MIT BEWEGLICHEN ADAPTERN
AGENCEMENT DE RÉPARTITION EN ÉPISSURE À ADAPTATEURS MOBILES

(30) Priority: 02.11.2020 US 202063108709 P
(43) Date of publication of application: 04.05.2022
(73) Proprietor: CommScope Connectivity Belgium BV, 3010 Kessel-Lo (BE)
(72) Inventor: MARCH, Jens, Hickory, 28602 (US); FISCHER, Kurt Thomas, Hickory, 28602 (US); DE VIS, Willem Lea Marcel, Hickory, 28602 (US); PARTON, Geert Antoon, Hickory, 28602 (US); BLEUS, Heidi, Hickory, 28602 (US)
(74) Representative: Murgitroyd & Company

(56) References cited:
- WO-A1-2019/160995
- WO-A1-2020/148296

## Description

### Cross-Reference to Related Application

This application claims the benefit of U.S. Patent Application Serial No. 63/108,709, filed on November 2, 2020.

### Background

Communication systems utilize fiber optic cables to connect together pieces of telecommunications equipment. Patch panels are used to optically couple fiber optic cables to cross-connect between various types of communications equipment. The demand for added capacity is growing rapidly. This demand is being met in part by the increasing use and density of fiber optic transmission equipment. Even though fiber optic equipment permits higher levels of transmission in the same or smaller footprint than traditional copper transmission equipment, the demand requires even higher levels of fiber density.

Further development in such fiber termination systems is desired. WO 2020/148296 A1 discloses a termination arrangement for mounting on a telecommunications fixture, comprising a support member, a splice tray attached to the support member, and an adapter holder removably mounted to the support member. WO 2019/160995 A1 discloses a telecommunications enclosure including a management unit having a support infrastructure and a rear tray. Adapters holders and cable anchors are provided on the management unit.

### Summary

The present invention is defined by appended claim 1. Optional features are defined by the dependent claims. In accordance with some aspects of the disclosure, a patch panel includes a base defining a plurality of pivot axes, a plurality of support members, and a plurality of adapter holders. The support members have opposite first and second major surfaces that extend between opposite first and second ends. The first end of each support member is coupled to the base at one of the pivot axes so that the second end pivots relative to the base about the respective pivot axis. The first major surface of each support member faces the base and the second major surface faces away from the base. The adapter holders are each structured to hold at least one optical adapter. Each adapter holder is disposed at the second end of a respective support member. Each adapter holder extends outwardly from the second major surface of the respective support member.

In certain implementations, each adapter holder is structured to hold a plurality of optical adapters in a stack.

In certain implementations, each adapter holder includes a bridge that separates the stack of optical adapters into a first group and a second group.

In certain implementations, optical adapters are mounted to each adapter holder. Each optical adapter defines oppositely facing ports having connector insertion axes that are parallel to the respective support member.

In certain implementations, the adapter holders are disposed over the base.

In certain implementations, each adapter holder is monolithically formed with the respective support member.

In certain implementations, a respective retention flange is coupled to each support member to define a slot between the retention flange and the first major surface of the support member. The retention flanges extend along an opposite side of the base from which the support members are coupled.

In certain implementations, the base includes a fiber management arrangement including bend radius limiters located at a first end of the base, wherein the first ends of the support members are coupled to an intermediate portion of the base, and wherein the adapter holders are disposed at a second end of the base, the second end being opposite the first end.

In certain implementations, the fiber management arrangement defines fiber channels leading on and off the base. The bend radius limiters at least partially define the fiber channels.

In accordance with other aspects of the disclosure, a patch panel includes a base having a planar surface extending between opposite first and second ends and a plurality of termination arrangements pivotally coupled to the base. Each termination arrangement is configured to hold at least one optical adapter. Each termination arrangement extends between opposite first and second ends. The first ends of the termination arrangements are coupled to the base to enable the second end of each termination arrangement to pivot along a respective pivot path. The second ends of the termination arrangements each define a slot into which the second end of the base extends. Interaction between the second end of the base and the respective slot limits the pivot path of each termination arrangement.

In certain implementations, each termination arrangement is configured to hold a plurality of optical adapters.

In certain implementations, a respective stack of optical adapters is mounted to each termination arrangement. The stacks are carried along the respective pivot paths during pivoting of the termination arrangements.

In certain implementations, each termination arrangement includes a retention flange that partially defines the slot. The optical adapters are held above one side of the base and the retention flange extends along another side of the base.

In certain implementations, the base includes a fiber management arrangement including bend radius limiters located at the first end of the base. The first ends of the termination arrangements are coupled to an intermediate portion of the base. Second ends of the termination arrangements are disposed at the second end of the base.

In certain implementations, the fiber management arrangement defines fiber channels leading on and off the base. The bend radius limiters at least partially define the fiber channels.

In accordance with other aspects of the disclosure, a patch panel includes a base and a plurality of termination arrangements. The base includes a mounting surface configured to mount to a surface. The base also includes a cutout region defining a plurality of fingers. Each finger has a distal end that flexes relative to the mounting surface. The base also includes a plurality of overhang members disposed above and parallel to the mounting surface. Each overhang member aligns with a respective one of the fingers. Each termination arrangement includes a support member extending between a first end and a second end. The first end is coupled to the distal end of a respective one of the fingers so that the first end is disposed between the support member and the respective overhang member. Each termination arrangement also includes an adapter holder carried by the support member.

In certain implementations, the distal ends of the fingers define holes and the first ends of the support members include pins that fit into respective ones of the holes to mount the termination arrangements to the base.

In certain implementations, the overhang members inhibit removal of the termination arrangements from the fingers.

In certain implementations, the base includes a fiber management arrangement including bend radius limiters located at the first end of the base. The first ends of the termination arrangements are coupled to an intermediate portion of the base. Second ends of the termination arrangements are disposed at the second end of the base.

In certain implementations, the fiber management arrangement defines fiber channels leading on and off the base. The bend radius limiters at least partially define the fiber channels.

According to another aspect, the disclosure is directed to a patch panel comprising a plurality of termination arrangements in a stacked configuration. Each termination arrangement comprises a support member extending between opposite first and second ends, an adapter holder adjacent the first end of the support member, the adapter holder structured to hold at least one optical adapter, and a mounting structure positioned adjacent the second end of the support member, the mounting structure configured for attaching the support member to a telecommunications fixture. The support member of the termination arrangement is elastically flexible for allowing biased movement of the adapter holder away from the point of attachment between the mounting structure and the telecommunications fixture.

According to another aspect, the disclosure is directed to a termination arrangement configured for mounting on a telecommunications fixture. The termination arrangement comprises a support member extending between opposite first and second ends, an adapter holder adjacent the first end of the support member, the adapter holder structured to hold at least one optical adapter, and a mounting structure positioned adjacent the second end of the support member, the mounting structure configured for attaching the support member to the telecommunications fixture. The support member of the termination arrangement is elastically flexible for allowing biased movement of the adapter holder away from the point of attachment between the mounting structure and the telecommunications fixture.

According to another aspect, the disclosure is directed to a piece of telecommunications equipment comprising a fiber optic splice arrangement defined by a plurality of splice trays in a stacked configuration and a fiber optic patch panel defined by a plurality of termination arrangements in a stacked configuration. Each termination arrangement comprises a support member extending between opposite first and second ends, an adapter holder adjacent the first end of the support member, the adapter holder structured to hold at least one optical adapter, and a mounting structure positioned adjacent the second end of the support member, the mounting structure configured for attaching the support member to the piece of telecommunications equipment. The support member of the termination arrangement is elastically flexible for allowing biased movement of the adapter holder away from the point of attachment between the mounting structure and the piece of telecommunications equipment. The adapter holder includes at least one optical adapter mounted thereto, the at least one optical adapter defining oppositely facing ports having connector insertion axes that are parallel to the support member, at least one of the oppositely facing ports configured for receiving a connector terminated to an end of a fiber optic cable extending to or from one of the splice trays.

According to another aspect, the disclosure is directed to a termination arrangement configured for mounting on a telecommunications fixture, the termination arrangement comprising a support member extending between opposite first and second ends, the support member including mounting features, for mounting on the telecommunications fixture, at least one splice tray attached to the support member, and at least one adapter holder movably mounted to the support member adjacent the first end of the support member, the adapter holder structured to hold at least one optical adapter. The movement of the adapter holder relative to the support member allows the at least one optical adapter to move away from the telecommunications fixture for access.

According to yet another aspect, the disclosure is directed to a patch panel comprising a plurality of termination arrangements in a stacked configuration. Each termination arrangement comprises a support member extending between opposite first and second ends, the support member including mounting features for mounting on a telecommunications fixture, at least one splice tray attached to the support member, and at least one adapter holder movably mounted to the support member adjacent the first end of the support member, the adapter holder structured to hold at least one optical adapter. The movement of the adapter holder relative to the support member allows the at least one optical adapter to move away from the telecommunications fixture for access.

According to yet certain aspects, a termination arrangement for mounting on a fixture may include a support member, a splice tray, an adapter holder, and a strength member fixation device all mounted to the support member, wherein the adapter holder is positioned between the splice tray and the cable strength member fixation device, wherein the support member is configured such that an optical fiber spliced within the splice tray can be terminated to a first connector to be mated to a second connector via an adapter on the adapter holder or an optical fiber spliced within the splice tray can be directly routed to the cable strength member fixation device without removal of an adapter from the adapter holder, the cable strength member fixation device configured for clamping against pulling forces a strength member of a fiber optic cable carrying the optical fiber routed directly from the splice tray.

The claims are directed to a termination arrangement configured for mounting on a telecommunications fixture, the termination arrangement comprising a support member extending between opposite first and second ends, the support member including mounting features for mounting on the telecommunications fixture, at least one splice tray attached to the support member, at least one adapter holder mounted to the support member, the adapter holder structured to hold at least one optical adapter, and at least one cable strength member fixation device mounted to the support member, wherein the at least one adapter holder is positioned between the at least one splice tray and the at least one cable strength member fixation device, wherein the support member is configured such that an optical fiber spliced within the at least one splice tray can be terminated to a first connector to be mated to a second connector via the at least one optical adapter or an optical fiber spliced within the at least one splice tray can be directly routed to the at least one cable strength member fixation device without removal of an adapter from the at least one adapter holder, the cable strength member fixation device configured for clamping against pulling forces a strength member of a fiber optic cable carrying the optical fiber routed directly from the splice tray. The support member defines a channel positioned underneath the at least one adapter holder for directly routing the optical fiber spliced within the at least one splice tray to the at least one cable strength member without removal of an adapter from the at least one adapter holder.

The claims are also directed to a telecommunications fixture comprising a plurality of the termination arrangements mounted to the telecommunications fixture with a snap-fit interlock.

### Brief Description of the Drawings

FIG. 1 is a top perspective view of an example patch panel arrangement including termination arrangements pivotally mounted to a base, the termination arrangements being populated with optical adapters receiving connectorized cables;
FIG. 2 is a bottom perspective view of the example patch panel arrangement of FIG. 1;
FIG. 3 is a top perspective view of the patch panel arrangement of FIG. 1 with the adapters and connectorized cables removed for ease in viewing;
FIG. 4 is an enlarged view of a section of FIG. 3;
FIG. 5 is a top plan view of the patch panel arrangement of FIG. 3;
FIG. 6 is a bottom plan view of the patch panel arrangement of FIG. 3;
FIG. 7 is a top perspective view of the patch panel arrangement of FIG. 3 with the termination arrangements exploded away from the base;
FIG. 8 is a bottom perspective view of the patch panel arrangement of FIG. 7;
FIG. 9 is a top perspective view of another example patch panel arrangement including termination arrangements pivotally mounted to a base, the termination arrangements being populated with optical adapters receiving connectorized cables;
FIG. 10 is a bottom perspective view of the example patch panel arrangement of FIG. 9;
FIG. 11 is a top perspective view of the base of FIG. 9 with the termination arrangements removed for ease in viewing;
FIG. 12 is a top perspective view of an example termination arrangement of FIG. 9 with the optical adapters and connectorized cables removed for ease in viewing;
FIG. 13 is a bottom perspective view of the termination arrangement of FIG. 12;
FIG. 14 is a top perspective view of the patch panel arrangement of FIG. 9 with the optical adapters and connectorized cables removed for ease in viewing;
FIG. 15 is a bottom perspective view of the patch panel arrangement of FIG. 14;
FIG. 16 is a top plan view of the patch panel arrangement of FIG. 14;
FIG. 17 is a bottom plan view of the patch panel arrangement of FIG. 14;
FIGS. 18 and 19 illustrate the example patch panels of FIGS. 1-17 disposed within an example telecommunications enclosure;
FIG. 20 is a perspective view of another example patch panel arrangement including pivotal termination arrangements, the termination arrangements being populated with optical adapters receiving connectorized cables;
FIG. 21 illustrates the patch panel arrangement of FIG. 20 mounted in a telecommunications drawer that also includes a splice arrangement;
FIG. 22 is a front perspective view of the telecommunications drawer of FIG. 21;
FIG. 23 illustrates another embodiment of a telecommunications drawer having features similar to those of FIG. 22;
FIG. 24 illustrates the telecommunications drawer of FIG. 23 with the patch panel tray thereof in a pivoted configuration;
FIG. 25 is a perspective view of another example patch panel arrangement including hinged termination arrangements, the termination arrangements being populated with optical adapters for receiving connectorized cables;
FIG. 26 is a perspective view of one of the termination arrangements of FIG. 25 shown in isolation;
FIG. 27 is another perspective view of the termination arrangement of FIG. 26;
FIG. 28 is a perspective view of another example patch panel arrangement including hinged termination arrangements having features similar to those of FIGS. 25-27, the termination arrangements also including bend radius limiters;
FIG. 29 is a perspective view of one of the termination arrangements of FIG. 28 shown in isolation;
FIGS. 30 and 31 illustrate two different splice tray arrangements used in combination with patch panels having hinging termination arrangements similar to those of FIGS. 25-29;
FIG. 32 illustrates another example of a patch panel that is formed of termination arrangements provided in a stacked configuration extending from the front of a telecommunications drawer toward a rear of the drawer;
FIG. 32A illustrates a variation of the termination arrangement and the associated drawer of FIG. 32;
FIG. 32B illustrates a bottom perspective view of the drawer of FIG. 32A;
FIGS. 32C and 32D illustrate right and left hand versions, respectively, of the drawer of FIGS. 32A and 32B in an empty configuration;
FIG. 32E illustrates the termination arrangement and the associated drawer of FIGS. 32A and 32B with a demarcation cover over the splice arrangement portion of the drawer;
FIG. 33 illustrates the drawer of FIG. 32 in an empty configuration;
FIGS. 34 and 35 illustrate a variation on the layout of the drawer shown in FIGS. 32-33 with three splice towers provided at a side of the telecommunications drawer;
FIGS. 36 and 37 illustrate a version of a drawer layout similar to that shown in FIGS. 32-33;
FIG. 38 illustrates the drawer of FIGS. 36 and 37 in an empty configuration;
FIG. 39 illustrates another example of a hingedly mounted termination arrangement wherein a splice tray is integrally incorporated onto a support member of the termination arrangement;
FIG. 40 illustrates a patch panel formed of the termination arrangements of FIG. 39 mounted in a telecommunications drawer;
FIG. 41 illustrates an example of a termination arrangement that not only allows hinged or pivotal movement for cleaning access but is also configured with a flexible support member for elastic deformation or flexing of the support member to enhance connector access or optical adapter port access;
FIGS. 42 and 43 illustrate a patch panel formed by mounting a plurality of the termination arrangements of FIG. 41 on a base;
FIG. 44 illustrates the base of the patch panel of FIGS. 42 and 43 in isolation;
FIG. 45 is another embodiment of a termination arrangement similar to that shown in FIGS. 41-44 that allows elastic flexing or deformation of the support member in addition to hinged or pivotal movement of the termination arrangement;
FIGS. 46 and 47 illustrate a patch panel formed by mounting a plurality of the termination arrangements of FIG. 45 on a base;
FIG. 48 illustrates the base of the patch panel of FIGS. 46 and 47 in isolation;
FIG. 49 is yet another embodiment of a termination arrangement similar to that shown in FIGS. 41-48 that allows elastic flexing or deformation of the support member in addition to hinged or pivotal movement of the termination arrangement;
FIG. 50 illustrates a patch panel formed by mounting a plurality of the termination arrangements of FIG. 49 on a base;
FIG. 51 illustrates the base of the patch panel of FIG. 50 in isolation;
FIG. 52 illustrates an example telecommunications drawer in which the patch panels and the splice arrangements of the present application can be used, the telecommunications drawer also diagrammatically used to define the X, Y, and Z axes referred to throughout the specification;
FIG. 53 illustrates an example of a telecommunications distribution element having features that are inventive aspects in accordance with the disclosure, the element shown including both patching and splicing features similar to those illustrated in FIGS. 19-52;
FIGS. 54 and 55 illustrates one of the frame members of the distribution element of FIG. 53 in isolation;
FIG. 56 illustrates the frame member of FIGS. 54 and 55 in an empty configuration without being populated with fiber optic adapters or splice trays;
FIG. 57 illustrates one of the splice trays for mounting within a frame member of FIGS. 53-56 in isolation;
FIG. 58 illustrates another example of a termination arrangement with a splice tray integrally incorporated onto a support member of the termination arrangement, where the adapter holder portion is separately pivotable with respect to the support member;
FIG. 59 illustrates the termination arrangement of FIG. 58 with the adapter holder portion shown in a pivoted position;
FIG. 60 illustrates the pivotable adapter holder portion of the termination arrangement of FIGS. 58 and 59 in isolation;
FIG. 61 illustrates an example of a patch panel that is formed by horizontally stacking a plurality of the termination arrangements of FIGS. 58 and 59;
FIG. 62 illustrates another example of a larger patch panel that is formed by horizontally stacking a plurality of the termination arrangements of FIGS. 58 and 59;
FIG. 63 illustrates the patch panel of FIG. 62 with the adapter holder portion of one of the termination arrangements in a pivoted position;
FIG. 64 illustrates the patch panel of FIGS. 61 and 62 mounted in a telecommunications drawer;
FIG. 65 illustrates a variation on the telecommunications drawer of FIG. 64, where the splice trays include covers thereon for protecting the internal fibers;
FIG. 66 illustrates one of the termination arrangements of FIGS. 58-65 pre-terminated with cabling at a factory level ready for installation;
FIG. 67 illustrates the termination arrangement of FIG. 66 provided with a cover on the splice tray;
FIG. 68 is a diagrammatic view showing an example of a patch panel packaging sequence where twelve of the termination arrangements of FIGS. 58-67 are provided according to a customer's color-code for placement within a telecommunications drawer;
FIG. 69 is an example of a pivotable adapter holder portion similar to that shown in FIGS. 58 and 59 configured for holding two duplex LC adapters;
FIG. 70 illustrates the adapter holder portion of FIG. 69 from a rear perspective view;
FIG. 71 illustrates the adapter holder portion of FIG. 69 from a bottom perspective view;
FIG. 72 is an example of a pivotable adapter holder portion similar to that shown in FIGS. 58, 59, and 69-71 configured for holding four SC adapters;
FIG. 73 illustrates another example of a termination arrangement with a splice tray integrally incorporated onto a support member of the termination arrangement, where the adapter holder portion is separately pivotable with respect to the support member;
FIG. 74 illustrates the termination arrangement of FIG. 73 with the adapter holder portion shown in a pivoted position;
FIG. 75 is a cross-sectional view taken along line 75-75 of FIG. 73;
FIG. 76 illustrates some of the different formats, numbers, and layouts of the adapters that can be used on the termination arrangements of FIGS. 58-75;
FIG. 77 illustrates another example of a termination arrangement with a splice tray integrally incorporated onto a support member of the termination arrangement, where the adapter holder portion is separately mountable and elastically flexible with respect to the support member for access, the termination arrangement shown in an unassembled configuration;
FIG. 78 illustrates the termination arrangement of FIG. 77 in an assembled configuration;
FIG. 79 illustrates a bottom perspective view of a portion of the termination arrangement of FIGS. 77 and 78;
FIG. 80 illustrates another example of a termination arrangement 2120 including a double-wide support member for supporting two splice trays that are integrally incorporated onto the support member and two adapter holder portions that are separately pivotable with respect to the support member;
FIG. 81 illustrates a rear perspective view of the termination arrangement of FIG. 80 with the cover of one of the splice trays in an open configuration;
FIG. 82 illustrates the termination arrangement of FIG. 81 pre-terminated with cabling at a factory level ready for installation;
FIG. 83 illustrates one of the adapter holder portions of the termination arrangement of FIG. 80 in isolation, populated with adapters;
FIG. 84 is a close-up view of the termination arrangement of FIG. 80 with one of the adapter holders shown in a pivoted position;
FIG. 85 is a close-up view of the termination arrangement of FIG. 80 with one of the adapter holders shown in a non-pivoted neutral position;
FIG. 86 illustrates a close-up view of the hinge pin of an adapter holder portion of the termination arrangement of FIG. 80, with one of the adapter holders shown in a pivoted position;
FIG. 87 illustrates a close-up view of the hinge pin of FIG. 86 when one of the adapter holder portions is at a non-pivoted neutral position;
FIG. 88 is a close-up front perspective view of a plurality of the termination arrangements of FIG. 80 with one of the adapter holder portions shown in a pivoted position;
FIG. 89 is a diagrammatic top view of one of the adapter holder portions of the termination arrangement of FIG. 80;
FIG. 90 illustrates the double-wide support member of the termination arrangement of FIG. 80 in isolation;
FIG. 91 illustrates one of the adapter holder portions of the termination arrangement of FIG. 80 in isolation;
FIG. 92 illustrates an exploded view of one of the splice trays of the termination arrangement of FIG. 80 in isolation;
FIG. 93 illustrates an exploded perspective view one of the splice trays and the support member of FIG. 80;
FIG. 94 diagrammatically illustrates an example splice tray mounting method that is used on the termination arrangement of FIG. 80;
FIG. 95 illustrates an exploded perspective view of the termination arrangement of FIG. 80 where the adapter holder portions are shown exploded off the support member;
FIG. 96 diagrammatically illustrates an example adapter holder portion mounting method that is used on the termination arrangement of FIG. 80, wherein the adapter holder portion is shown as being attached to the support member of the termination arrangement;
FIG. 97 illustrates another view of one of the splice trays of the termination arrangement of FIG. 80 in isolation with the cover of the splice tray attached;
FIG. 98 diagrammatically illustrates an example splice tray cover mounting method that is used on the termination arrangement of FIG. 80, wherein the cover is shown as being slidably attached to the splice tray of the termination arrangement;
FIG. 99 is another view of one of the adapter holder portions of the termination arrangement of FIG. 80 in isolation;
FIG. 100 illustrates another view of one of the splice trays of the termination arrangement of FIG. 80 in isolation, without the cover thereof;
FIG. 101 illustrates one of the adapter holder portions of the termination arrangement of FIG. 80 with one of the adapters having been replaced with a cable termination unit;
FIG. 102 illustrates another example of a termination arrangement 2220 having certain features that are similar to those shown on the termination arrangement of FIG. 80;
FIG. 103 illustrates the support member in isolation of another example of a termination arrangement 2320 having certain features that are similar to those shown on the termination arrangement of FIG. 80;
FIG. 104 is a rear perspective view of the support member of FIG. 103;
FIG. 105 is a top view of the support member of FIG. 103;
FIG. 106 illustrates yet another example of a termination arrangement 2420 having certain features that are similar to those shown on the termination arrangement of FIG. 80;
FIG. 107 illustrates a close-up view of the adapter holder portions of yet another example of a termination arrangement 2520 having certain features that are similar to those shown on the termination arrangement of FIG. 80;
FIG. 108 is another close-up view of the adapter holder portions of the termination arrangement of FIG. 107;
FIG. 109 illustrates one of the adapter holder portions of the termination arrangement of FIG. 107 in isolation;
FIG. 110 illustrates yet another example of a termination arrangement 2620 having certain features that are similar to those shown on the termination arrangement of FIG. 80;
FIG. 111 illustrates a close-up view of the adapter holder portions of the termination arrangement of FIG. 110;
FIG. 112 is another close-up view of the adapter holder portions of the termination arrangement of FIG. 110;
FIG. 113 is a close-up front perspective view of a plurality of the termination arrangements of FIG. 110 with one of the adapter holder portions shown in a pivoted position;
FIG. 114 is a close-up rear perspective view of the plurality of termination arrangements of FIG. 113;
FIG. 115 illustrates a variation on the hinge pin part of an adapter holder portion that can be mounted on termination arrangements such as those shown in FIGS. 80-114;
FIG. 116 illustrates another variation on the hinge pin part of an adapter holder portion that can be mounted on termination arrangements such as those shown in FIGS. 80-114;
FIG. 117 illustrates another variation on the hinge pin part of an adapter holder portion that can be mounted on termination arrangements such as those shown in FIGS. 80-114;
FIG. 118 illustrates another variation on the hinge pin part of an adapter holder portion that can be mounted on termination arrangements such as those shown in FIGS. 80-114;
FIG. 119 illustrates yet another variation on the hinge pin part of an adapter holder portion that can be mounted on termination arrangements such as those shown in FIGS. 80-114;
FIG. 120 illustrates yet another example of a termination arrangement 2720 having certain features that are similar to those shown on the termination arrangement of FIG. 80, the termination arrangement utilizing removable and elastically flexible adapter holder portions similar to those shown on the termination arrangement of FIGS. 77-79;
FIG. 121 is another perspective view of the termination arrangement of FIG. 120;
FIG. 122 illustrates another example of a termination arrangement 2820 that utilizes a single-wide support member, a splice tray that is integrally incorporated onto the support member, and an adapter holder portion that is integral and elastically flexible with respect to the support member;
FIG. 123 is a side view of the termination arrangement of FIG. 122 illustrating a close-up of the flexible portion of the support member for pivoting the adapter holder;
FIG. 124 is a top view of the termination arrangement of FIG. 122;
FIG. 125 is another example of a termination arrangement 2920 having certain features that are similar to those shown on the termination arrangement of FIG. 122;
FIG. 126 is a side view of the termination arrangement of FIG. 125;
FIG. 127 is yet another example of a termination arrangement 3020 having certain features that are similar to those shown on the termination arrangement of FIG. 122;
FIG. 128 illustrates a variation on the adapter holder portion that can be mounted on termination arrangements such as those shown in FIGS. 80-114, the adapter holder portion designed to receive the adapters in a vertical orientation;
FIG. 129 is a bottom perspective view of the adapter holder portion of FIG. 128;
FIG. 130 is a rear perspective view of the adapter holder portion of FIG. 128;
FIG. 131 illustrates another example of a termination arrangement 3120 having certain features that are similar to those shown on the termination arrangement of FIG. 58, where the termination arrangement includes a splice tray integrally incorporated onto a support member of the termination arrangement and where the adapter holder portion is separately pivotable with respect to the support member, the adapter holder portion configured to receive four adapters stacked in a horizontal orientation, similar to that shown in FIG. 76;
FIG. 132 illustrates a termination arrangement according to the claims, wherein a plurality of the termination arrangements are shown as being mounted in a telecommunications drawer similar to those shown in FIGS. 21-24, 30-38, 40, 52-56, 64, and 65;
FIG. 133 illustrates the drawer of FIG. 132 with a cover mounted on the splice trays of the termination arrangements;
FIG. 134 illustrates the drawer of FIG. 133 from a top view;
FIG. 135 illustrates the drawer of FIG. 132 from a top view;
FIG. 136 shows the drawer of FIGS. 132-135 in an empty configuration showing an example cable routing for the incoming fibers;
FIG. 137 illustrates the drawer of FIGS. 132-136 in a partially populated configuration;
FIG. 138 is a perspective view of the drawer of FIGS. 132-137 in an empty configuration showing the cover mounting features within the drawer;
FIG. 139 illustrates one of the termination arrangements of FIG. 132 removed from the drawer in isolation;
FIG. 140 illustrates the termination arrangement of FIG. 139 with connectorized pigtails mounted to the exit side of the adapters on the adapter holder portions;
FIG. 141 shows the termination arrangement of FIGS. 139-140 with the adapter holder portions removed to illustrate the routing of pass-through cables to the cable termination units at the front of the support members;
FIG. 142 shows another view of the termination arrangement of FIG. 139 illustrating the routing of pass-through cables underneath the adapter holder portions;
FIG. 143 shows another view of the termination arrangement of FIG. 139 illustrating the routing of pass-through cables underneath the adapter holder portions, with one of the adapter holder portions shown in a pivoted position;
FIG. 144 illustrates an example cable routing for the outgoing fibers for the drawer of FIGS. 132-138;
FIG. 145 is a rear perspective view of a portion of the termination arrangement of FIGS. 139-143, illustrating the mounting of the cable termination units to the mounts at the front ends of the support members;
FIG. 146 is another rear perspective view of the cable termination units being mounted to the mounts of FIG. 145;
FIG. 147 is a cross-sectional view bisecting the cable termination units and one of the mounts shown in FIGS. 145 and 146 to illustrate the cooperatively sliding parts; and
FIGS. 148-152 illustrate the steps in using the cable termination units shown in FIGS. 145-147 to provide termination of the pass-through cables with strength-member fixation.

### Detailed Description

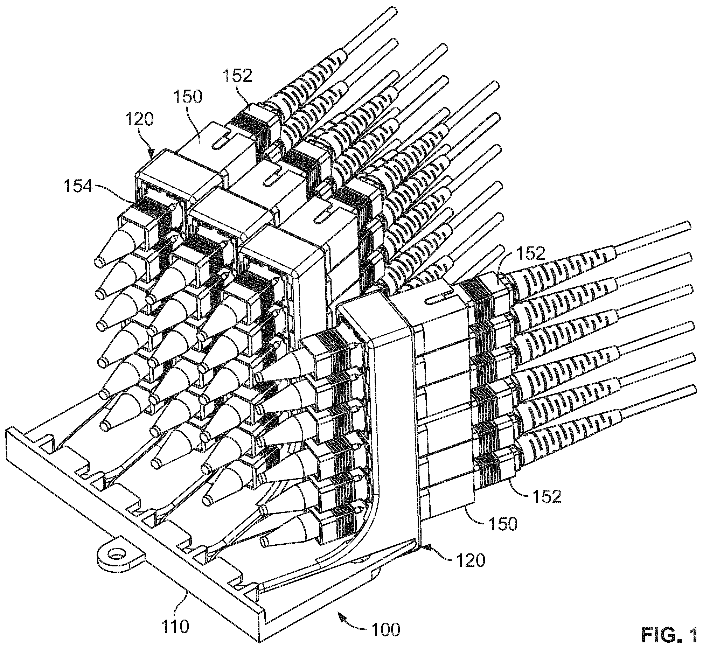

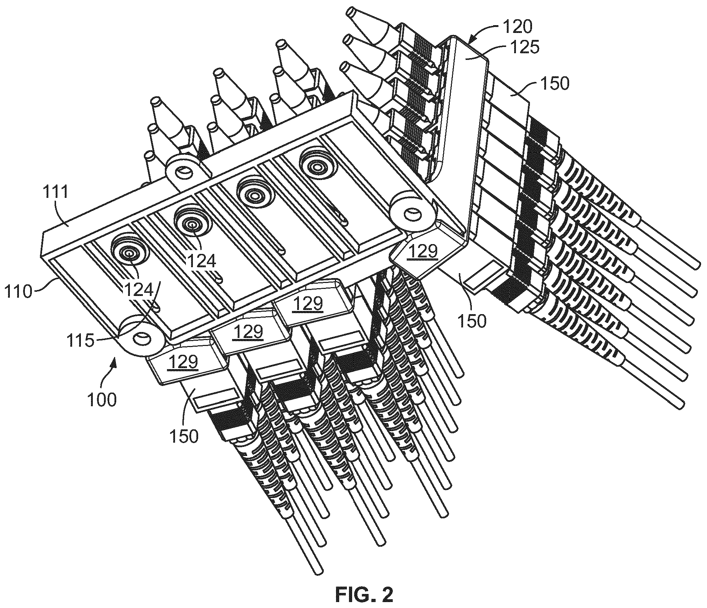

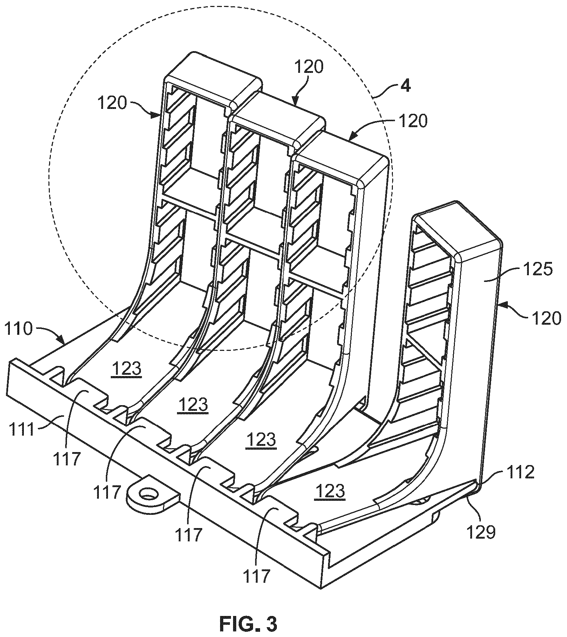

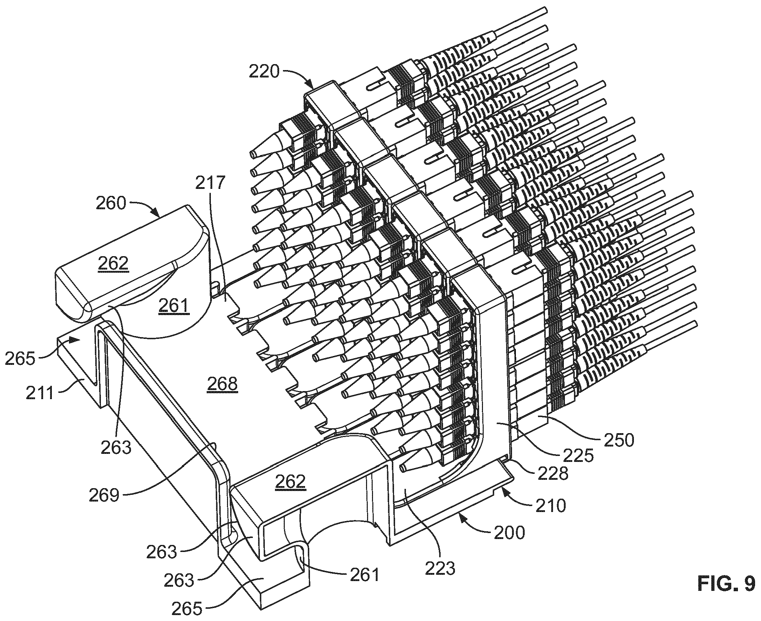

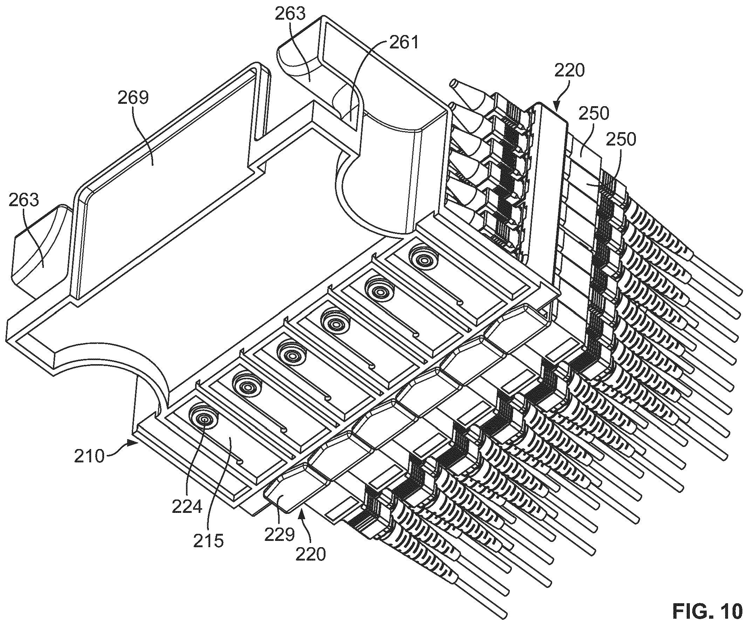

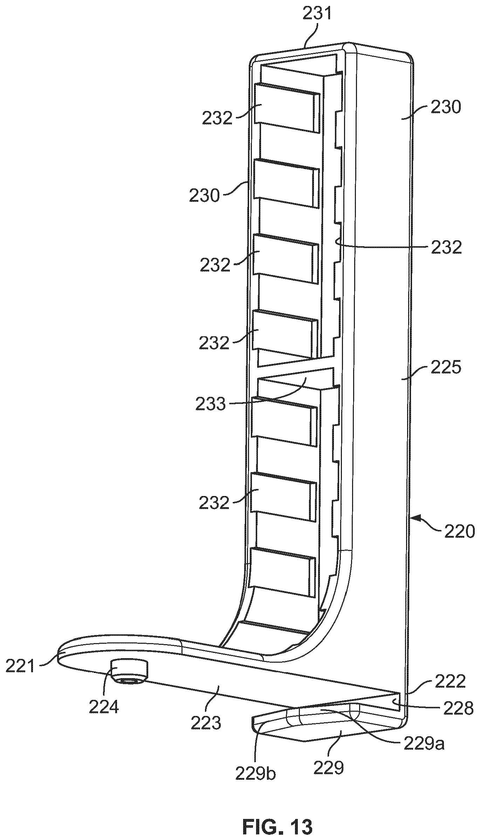

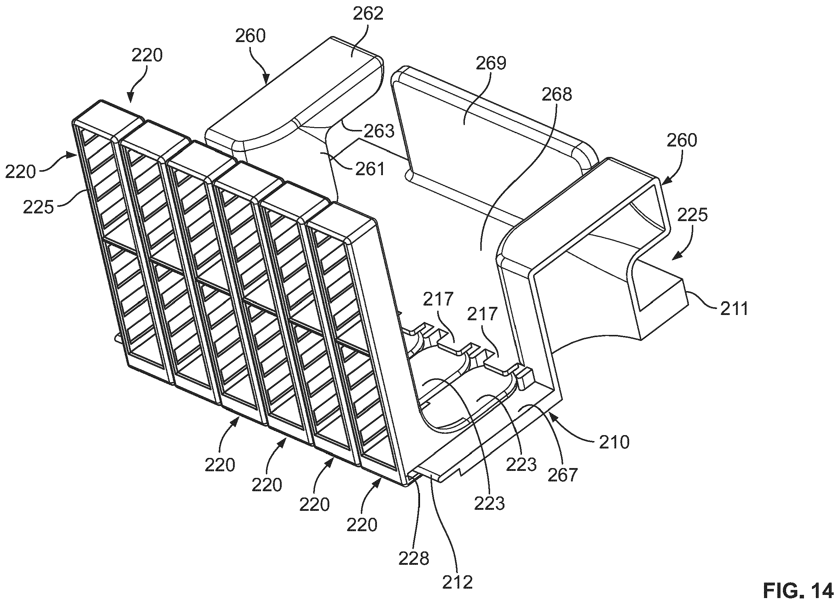

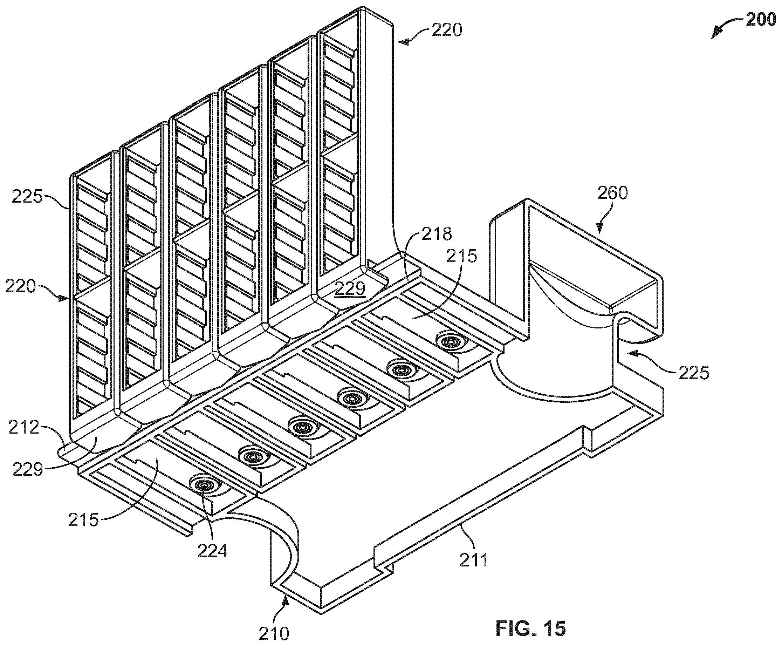

A patch panel includes a plurality of termination arrangements mounted to a base. FIGS. 1-8 illustrate a first example patch panel 100 having termination arrangements 120 mounted to a base 110. FIGS. 9-17 illustrate a second example patch panel 200 having termination arrangements 220 mounted to a base 210.

Each termination arrangement 120, 220 holds one or more optical adapters 150, 250, respectively. For example, each termination arrangement 120, 220 may hold the optical adapters 150, 250 in a stack. Each termination arrangement 120, 220 is separately movable relative to the base 110, 210. In certain implementations, each termination arrangement 120, 220 is mounted to enable pivoting of the termination arrangement 120, 220 relative to the base 110, 210, respectively.

The ability to pivot the termination arrangements 120, 220 allows adjacent termination arrangements 120, 220 to be pivoted away from a selected termination arrangement 120, 220 to enhance connector access or optical adapter port access at the selected termination arrangement 120, 220.

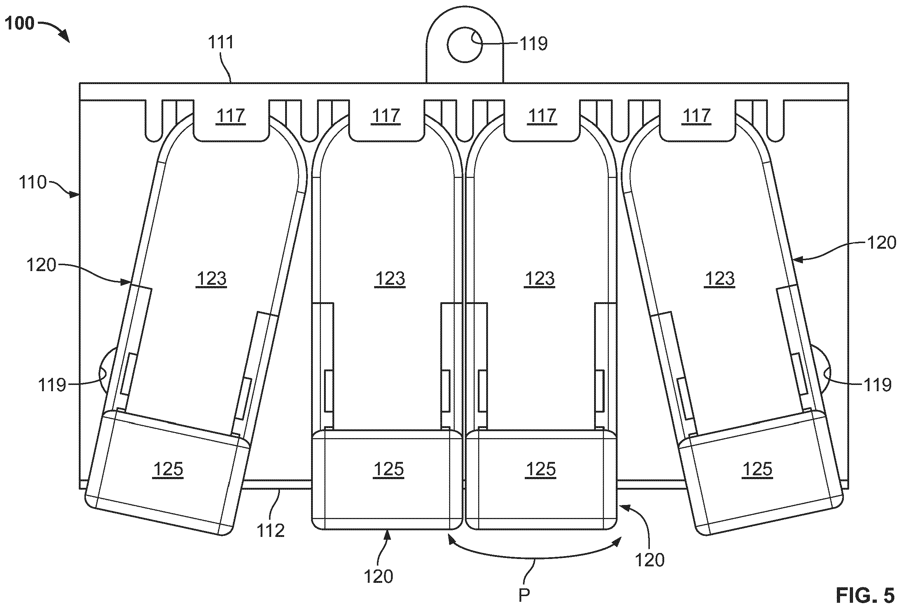

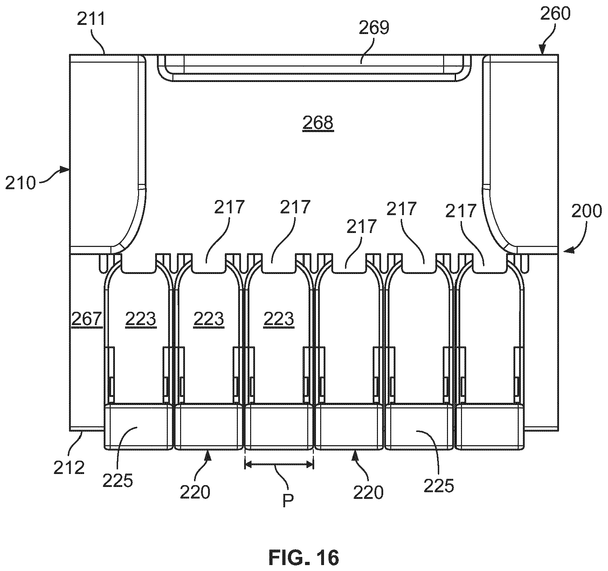

Each termination arrangement 120, 220 extends between opposite first and second ends 121, 122 and 221, 222, respectively. The first ends 121, 221 of the termination arrangements 120, 220 are coupled to the base 110, 210 to enable the second ends 122, 222 to pivot along respective pivot paths P (FIGS. 5 and 16). Each termination arrangement 120, 220 includes an adapter holder 125, 225 at the second end 122, 222, respectively. Each adapter holder 125, 225 is configured to receive and hold at least one optical adapter 150, 250. In certain implementations, the adapter holder 125, 225 may receive and hold multiple optical adapters 150, 250 (e.g., two, three, four, six, eight, ten, twelve, sixteen, etc.).

In some implementations, the pivot path P of each termination arrangement 120, 220 is restricted. In certain examples, the pivot path P is limited to a range of at least 1° and no more than 60°. In certain examples, the pivot path P is limited to a range of at least 1° and no more than 45°. In certain examples, the pivot path P is limited to a range of at least 2° and no more than 30°. In certain examples, the pivot path P is limited to a range of no more than 20°. In certain examples, the pivot path P is limited to a range of no more than 15°. In certain examples, the pivot path P is limited to a range of about 5° to about 15°.

In certain implementations, the second ends 122, 222 of the termination arrangements 120, 220 each define a slot 128, 228 into which an edge 112, 212 of the base 110, 210 extends, respectively. The interaction between the edge 112, 212 of the base 110, 210 and the respective slot 128, 228 limits the pivot path of each termination arrangement 120, 220, respectively. For example, the termination arrangements 120, 220 are disposed relative to the base 110, 210 so that the edge 112, 212 of the base 110, 210 extends into the slot 128, 228 without hitting a back wall of the slot 128, 228 when the termination arrangement 120, 220 is in a non-pivoted position. The termination arrangement 120, 220 can be pivoted either left or right along the pivot path P. As the termination arrangement 120, 220 pivots to the left, the left side of the back wall of the slot 128, 228 approaches and eventually contacts the edge 112, 212 of the base 110, 210, thereby inhibiting further pivoting of the termination arrangement 120, 220. As the termination arrangement 120, 220 pivots to the right, the right side of the back wall of the slot 128, 228 approaches and eventually contacts the edge 112, 212 of the base 110, 210, thereby inhibiting further pivoting of the termination arrangement 120, 220.

In certain implementations, each termination arrangement 120, 220 includes a retention flange 129, 229 that extends along an underside 114, 214 of the base 110, 210 when a majority of the termination arrangement is disposed over a top surface 113, 213 of the base 110, 210, respectively. The retention flange 129, 229 cooperates with a remainder of the termination arrangement 120, 220 to define the slot 128, 228.

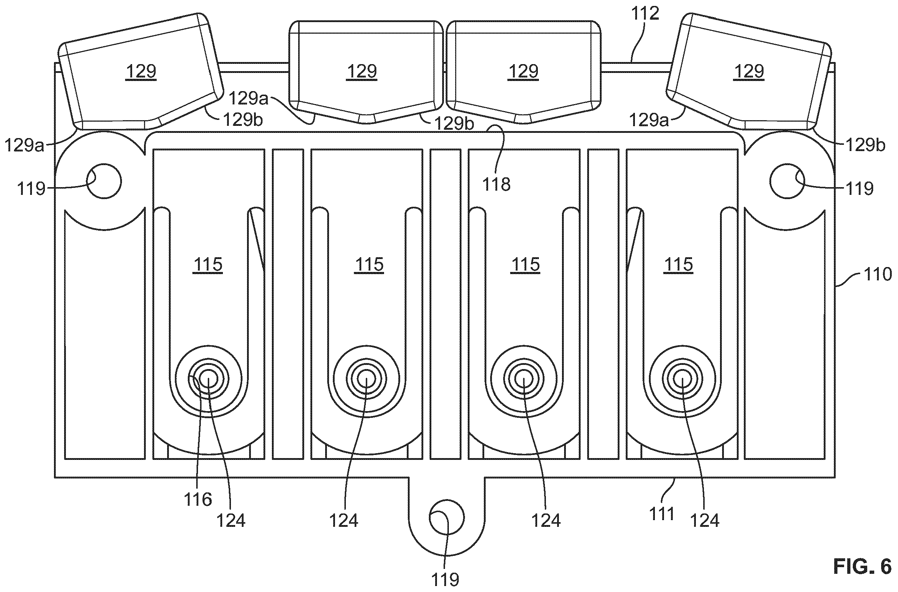

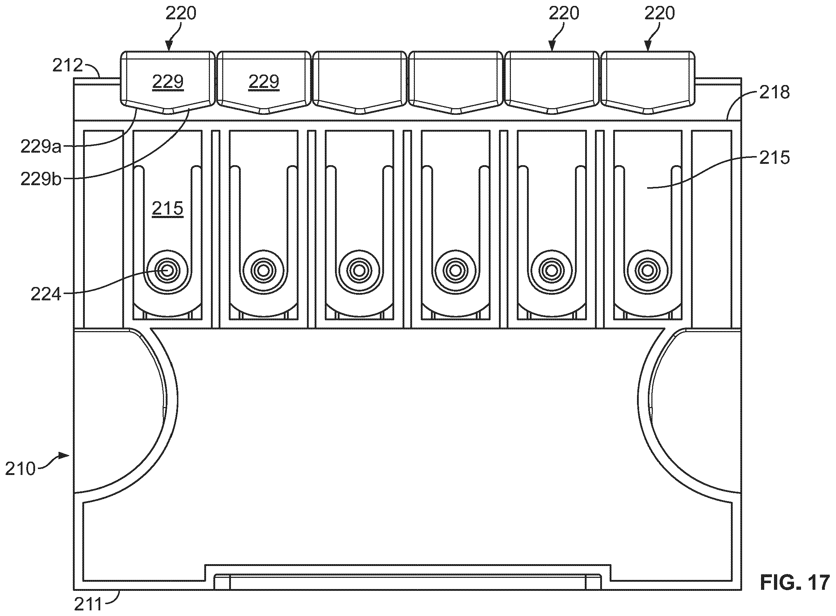

In certain implementations, the retention flange 129, 229 defines first and second angled surfaces 129a, 129b and 229a, 229b facing towards an opposite edge 111, 211 of the base 110, 210, respectively. In certain examples, the underside of the base 110, 210 includes a stopper wall 118, 218. As shown in FIGS. 6 and 17, interaction between the angled surfaces 129a, 129b and 229a, 229b and the stopper wall 118, 218 limits the pivot path P of the termination arrangement 120, 220, respectively. For example, the termination arrangement 120, 220 can pivot in a first direction along the pivot path P until the first angled surface 129a, 229a abuts the stopper wall 118, 218 or other structure at the underside 114, 214 of the base 110, 210, respectively. The termination arrangement 120, 220 can pivot in an opposite second direction along the pivot path P until the second angled surface 129b, 229b abuts the stopper wall 118, 218 or other structure at the underside 114, 214 of the base 110, 210, respectively.

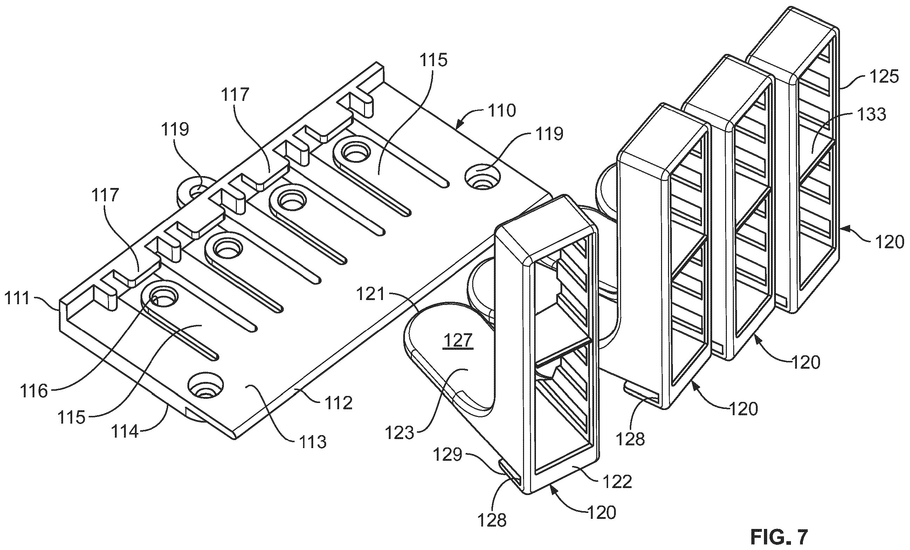

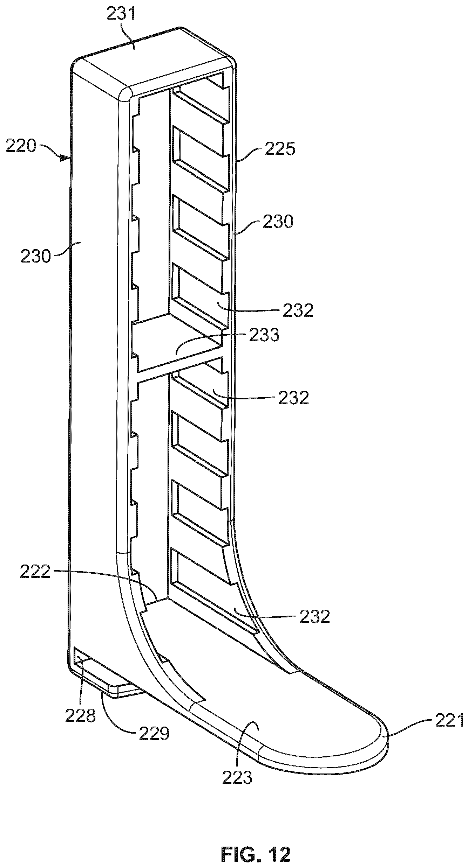

As shown in FIGS. 7 and 12, each termination arrangement 120, 220 includes a support member 123, 223 extending between the first and second ends 121, 122 and 221, 222 of the termination arrangement 120, 220, respectively. The support member 123, 223 has a first major (e.g., bottom) surface 126, 226 and a second major (e.g., top) surface 127, 227. The first major surface 126, 226 faces the base 110, 210 when the termination arrangement 120, 220 is mounted to the base 110, 210.

An adapter holder 125, 225 is carried by the support member 123, 223, respectively. In certain examples, the adapter holder 125, 225 is carried at the second end 122, 222 of the support member 123, 223. Each optical adapter 150, 250 received at the adapter holder 125, 225 defines oppositely facing ports having connector insertion axes that are parallel to the respective support member 123, 223.

In certain implementations, the adapter holder 125, 225 is disposed at the second major surface 127, 227 of the support member 123, 223, respectively. In examples, the adapter holder 125, 225 extends upwardly from the second major surface 127, 227 of the support member 123, 223. In examples, the adapter holder 125, 225 is monolithically formed (e.g., via injection molding) with the support member 123, 223.

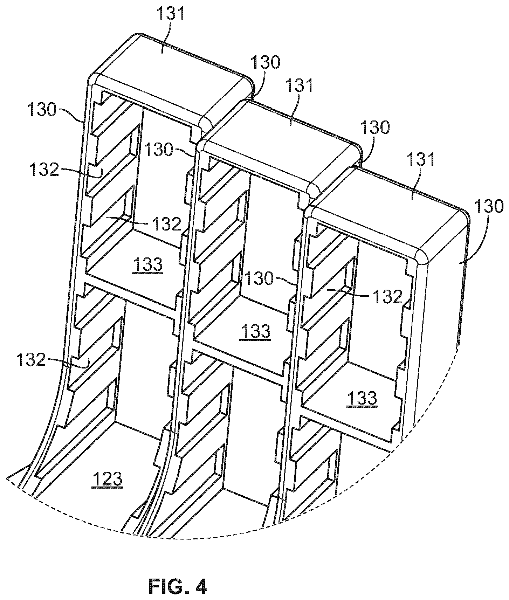

In certain implementations, the adapter holder 125, 225 includes opposing sidewalls 130, 230 that extend upwardly from the support member 123, 223 to a connecting top wall 131, 231, respectively. The sidewalls 130, 230 define slots, openings, or other receiving structures 132, 232 to accommodate the one or more optical adapters 150, 250. In the example shown in FIGS. 4 and 12, the sidewalls 130, 230 define one or more lateral pairs of channels 132, 232 along which flanges of the optical adapters 150, 250, respectively, can slide. In examples, each channel 132, 232 has one open end.

In some implementations, the adapter holder 125, 225 is configured to hold multiple optical adapters 150, 250 in a stack (i.e., one on top of the other). In the example shown in FIG. 1, each adapter holder 125 can hold up to six optical adapters 150, 250. In the example shown in FIG. 9, each adapter holder 225 can hold up to eight optical adapters 150, 250. In other examples, however, each adapter holder 125, 225 can hold up to about two, three, four, ten, twelve, sixteen, or any other desired number of optical adapters 150, 250.

In some implementations, the optical adapters 150, 250 can be separately mounted at the adapter holder 125, 225, respectively. In other implementations, however, the optical adapters 125, 225 can be mounted in one or more groups. For example, two or more optical adapters 150, 250 can be connected together in blocks and the blocks mounted at the adapter holder 125, 225. In other examples, the optical adapters 150, 250 can be molded as a single unit with multiple ports.

In certain examples, in which the adapter holder 125, 225 holds a plurality of optical adapters 150, 250, a bridge 133, 233 extends between the sidewalls 130, 230, respectively, to enhance rigidity. The bridge 133, 233 separates the optical adapters 150, 250 held at the adapter holder 125, 225 into first and second groups. In certain examples, additional bridges 133, 233 can be provided at the adapter holder 125, 225. For example, a bridge 133, 233 may be provided for each optical adapter 150, 250.

In certain implementations, the first end 121, 221 of the support member 123, 223 includes a pin 124, 224, hole, or other mounting structure. In the example shown, the pin 124, 224 or other mounting structure is located at an underside of the support member 123, 223 (i.e., at an opposite side of the support member 123, 223 from the adapter holder 125, 225).

By situating the pin 124, 224 at the first end 121, 221 of the support member 123, 223, the pivot axis of the termination arrangement 120, 220 is spaced from the adapter holder 125, 225. Accordingly, the adapters 150, 250 (and any optical connectors received thereat) also are spaced from the pivot axis. Spacing the adapters 150, 250 from the pivot axis increases the distance over which a selected termination arrangement 120, 220 can be spaced from adjacent termination arrangements 120, 220. Spacing the adapters 150, 250 from the pivot axis also decreases strain on cables routed across the base 110, 210 to reach adapter ports facing towards the first end 111, 211 of the base 110, 210. Sufficient cable extends between the pivot axis and the adapter port to accommodate the rotational deflection of the port.

In certain implementations, the base 110, 210 defines pivot holes 116, 216, pins, or other mounting structure configured to mate with the pin 124, 224, hole, or other mounting structure of the support member 123, 223. In the example shown, the pin 124, 224 of the support member 123, 223 fits within the hole 116, 216 and rotates relative thereto to enable pivoting of the termination arrangement 120, 220.

In certain implementations, the base 110, 210 includes flexible fingers 115, 215 that define the holes 116, 216, respectively. For example, each flexible finger 115, 215 may define one hole 116, 216. Each finger 115, 215 is cantilevered so that a distal end can deflect upwardly and/or downwardly relative to a mounting surface of the base 110, 210. In examples, the holes 116, 216 are disposed at the distal ends of the fingers 115, 215.

In certain implementations, the base 110, 210 includes overhang members 117, 217 disposed above and parallel to the mounting surface of the base 110, 210, respectively. Each overhang member 117, 217 aligns with a respective one of the fingers 115, 215. The overhang members 117, 217 are disposed adjacent the distal ends of the fingers 115, 215 to define a gap therebetween. When the termination arrangements 120 are mounted at the base 110, 210, the first ends 121, 221 of the support members 123, 223 extend beneath the overhang members 117, 217.

The overhang members 117, 217 may inhibit accidental removal of the pins 124, 224 of the support members 123, 223 from the holes 116, 216 of the base 110, 210, respectively. For example, when a termination arrangement 120, 220 is mounted to the base 110, 210, the first end 121, 221 of the support member 123, 223 is slid over the respective finger 115, 215, thereby deflecting the finger 115, 215 downwardly. The first end 121, 221 of the support member 123, 223 slips beneath the overhang member 117, 217. The pin 124, 224 of the support member 123, 223 slides into the hole 116, 216, thereby allowing the finger 115, 215 to return to the un-deflected position. The hole 116, 216 inhibits axial movement of the support member 123, 223 relative to the base 110, 210. The overhang member 117, 217 inhibits vertical movement of the support member 123, 223 relative to the base 110, 210. Accordingly, the overhang member 117, 217 inhibits the pin 124, 224 from being removed from the hole 116, 216, respectively.

To purposefully remove the pin 124, 224 from the hole 116, 216, the finger 115, 215 can be deflected downwardly relative to the mounting surface of the base 110, 210. This deflection provides sufficient space between the distal end of the finger 115, 215 and the overhang member 117, 217 to accommodate the pin 124, 224 and the first end 121, 221 of the support member 123, 223 therebetween.

In some implementations, the holes 116 are disposed at or adjacent the end 111 of the base 110 opposite the edge 112 (e.g., see FIG. 1). In other implementations, the holes 216 are disposed at an intermediate location between the end 211 and the edge 212 (e.g., see FIG. 9). In examples, a majority of each termination arrangement 120, 220 overlays the base 110, 210 when the termination arrangements 120, 220 are mounted to the base 110, 210, respectively. For example, the first major surface 126, 226 of each support member 123, 223 may skim over the base 110, 210 as the termination arrangement 120, 220 pivots relative to the base 110, 210. In certain implementations, at least a majority of the adapter holders 125, 225 are disposed over the base 110, 210 when the termination arrangements 120, 220 are mounted to the base 110, 210 throughout the pivot path P. In certain examples, the optical adapters 150, 250 may extend past the edge 112, 212 of the base 110, 210.

In certain implementations, the base 110, 210 defines one or more mounting holes 119, 219 through which one or more fasteners can extend to secure the base 110, 210 to a surface (e.g., a wall, a panel, or other structure). In certain examples, the base 110, 210 can be mounted horizontally so that the fingers 115, 215 deflect upwardly and downwardly. In certain examples, the base 110, 210 can be mounted vertically so that the fingers 115, 215 deflect side-to-side.

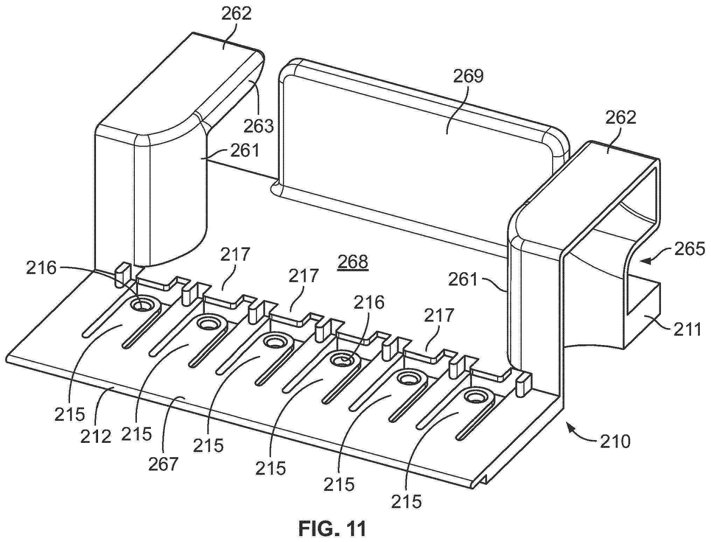

In certain implementations, the base 210 includes a fiber management arrangement 260 including bend radius limiters 261 located at a first end 211 of the base 210 (see FIGS. 9 and 11). The fiber management arrangement 260 defines one or more fiber channels 265 leading on and off the base 210. The bend radius limiters 261 at least partially define the fiber channels 265. In certain examples, retention tabs 262 extend laterally outwardly from the bend radius limiters 261 to retain one or more cables within the channels 265. In certain examples, bottom surfaces of the retention tabs 262, which face the base 210, also define bend radius limiters 263.

In certain implementations, the base 210 includes a rear wall 269 that extends upwardly from the first end 211 of the base 210. In certain examples, the rear wall 269 cooperates with the bend radius limiters 261 to define the channels 265. In the example shown, the rear wall 269 cooperates with a first bend radius limiter 261 at a first side of the base to form a first channel 265 and cooperates with a second bend radius limiter 261 at a second side of the base to form a second channel 265.

In certain implementations, the top surface 213 of the base 210 is stepped to define a first platform 267 and a second platform 268. The flexible fingers 215 are disposed at the first platform 267. The fiber management region 260 is disposed at the second platform 268. In an example, the overhang members 217 extend outwardly from the second platform 268.

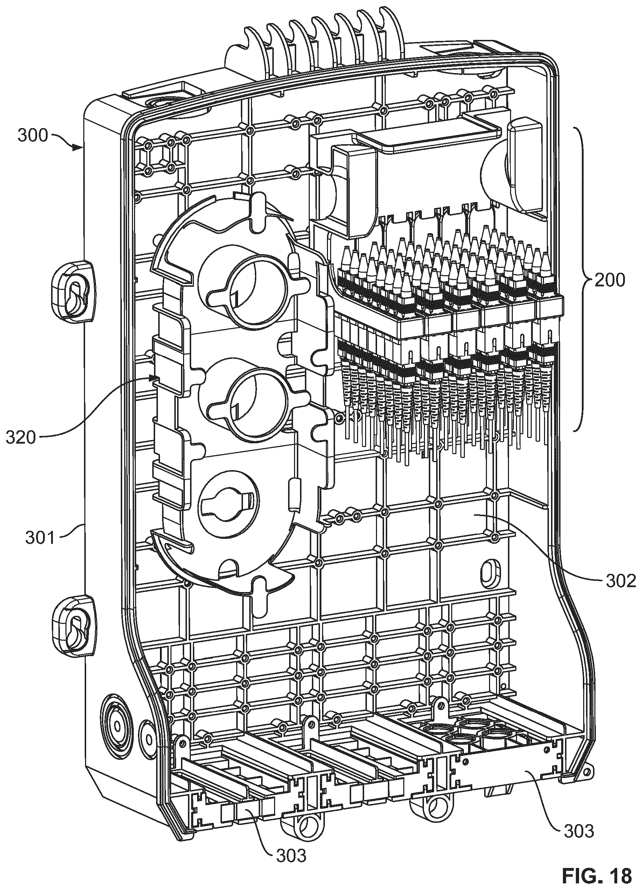

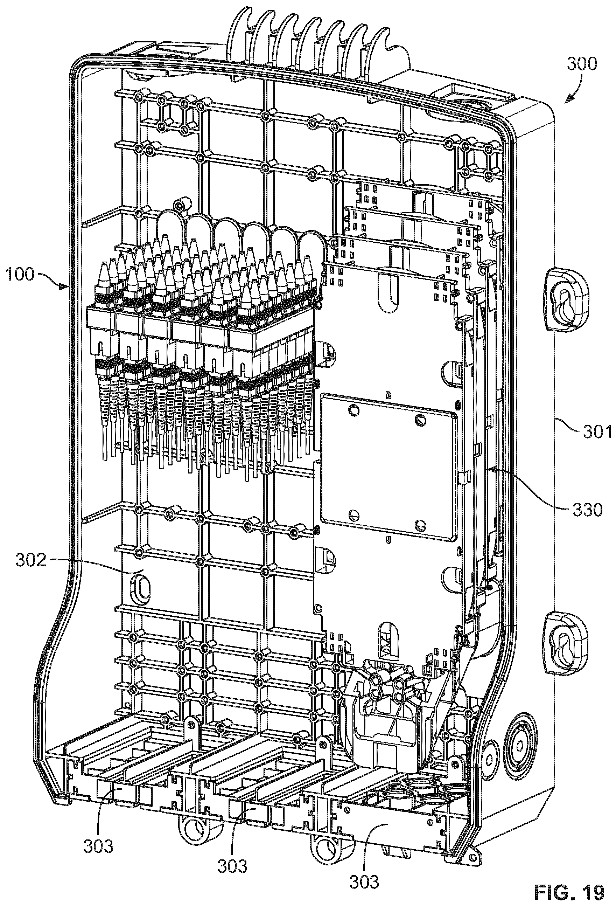

FIGS. 18 and 19 illustrate the example patch panels 100, 200 disposed within an example enclosure 300. In the examples shown, the enclosure 300 includes a base 301 to which a cover (not shown) can mount to close an interior 302 of the enclosure 300. One or more cable port regions 303 enable cables to enter/exit the enclosure 300. In various examples, the cable port regions 303 can define sealing gaskets (e.g., gel seals, rubber seals, foam seals, etc.), dematable connection interfaces (e.g., optical adapters, electrical sockets, etc.), or other ingress/egress structures.

In some implementations, connectorized ends of first fibers are routed within the enclosure 300 to first ports of the adapters 150, 250 of the patch panel 100, 200 that face in a first direction. Connectorized ends of second fibers are routed within the enclosure 300 to second ports of the adapters 150, 250 of the patch panel 100, 200 that face in an opposite second direction. The adapters 150, 250 align and optically couple the connectorized ends of the first fibers with the connectorized ends of the second fibers. In certain implementations, the first and/or second fibers can enter/exit the enclosure 300 at the cable port regions 303.

In some implementations, the patch panel 100, 200 can be mounted within the enclosure 300 with a cable management arrangement and/or an optical splice arrangement. An example cable management arrangement 320 is shown in FIG. 18. Excess length of the first fibers and/or the second fibers can be stored at the cable management arrangement 320. In certain implementations, the cable management arrangement 320 is modularly formed. Example implementations of a suitable cable management arrangement 320 are disclosed in PCT Publication No. WO 2018/202812.

An example optical splice arrangement 330 is shown in FIG. 19. In certain implementations, the first fibers and/or the second fibers can be routed to the patch panel 100, 200 from the optical splice arrangement 330. For example, unconnectorized ends of the first fibers and/or the second fibers may spliced to distribution cables at the optical splice arrangement 330. The first distribution cables can enter/exit the enclosure 300 through the cable port regions 303. The optical splice arrangement 330 also may provide anchoring for the distribution cables. Example implementations of a suitable cable management arrangement 320 are disclosed in U.S. Provisional Application No. 62/502,227, entitled "Modular Tray Tower".

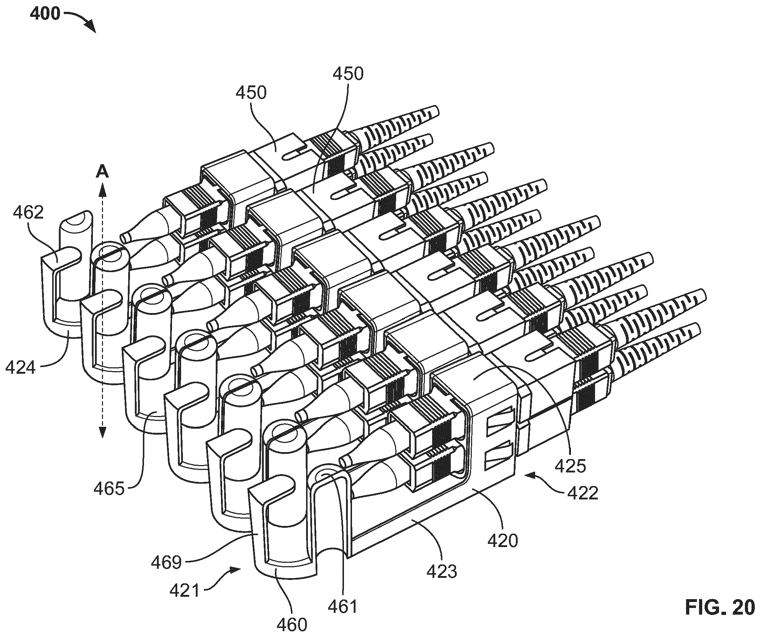

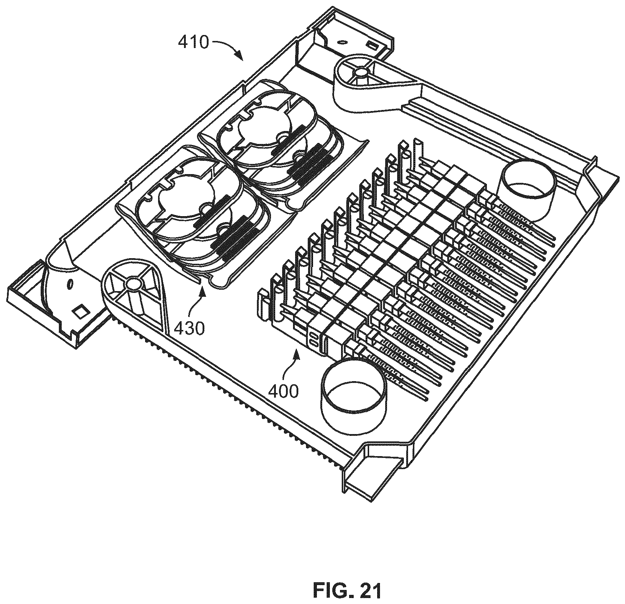

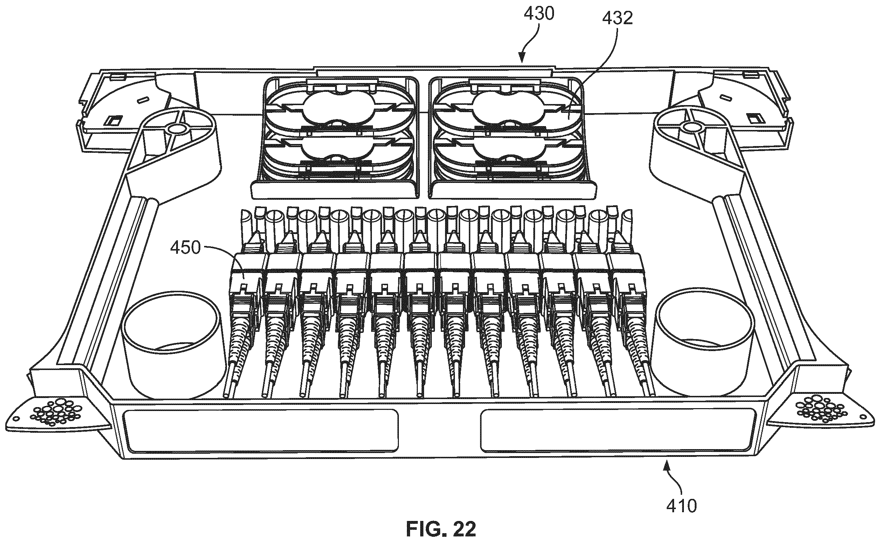

Referring now to FIGS. 20-22, another example of a patch panel 400 that is formed of a plurality of pivotal termination arrangements 420 having features similar to those shown in FIGS. 1-19 is illustrated. The patch panel 400 defined by the horizontally stacked termination arrangements 420 is shown in FIGS. 21 and 22 as being mounted in a telecommunications drawer 410. The depicted telecommunications drawer 410 may form part of a distribution element, such as a sliding chassis type element. Such elements may be configured for connecting patch cables entering one side of the element to an incoming cable, such as a distribution cable or a feeder cable entering an opposite side of the element. Examples of such distribution elements are described in PCT Publication Nos. WO 2014/118227; WO 2014/207210; and WO 2016/012550.

In FIGS. 21 and 22, similar to the enclosure 300 shown in FIG. 19, the patch panel 400 is shown as mounted in the drawer 410 in combination with an optical splice arrangement 430. The splice arrangement 430 is illustrated in the form of a plurality of pivotable splice trays 432 mounted in a stacked arrangement toward a rear 402 of the drawer 410. As noted previously, the first fibers and/or the second fibers can be routed to the depicted patch panel 400 from the optical splice arrangement 430. For example, unconnectorized ends of the first fibers and/or the second fibers may spliced to distribution cables at the optical splice arrangement 430. And, connectorized ends of the first fibers and/or second fibers are routed within the drawer 410 to adapters 450 of the patch panel 400. As described above, the adapters 450 of the patch panel 400 align and optically couple the connectorized ends of the first fibers with the connectorized ends of the second fibers. The optical splice arrangement 430 also may provide anchoring for the distribution cables.

Referring specifically now to the patch panel 400 illustrated in isolation in FIG. 20, the patch panel 400 is formed from the pivotable termination arrangements 420. As noted previously, the ability to pivot the termination arrangements 420 allows adjacent termination arrangements 420 to be pivoted away from a selected termination arrangement 420 to enhance connector access or optical adapter port access at the selected termination arrangement 420.

Still referring to FIG. 20, each termination arrangement 420 includes an adapter holder portion 425 at a second end 422 and a fiber management portion 460 at a first end 421, where the adapter holder and fiber management portions 425, 460 are separated by a support member 423.

The adapter holder portion 425 of each termination arrangement 420 is configured to receive and hold at least one optical adapter 450. In certain implementations, the adapter holder portion 425 may receive and hold multiple optical adapters 450 (e.g., two, three, four, six, eight, ten, twelve, sixteen, etc.). The adapter holder portion 425 can be configured to hold simplex, duplex, or quad adapters 450. And, even though the depicted adapters 450 are of the SC type, the inventive aspects of the present disclosure are fully applicable to any format adapter, such as SC, LC, MPO, etc.

The fiber management portion 460 of each termination arrangement 420 is defined by bend radius limiters 461, a retention wall 469, and a retention tab 462 extending from the retention wall 469. The bend radius limiters 461 in combination with the retention walls 469 define cable channels 465 for routing optical cabling within the depicted telecommunications drawer 410 to or from the splice trays 432.

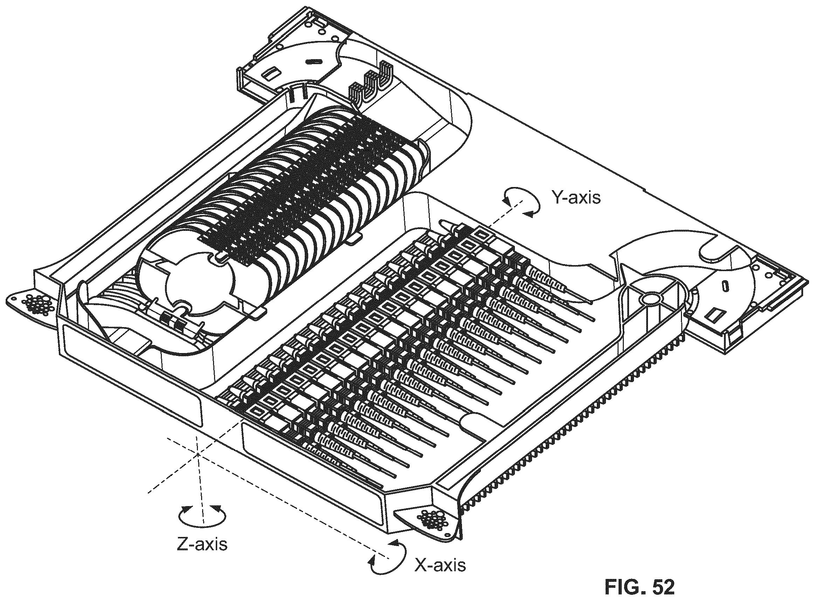

Similar to the termination arrangements 120, 220 shown in FIGS. 1-19, the termination arrangement 420 is configured to pivot about a pivot axis A that is along the Z-axis with respect to the drawer 410. The Z-axis is shown diagrammatically in FIG. 52 of the present application, along with the Y-axis and the X-axis, which will be referred to throughout the present specification.

The termination arrangement 420 of FIGS. 20-22 may utilize a pin, hole, or other mounting structure 424 located at an underside of the support member 423 (i.e., at an opposite side of the support member from the adapter holder) to provide the pivotability for the termination arrangement 420. Again, by situating the pivot mounting structure 424 at the first end 421 of the support member 423, the pivot axis A of the termination arrangement 420 is spaced from the adapter holder portion 425. Accordingly, the adapters 450 (and any optical connectors received thereat) also are spaced from the pivot axis A. Spacing the adapters 450 from the pivot axis A increases the distance over which a selected termination arrangement 420 can be spaced from adjacent termination arrangements 420. Spacing the adapters 450 from the pivot axis A may also decrease strain on the cables routed through the patch panel 400. Sufficient cabling can extend between the pivot axis A and the adapter port to accommodate the rotational deflection of the port.

In the depicted example of the patch panel 400 of FIGS. 20-22, the termination arrangements 420 can be mounted directly to the telecommunications drawer 410 (as opposed to a separate base as shown in the examples of FIGS. 1-19) for rotation relative thereto to enable pivoting of the termination arrangements 420.

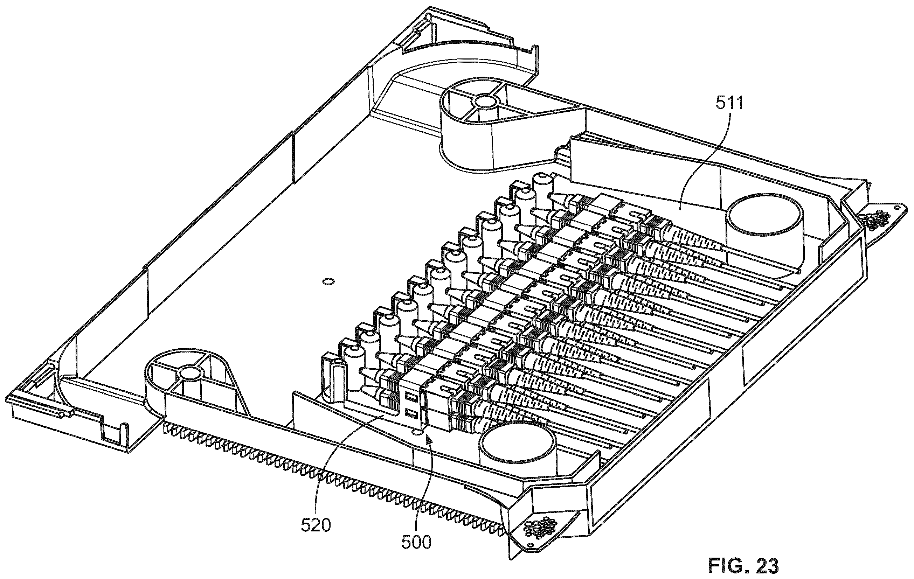

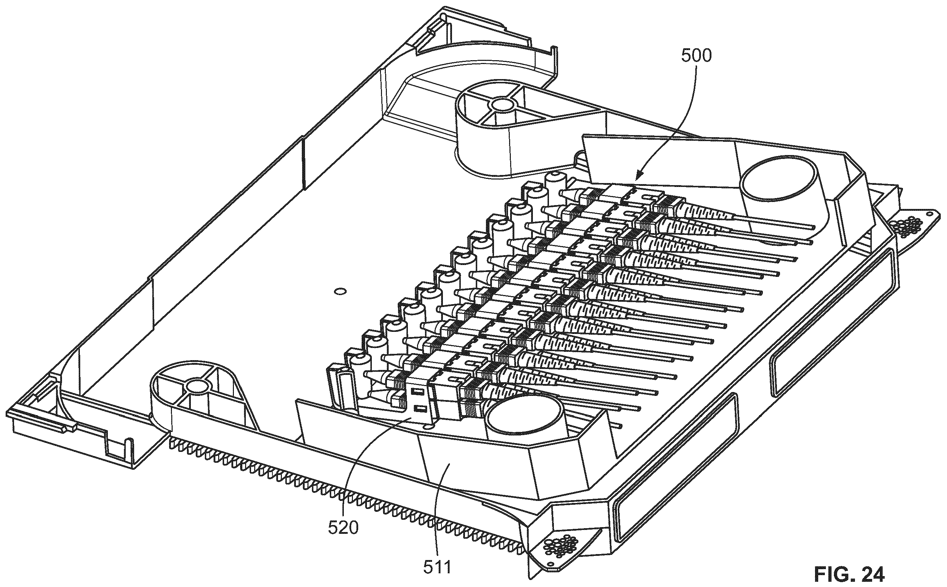

FIGS. 23 and 24 illustrate an embodiment of a patch panel 500 similar to that shown in FIGS. 20-22 that is mounted on a separate tray 511 that has the ability to hinge about the X-axis. While each termination element 520 of the patch panel 500 is able to pivot about the Z-axis to enhance connector access or optical adapter port access at the selected termination arrangement 520, the hingability of the tray 511 allows cleaning access. For example, a large cleaning probe can slide into an adapter opening from the front of the drawer 510 after the tray 511 has been hinged upwardly about the X-axis.

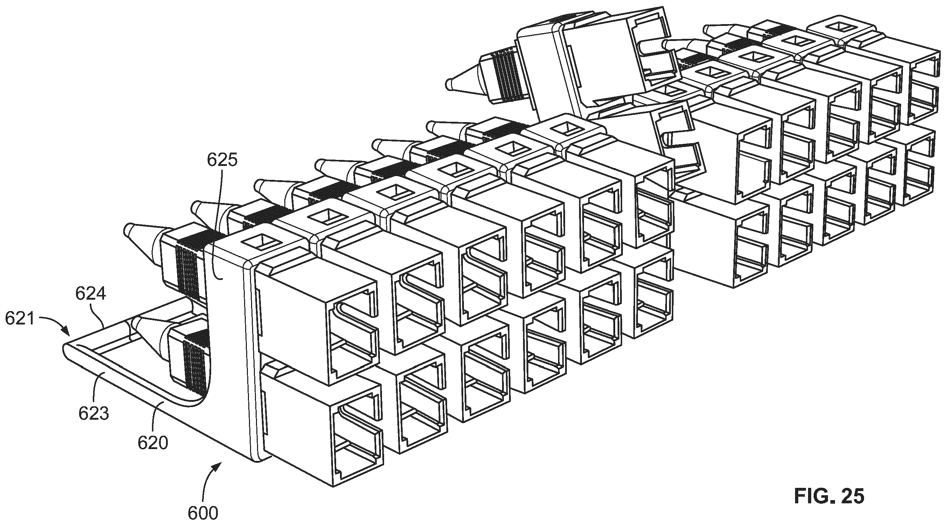

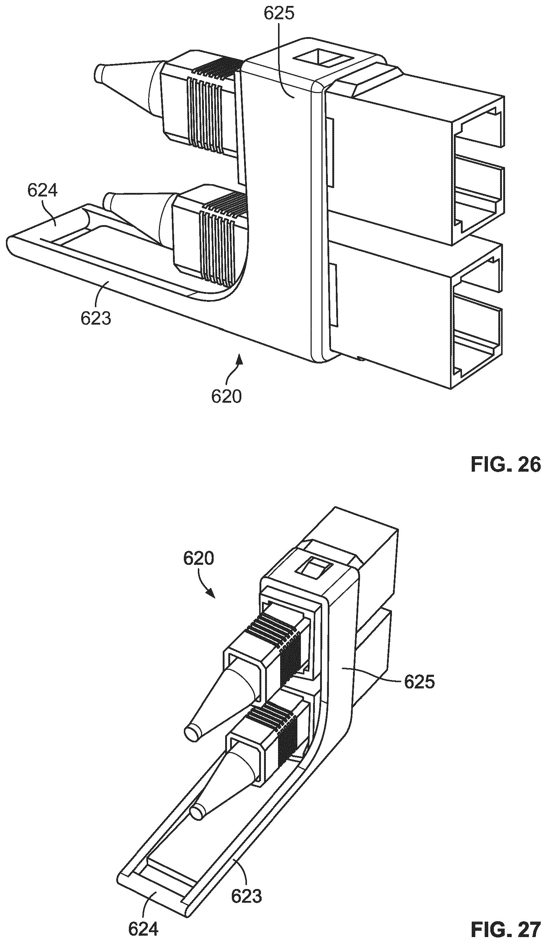

FIGS. 25-27 illustrate another embodiment of a patch panel 600 that is a variation on the hingable tray concept of FIGS. 23 and 24. In the patch panel 600 of FIGS. 25-27, each of the termination arrangements 620 are configured with a hinge 624 at a first end 621 of a support member 623 for providing cleaning access to individual adapter holder portions 625.

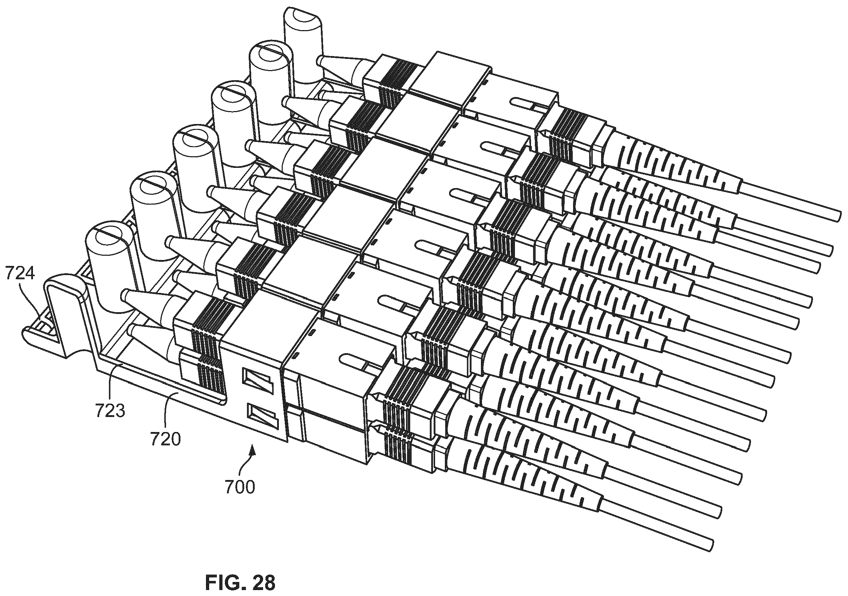

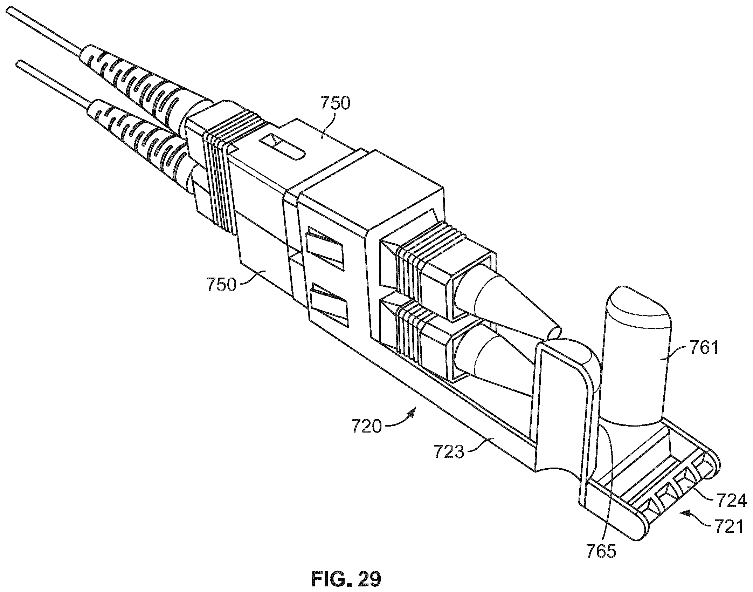

FIGS. 28 and 29 illustrate a version of a patch panel 700 formed of a plurality of termination arrangements 720, wherein each termination arrangement 720 defines a hinge 724 at a first end 721 of a support member 723, similar to that shown in FIGS. 25-27. However, in the termination arrangements 720 shown in FIGS. 28 and 29, there are provided bend radius limiters 761 at each side of the support member 723, adjacent the hinge 724, for providing a cable channel 765 in routing the cabling from adapters 750.

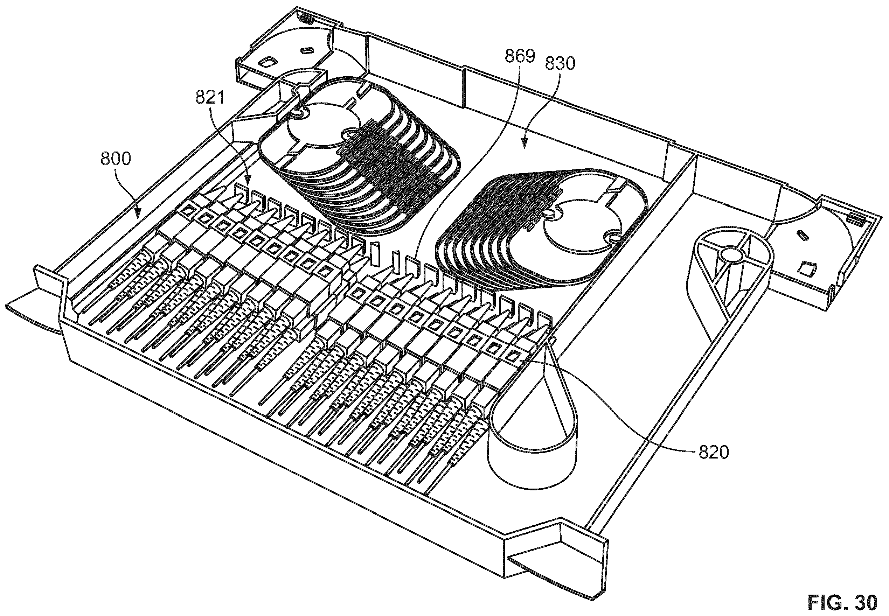

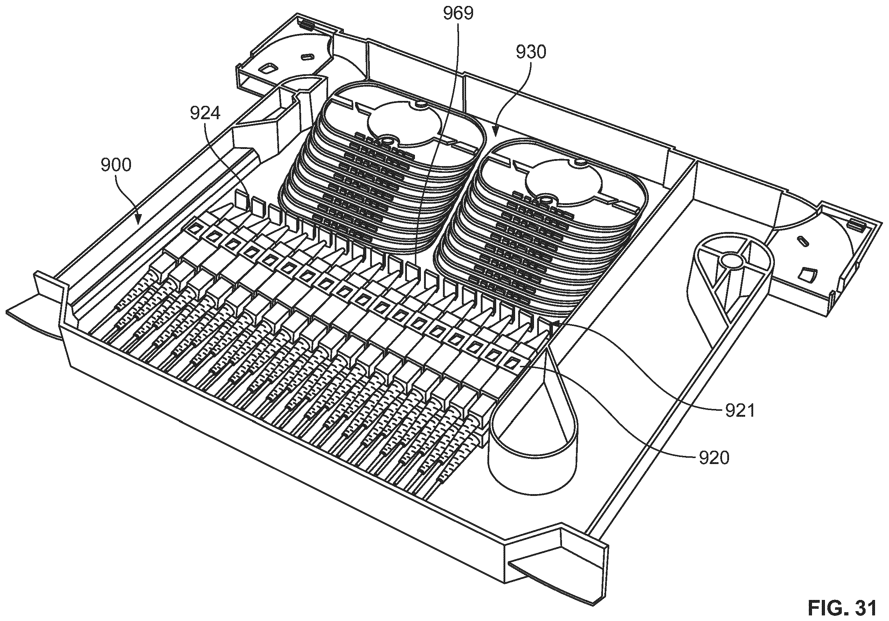

FIGS. 30 and 31 illustrate two different splice tray arrangements 830, 930, respectively, used in combination with patch panels 800, 900, respectively, having hinging termination arrangements similar to those of FIGS. 25-29. In the example termination arrangements 820, 920 depicted in FIGS. 30 and 31, each termination arrangement 820, 920 includes a cable retention wall 869, 969 at a first end 821, 921 of a support member 823, 923, adjacent a hinge 824, 924.

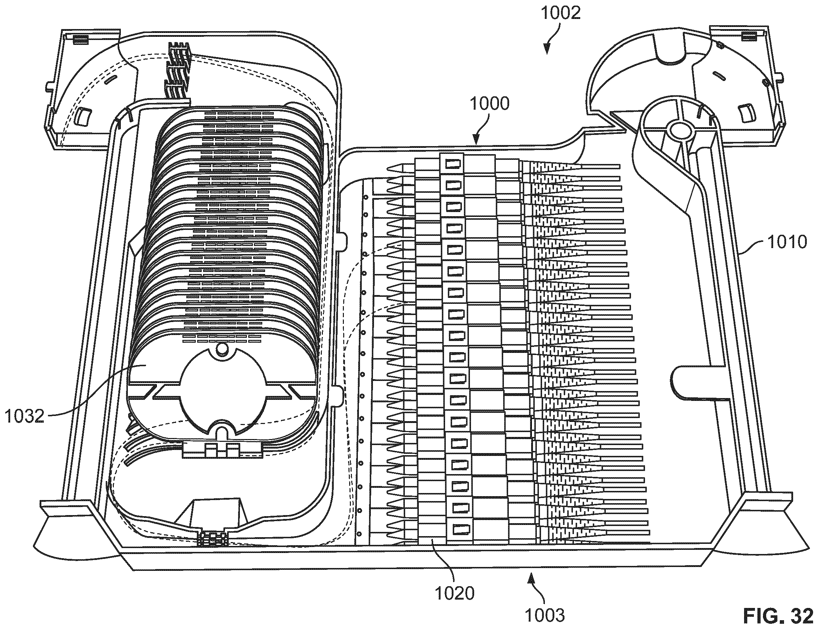

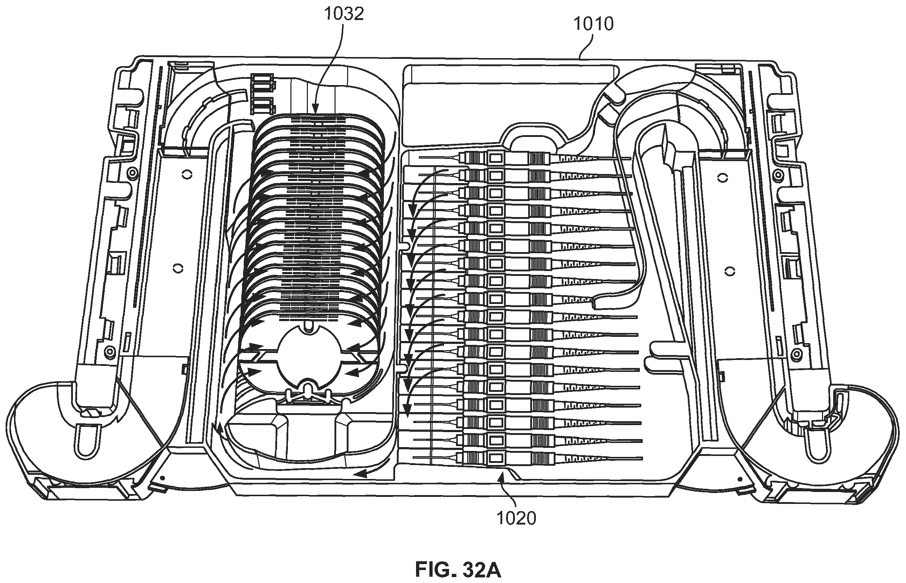

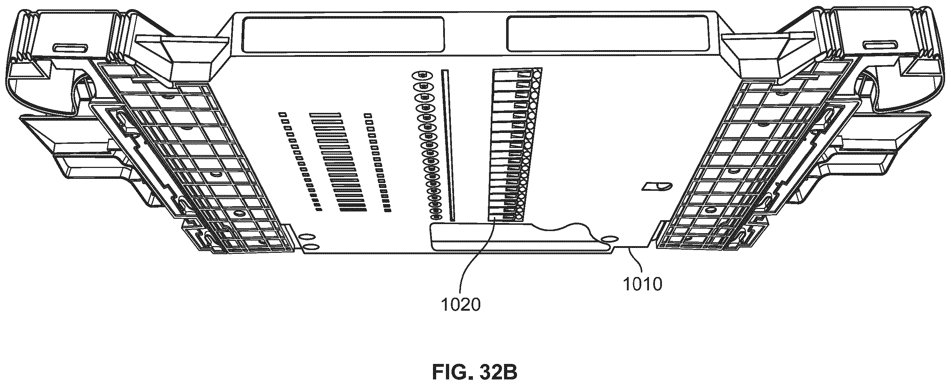

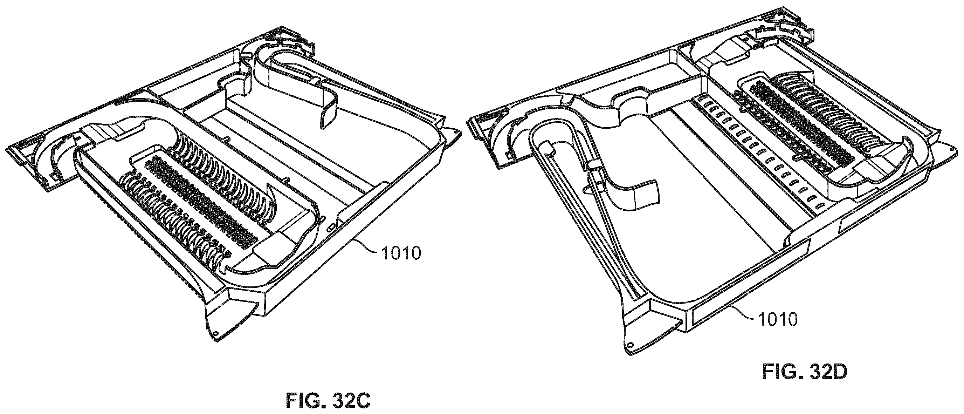

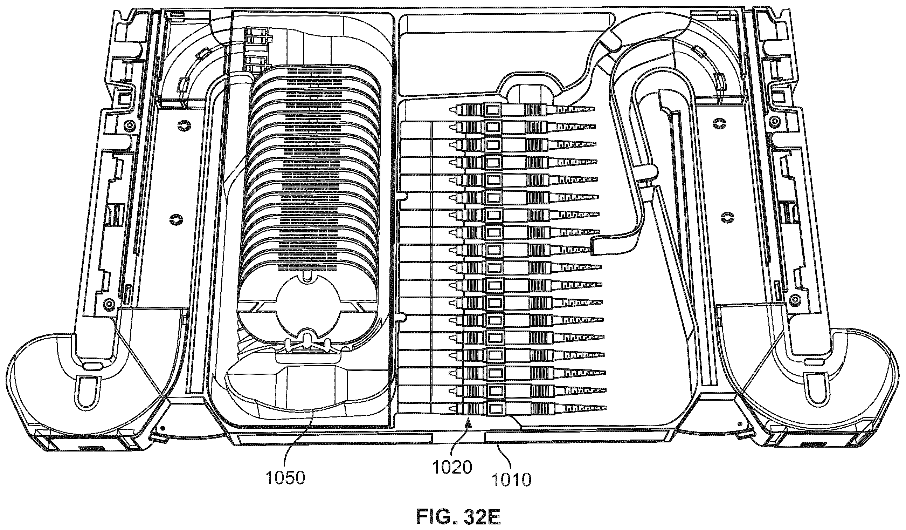

Now referring to FIGS. 32-33, an example of a patch panel 1000 that is formed of termination arrangements 1020 provided in a stacked configuration extending from a front 1003 of a drawer 1010 toward a rear 1002 of the drawer 1010 is illustrated. In the arrangement provided by the panel 1000 of FIGS. 32-33, the termination arrangements 1020 are configured to hinge along the Y-axis, as opposed to the termination arrangements shown in FIGS. 23, 24, 30, and 31 that hinge about the X-axis.

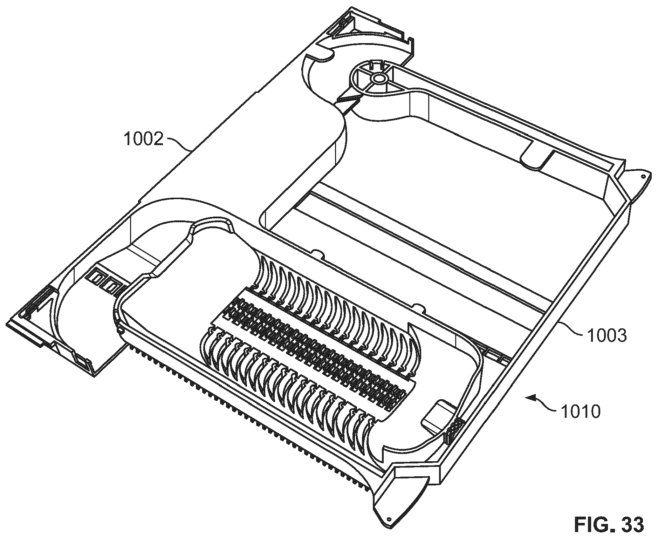

The layout shown in FIGS. 32-33 provides spacing for splice trays 1032 at a side of the drawer 1010. The layout allows flexibility for routing of cables from any given termination arrangement 1020 to any given splice tray 1032 as desired. The drawer 1010 is shown in an empty configuration in FIG. 33.

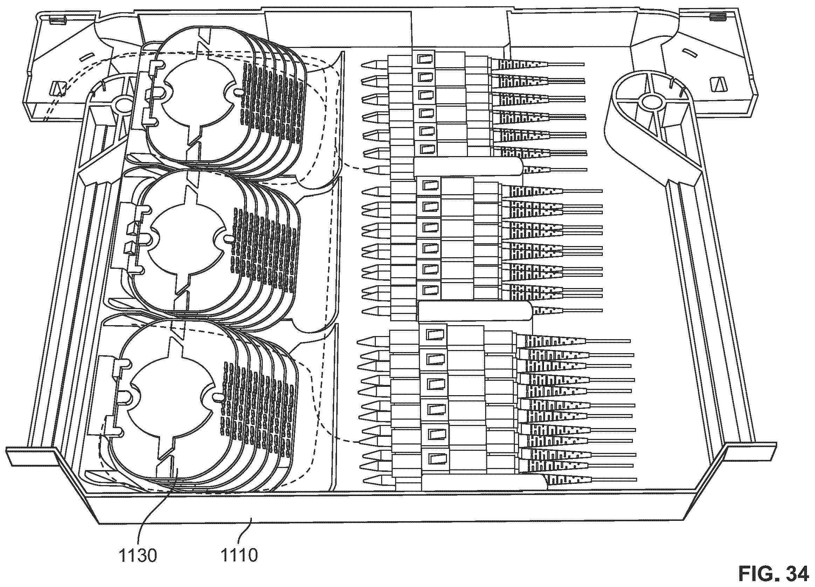

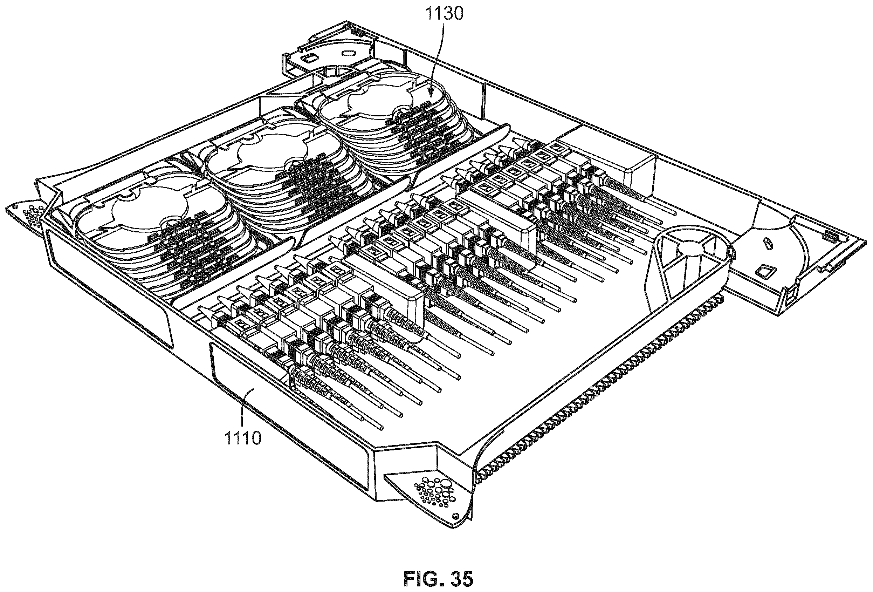

FIGS. 34 and 35 illustrate a variation on the layout shown in FIGS. 32-33 with three splice towers 1130 provided at the side of the telecommunications drawer 1110.

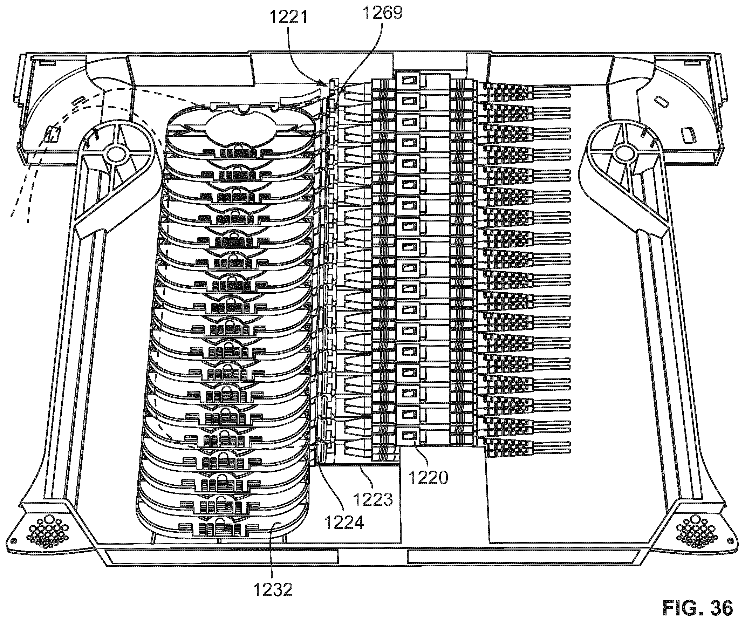

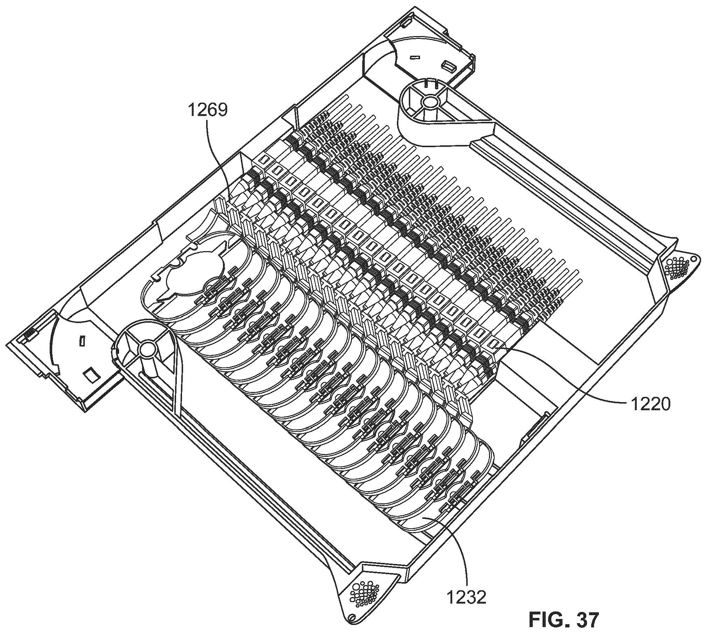

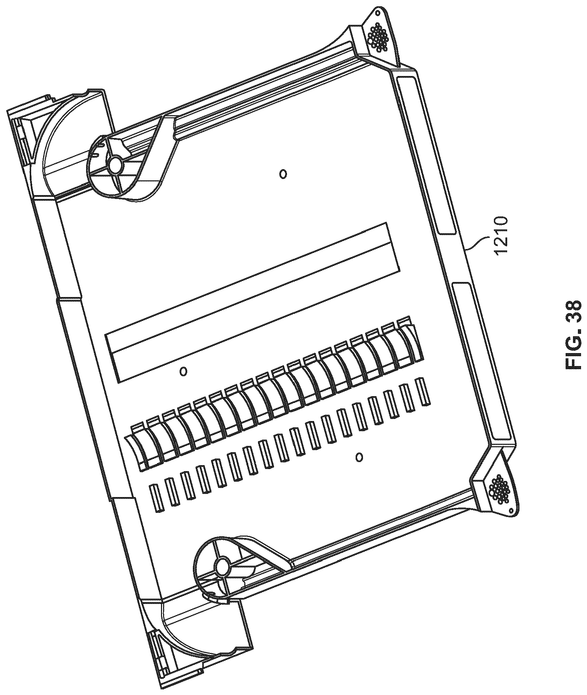

FIGS. 36-38 illustrate a version of a layout similar to that shown in FIGS. 32-33, however, providing a direct routing configuration between termination arrangements 1220 and individual splice trays 1232, where the termination arrangements 1220 stacked front to back are provided to correspond to given splice trays 1232 stacked front to back, limiting the ability to route fibers from any given termination arrangement 1220 to any given splice tray 1232. It should be noted that the termination arrangements 1220 shown in FIGS. 36-38 are similar in configuration to that shown in FIGS. 30 and 31, having a cable retention wall 1269 at a first end 1221 of a support member 1223, adjacent a hinge 1224. The drawer 1210 is shown in an empty configuration in FIG. 38.

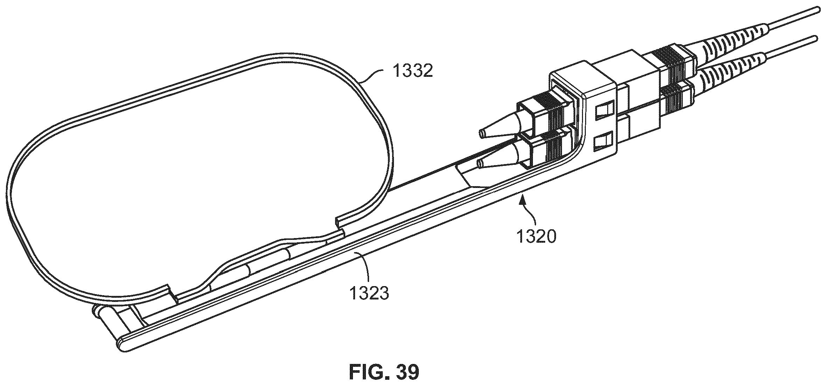

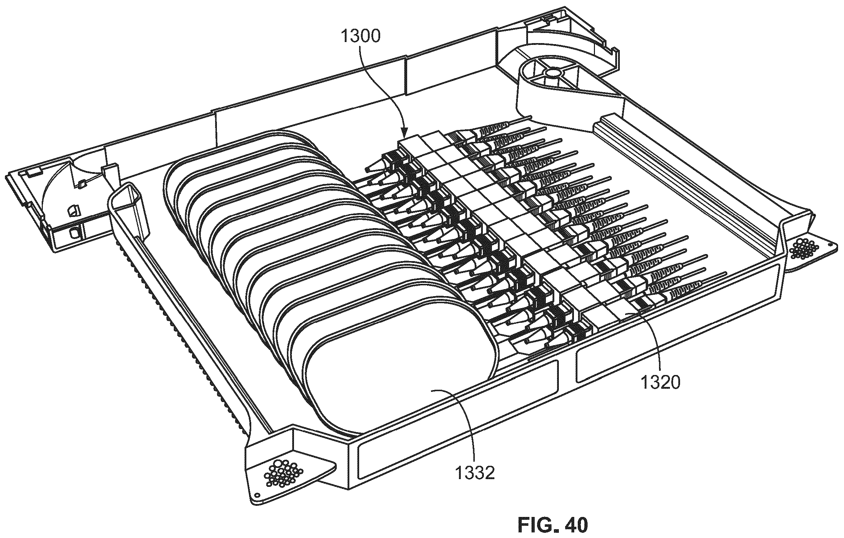

Now referring to FIGS. 39 and 40, another example of a hingedly mounted patch panel 1300 is illustrated for cleaning access. In the example illustrated in FIGS. 39 and 40, a splice tray 1332 is also integrally incorporated onto a support member 1323 of each termination arrangement 1320. As shown, the entire termination arrangement 1320, including the splice tray 1332, is hingedly mounted about the Y-axis, whereas the splice tray 1332 is also hingable with respect to the termination arrangement 1320 along the X-axis.

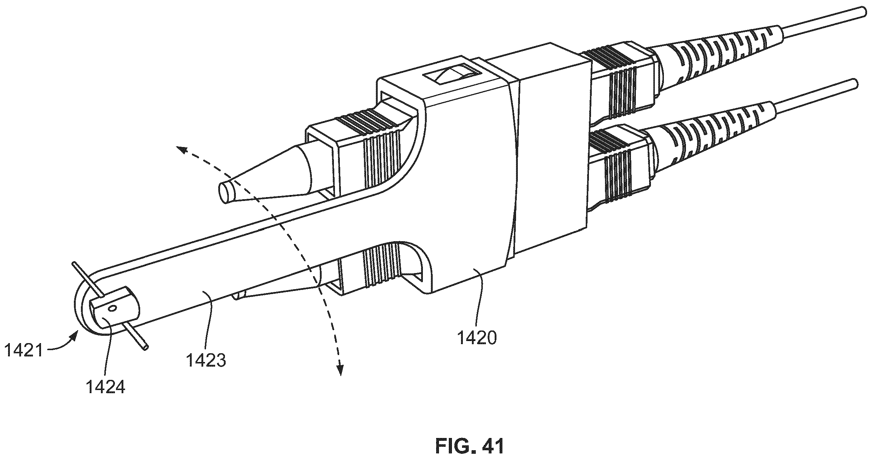

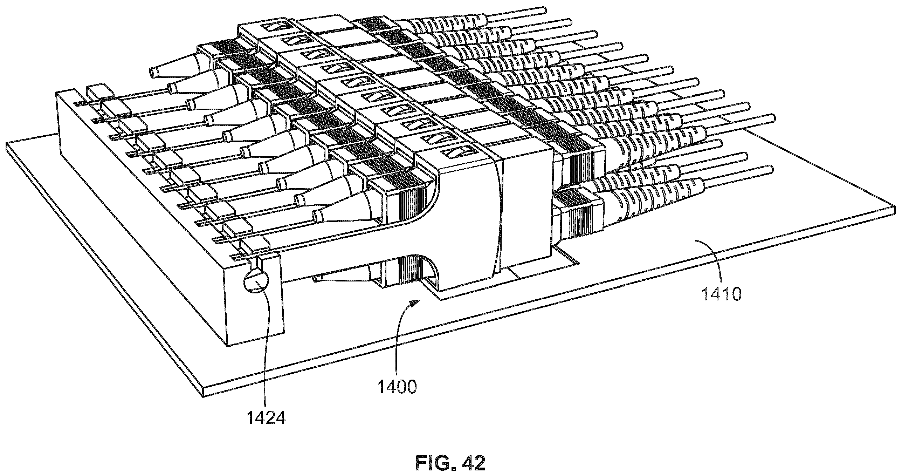

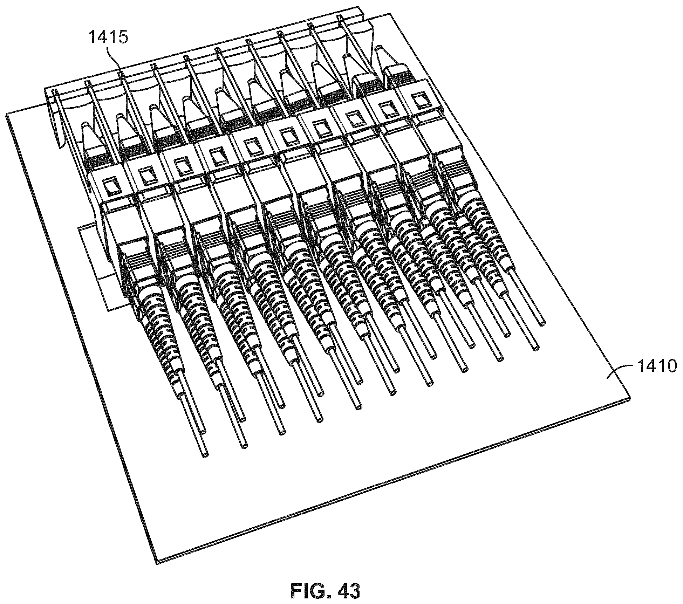

FIGS. 41-44 illustrate an example of a patch panel 1400 where each termination arrangement 1420 not only allows hinged or pivotal movement for cleaning access but is also configured with a flexible support member 1423 for elastic deformation or flexing of the support member 1423 to enhance connector access or optical adapter port access. As shown, the support member 1423 extends from a side of an adapter holding portion 1425 and defines a pivot pin 1424 at a first end 1421 thereof. The pivot pin 1424 allows pivotability or hingability of the termination arrangement 1420 about the X or the Y axis (depending upon how the patch panel 1400 is arranged within a given telecommunications drawer). The support member 1423 of the termination arrangement 1420 allows flexing of the termination arrangement 1420 about the Z-axis, in a travel path that is perpendicular to the X and Y axes.

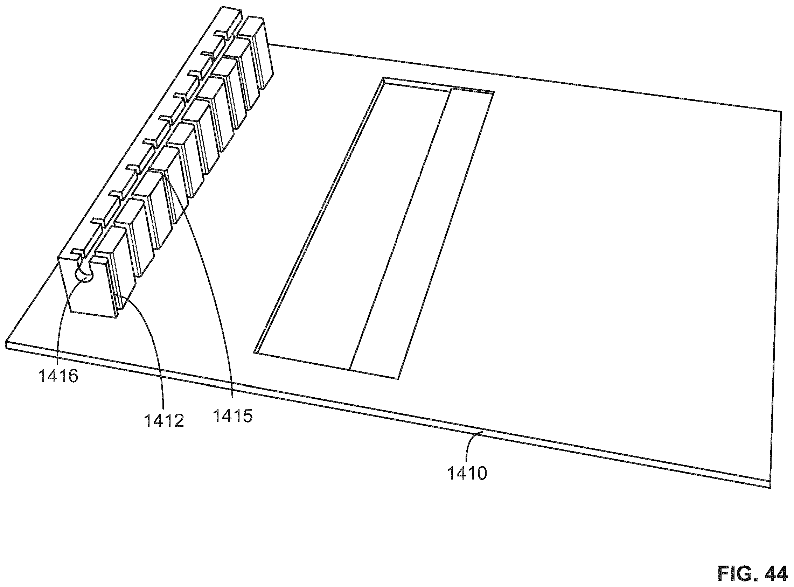

In the embodiment shown in FIGS. 41-44, the patch panel 1400 may utilize a base 1410 that is used in mounting the individual termination arrangements 1420 to a telecommunications fixture such as a drawer. The base 1410 is shown in isolation in FIG. 44. As shown, the base 1410 may define a plurality of termination arrangement receiving slots 1415 for receiving the support members 1423 of the termination arrangements 1420. As shown, one of the sidewalls 1412 defining each slot 1415 may include a pivot opening 1416 for receiving the pivot pin 1424 of each termination arrangement 1420. The pivot pin 1424 may include angled, flat (non-curved) surfaces that can cooperate with the pivot opening 1416 for temporarily fixing the termination arrangements 1420 in a partially or fully pivoted position.

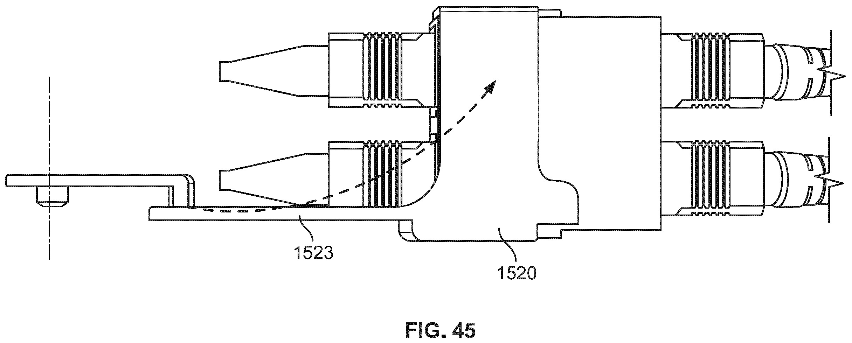

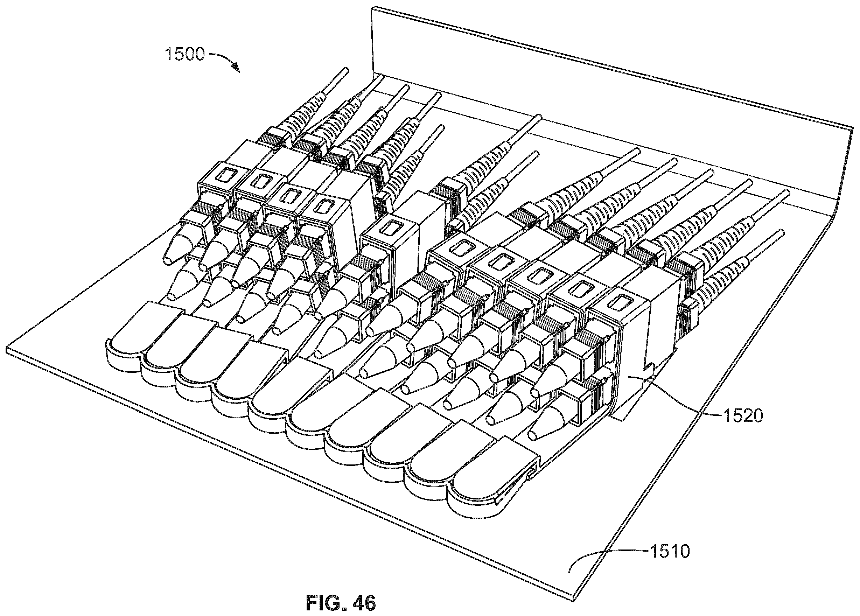

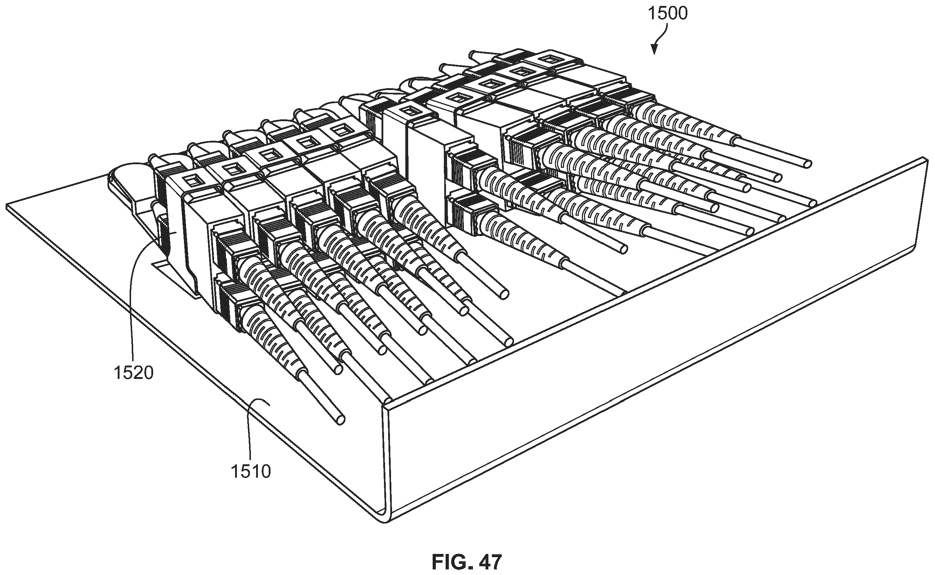

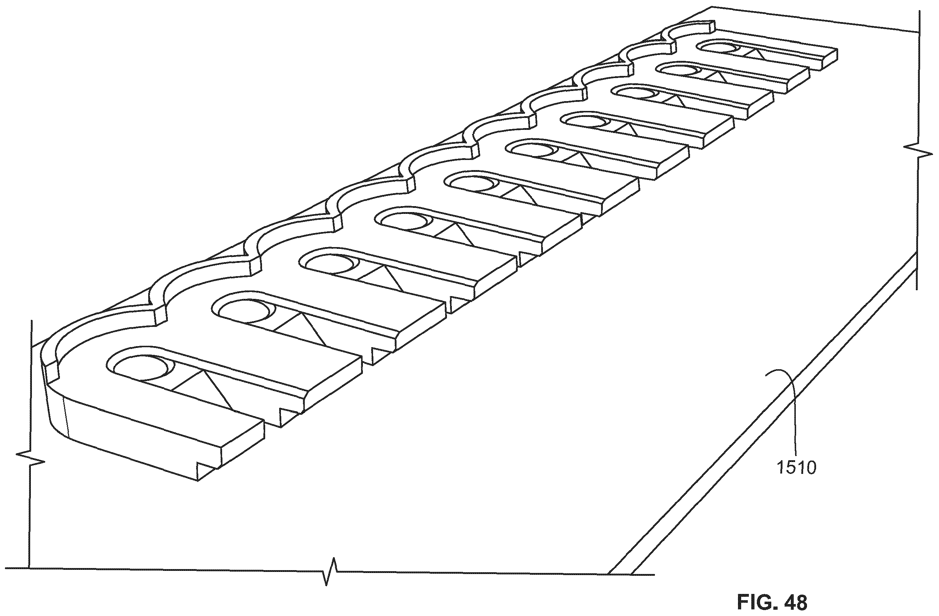

FIGS. 45-48 illustrate a version of a patch panel 1500 that is similar in configuration to that shown in FIGS. 1-19, where a termination arrangements 1520 of the patch panel 1500 are mounted to a base 1510 for pivotal movement about the Z-axis. However, as shown diagrammatically in FIG. 45, a support member 1523 of the termination arrangement 1520 is flexible for elastic deformation thereof to enhance connector access or optical adapter port access. The support member 1523 of the termination arrangement 1520 allows flexing of the termination arrangement 1520 about an axis (either X or Y, depending upon how the patch panel is arranged within a given telecommunications drawer) that is perpendicular to the Z-axis.

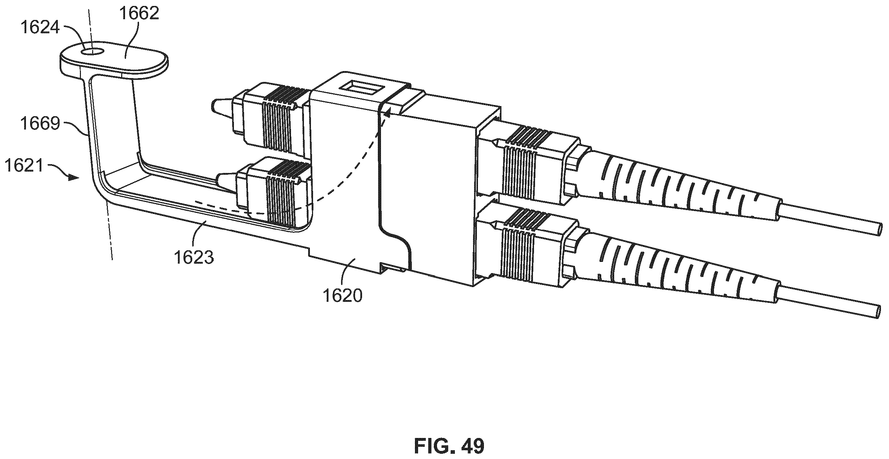

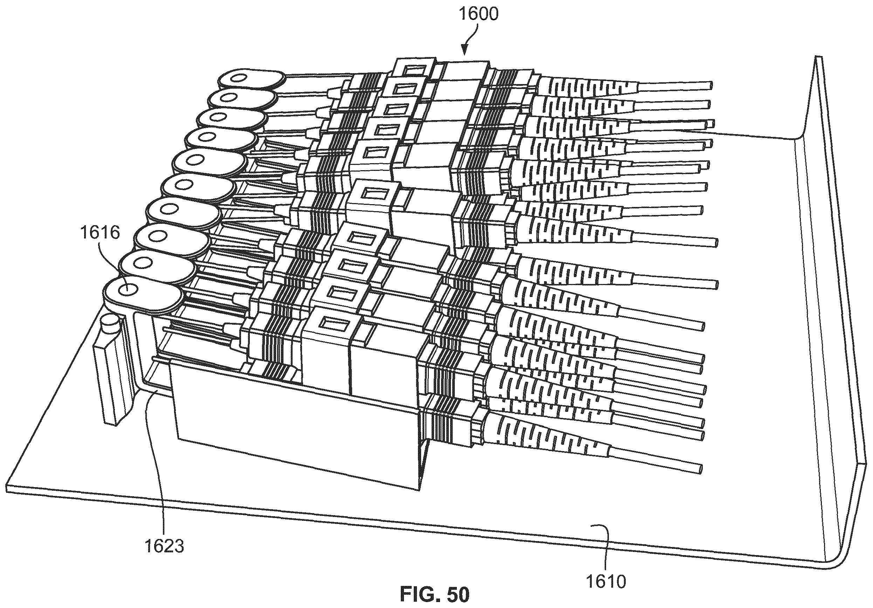

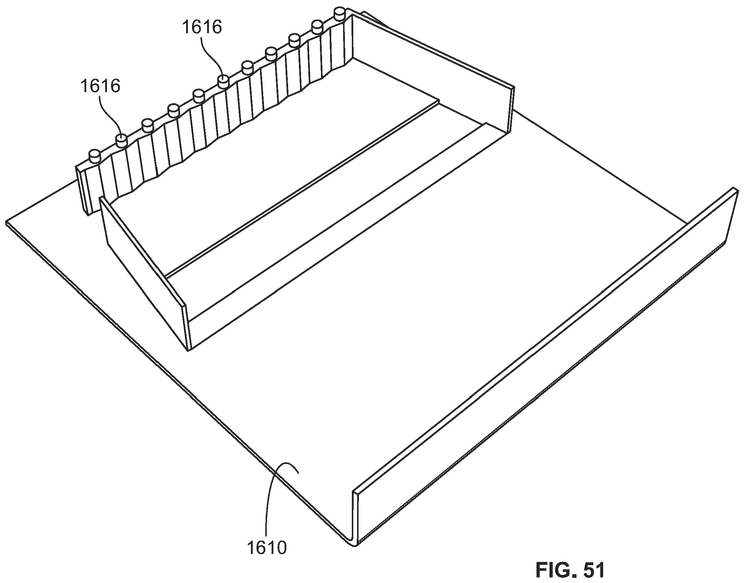

FIGS. 49-51 illustrate a variation on the patch panel 1600 to that of FIGS. 45-48, with similar pivotal movement and flexing. Termination arrangements 1620 of the patch panel 1600 include a cable retention wall 1669 at a first end 1621 of a support member 1623 and a retention tab 1662 extending from the retention wall 1669. A pivot opening 1624 is defined by a portion of the retention tab 1662, as shown in FIGS. 49 and 50. The pivot openings 1624 are inserted into pivot pins 1616 that are defined on a base 1610 of the patch panel 1600. The pivotal movement of the termination arrangements 1620 for finger access is similar to that shown in FIGS. 45-48, being about the Z-axis. And, as shown diagrammatically in FIG. 49, the support member 1623 of the termination arrangement is flexible for elastic deformation thereof to enhance connector access or optical adapter port access, about an axis (either X or Y, depending upon how the patch panel is arranged within a given telecommunications drawer) that is perpendicular to the Z-axis.

It should be noted that in certain example embodiments, the flexing concept for the support member can be used in combination with the pivoting/hinging concept for the termination elements (e.g., in perpendicular relative movement). However, in certain other embodiments, the flexing concept can be used instead of or in place of the pivoting/hinging concept for the termination arrangement. In such an example, since the support member is elastically flexible and automatically returns to its original position, the flexible support member may provide a fail-safe mechanism in returning the accessed adapter or connector to its original position without a technician having to remember to pivot the termination arrangement back after cleaning access. For example, in a drawer such as one having the layout shown in FIG. 32, the termination arrangement 1020 can simply be made to flex about the Y-axis rather than hinging about the Y-axis to provide the fail-safe mechanism. Such a variation of the termination arrangement 1020 and the associated drawer 1010 is shown in FIGS. 32A-32E. Moreover, FIGS. 32C and 32D specifically illustrate right and left hand versions, respectively, of such a drawer 1010 in an empty configuration. FIG. 32E illustrates the termination arrangement 1020 and the associated drawer 1010 of FIGS. 32A and 32B with a demarcation cover 1050 placed over the splice trays 1032 of the drawer 1010.

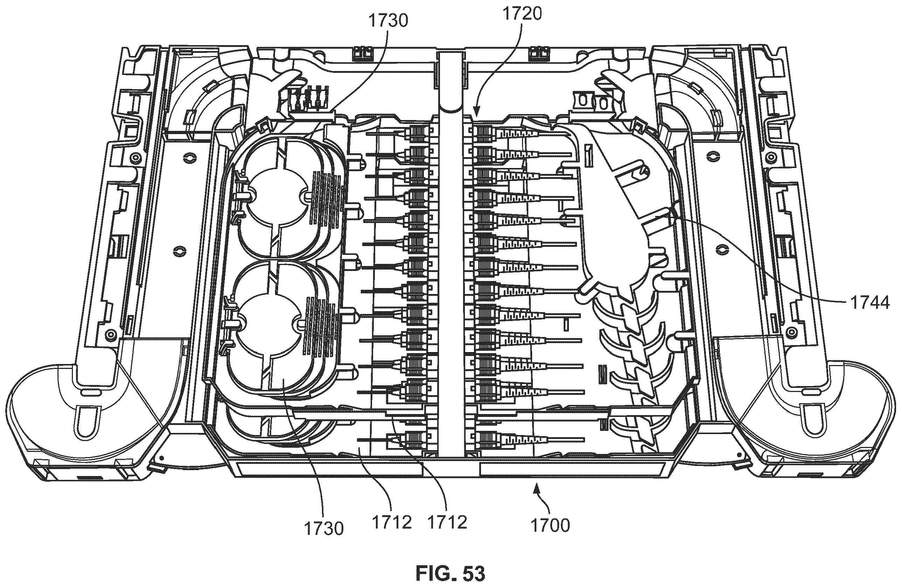

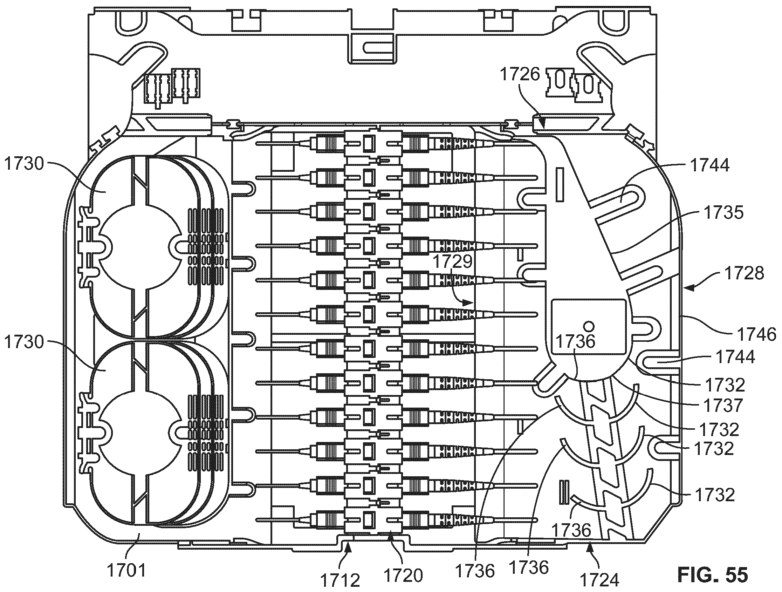

Referring now to FIGS. 53-57, a telecommunications distribution element 1700 similar to those described in PCT Publication No. WO 2016/156611, is illustrated. The element 1700 shown in FIGS. 53-57 includes both patching and splicing features as shown for the examples illustrated in FIGS. 19-52.

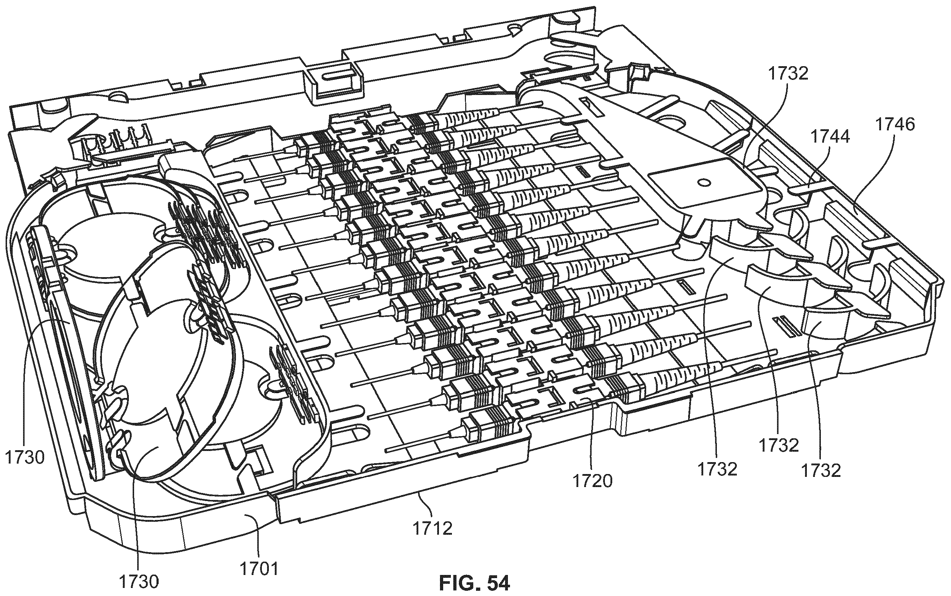

The example distribution element 1700 shown in FIGS. 53-57 utilizes a pair of frame members 1712 that are hingedly mounted in a stacked configuration. One of the frame members 1712 is shown in isolation in FIGS. 54-56. The frame member 1712 includes a cable management insert 1710 that is configured for removable coupling thereto at a right side of the frame member 1712 and a splice insert 1701 that is positioned at a left side of the frame member 1712.

The cable management insert 1710 shares a similar configuration and functionality with the inserts discussed in PCT Publication No. WO 2016/156611. The cable management insert 1710 defines a generally planar configuration with a front end 1724, a rear end 1726, a right side 1728, and a left side 1729. The cable management insert includes a plurality of radius limiters 1732 (e.g., spools) that are arranged from the front end 1724 to the rear end 1726 in a stacked arrangement. The radius limiters 1732 are designed to provide cable paths of differing lengths depending upon where the radius limiters 1732 are positioned with respect to a patch or connection panel 1720.

The cable management insert 1710 provides the advantage of being able to use similar (or same) length cables or pigtails extending from a fiber optic device that has been mounted to the element, even though each cable is patched at a different point on the patch panel 1720. The different radius limiters 1732 accomplish the purpose of adjusting for the different patching locations of the cables.

For example, the radius limiter 1732 of insert 1710 closest to the rear end 1726 of the insert 1710 defines a spool wall 1736 having a longer length than the rest of the radius limiters 1732 in the insert 1710. The wall 1736 of the rear-most radius limiter 1732 includes an angled straight portion 1735 that transitions into a curved portion 1737 as the wall 1736 extends from the rear end 1726 toward the front end 1724 of the cable management insert 1710. The front three radius limiters 1732 define spool walls 1736 having similar lengths to each other but shorter than that of the rear-most radius limiter 1732.

As the cables branch out from the entrance point toward the adapters of the patch panel 1720, the cables are routed around the different radius limiters 1732 depending upon where they are going to be patched along the connection panel 1720. The cables extending toward the adapters positioned generally toward a rear of the patch panel 1720 are guided around the curved portion 1737 of the wall 1736 of the rear-most radius limiter 1732. These cables are initially routed toward the front of the frame member 1712, around the wall 1736 of the rear-most radius limiter 1732, and then toward the rear of the frame member 1712 to the associated adapters. The cables extending toward the adapters, positioned generally at a center of the connection panel 1720 and toward a front of the connection panel 1720, are guided around the front three radius limiters 1732, based upon the final patching location.

Each of the radius limiters 1732 define retention fingers 1744 extending from the spool walls 1736 thereof for retaining the cables around the spools 1732. A right-most wall 1746 defined by the insert 1710 also includes retention fingers 1744 extending inwardly therefrom for keeping the cables within the insert 1710 as they are lead to the different radius limiters 1732.

Even though the depicted embodiment of the cable management insert 1710 is shown with radius limiters, at least three of which define different spool wall lengths and thus, different cable path lengths, in other embodiments, more than three different types of spools 1732 can be provided on the insert 1710. For example, each of the front three radius limiters 1732 can have spool walls 1736 with differing lengths from each other, to provide for a finer adjustment/accommodation for the final patching location of the cables.

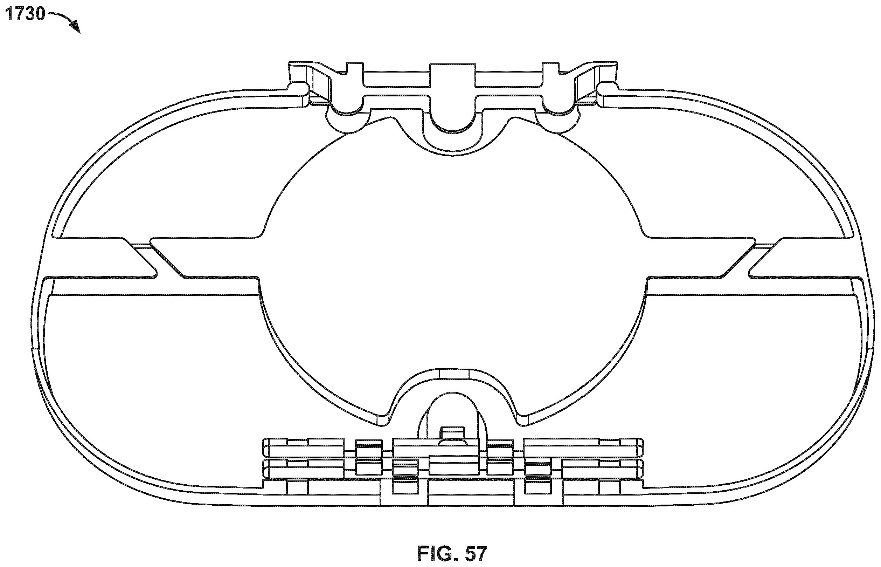

As noted above, the left side of the frame member 1712 includes a splice insert 1701 that is configured to receive a plurality of hingedly mounted splice trays 1730 in a stacked arrangement. The splice trays 1730 are mounted so as to be hinged along the Y-axis defined by the element as diagrammatically illustrated in FIG. 52. One of the splice trays 1730 is illustrated in isolation in FIG. 57.

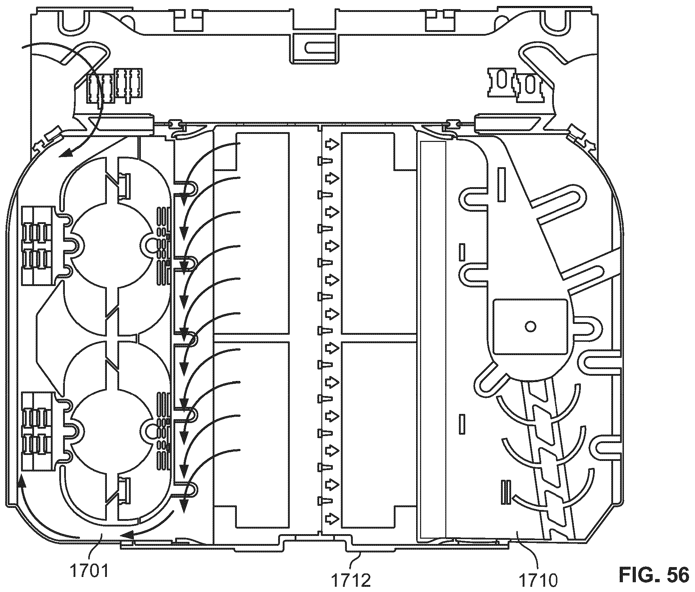

The fibers can be routed to/from the depicted patch panel 1720 utilizing the cable routing pattern shown in FIG. 56, as well as the fibers incoming to and outgoing from the splice trays 1730. It should be noted that, although the patch panel 1720 illustrated in the example element 1700 in FIGS. 53-57 does not have pivotability or flexibility features of finger or cleaning access, such features may be incorporated into the depicted patch panel 1720 in other examples.

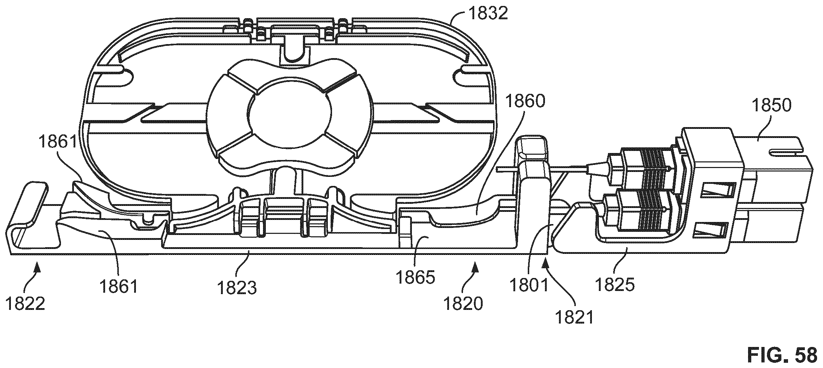

Referring now to FIGS. 58-60, another example of a termination arrangement 1820 is illustrated. The termination arrangement 1820 is similar in concept to the termination arrangement 1320 shown in FIGS. 39-40 where a splice tray 1832 is integrally incorporated onto a support member 1823 of the termination arrangement 1820 and is hingable with respect to the termination arrangement 1820 along the X-axis. However, in the version of the termination arrangement 1820, an adapter holder portion 1825 is removably mounted to the support member 1823 of the termination arrangement 1820 and is hingable with respect thereto for access. As shown, the adapter holder portion 1825 is pivotable about the Y-axis for access. The adapter holder portion 1825 is configured with a hinge pin 1824 that is receivable by a hinge receiver 1801 located at a first end 1821 of the support member 1823 for allowing the pivotal motion. According to certain example embodiments, the pivotal motion of the adapter holder portion 1825 may be between 0 and 45 degrees. Other travel ranges may be implemented depending upon the need.

The support member 1823 that has the pivotal splice tray 1832 incorporated thereon includes cable management structures 1860 for guiding fibers from the adapter holder portion 1825 to the tray 1832 for a splice operation, wherein the cable management structures 1860 define a cable channel 1865 in routing the fibers from adapters 1850. Fibers spliced at the trays 1832 that are exiting the termination arrangement 1820 are also managed out of the support member 1823 by cable management structures 1861 at a second end 1822 of the support member 1823. As shown in FIG. 58, the support members 1823 are right or left compatible where fibers can be lead to a right or left side from the splice trays 1832.

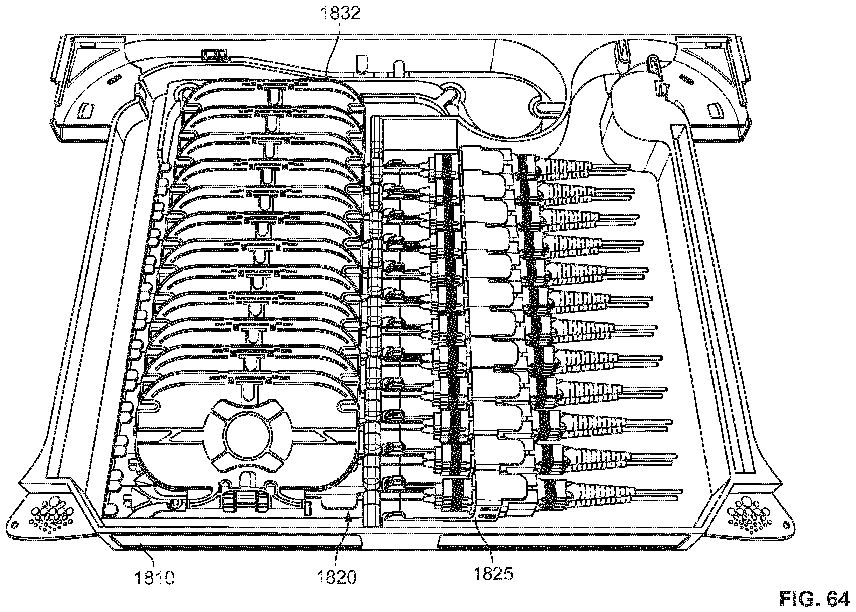

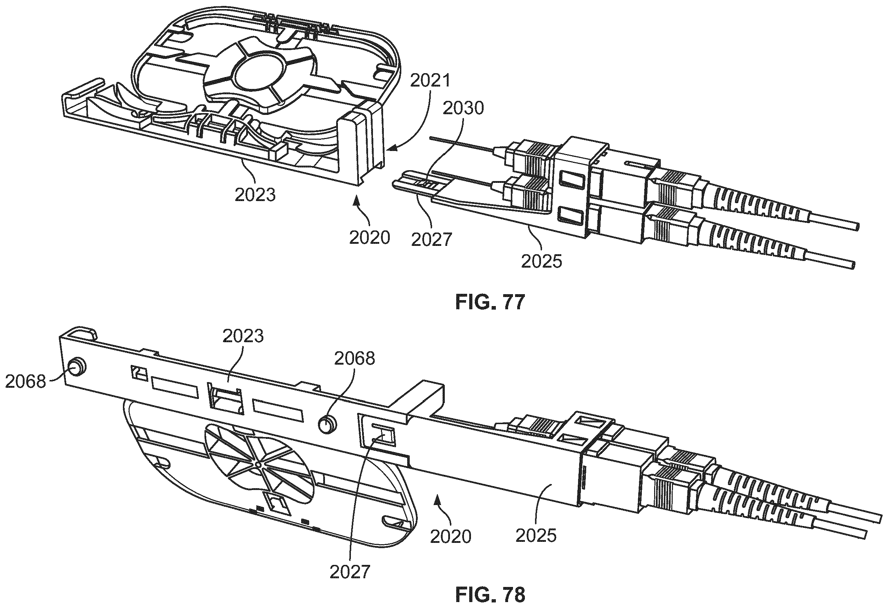

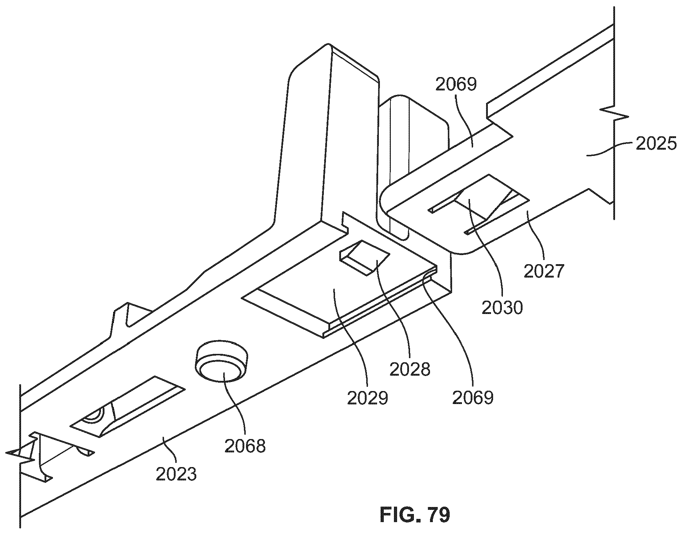

While the adapter portion 1825 is configured to be pivotable about the Y-axis for access to the individual adapters 1850, the support member 1823, in the depicted embodiment, is configured to be fixedly mounted to a telecommunications fixture such as a telecommunications drawer 1810 (as shown in FIGS. 64-65) similar to that illustrated for the termination arrangements shown in FIGS. 20-57. Each support member 1823 may include a boss or a pin (similar to the bosses/pins 2068 shown in FIGS. 78-79) for mounting to mating openings defined on the telecommunications fixture. As noted previously, the telecommunications drawer 1810 shown in FIGS. 64-65 may form part of a distribution element, such as a sliding chassis type element. Such elements may be configured for connecting patch cables entering one side of the element to an incoming cable, such as a distribution cable or a feeder cable entering an opposite side of the element. Examples of such distribution elements are described in PCT Publication Nos. WO 2014/118227; WO 2014/207210; and WO 2016/012550.

It should also be noted that although the termination arrangements of the present application have been shown to be mounted to fixtures such as telecommunications drawers, the termination arrangements can be used in any type of an enclosure utilizing a patch/splice arrangement, where access to the individual patch connections are needed or desired.

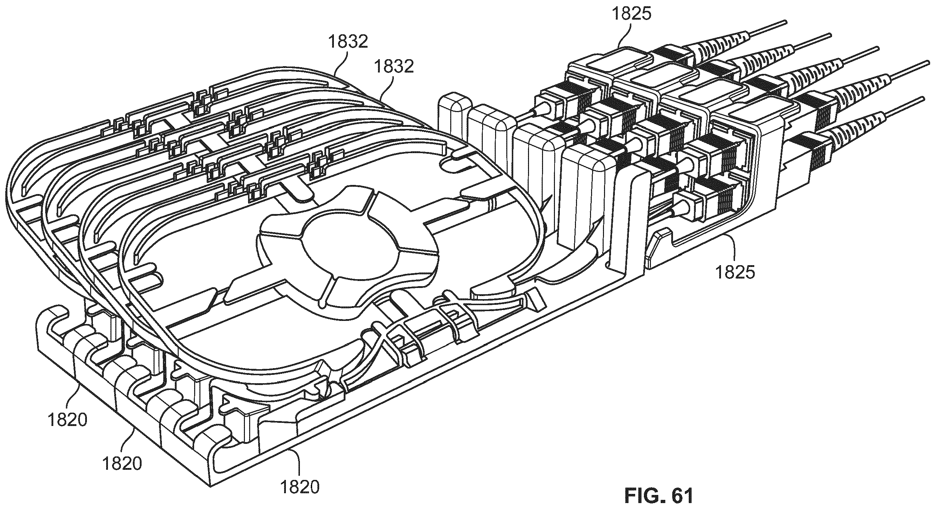

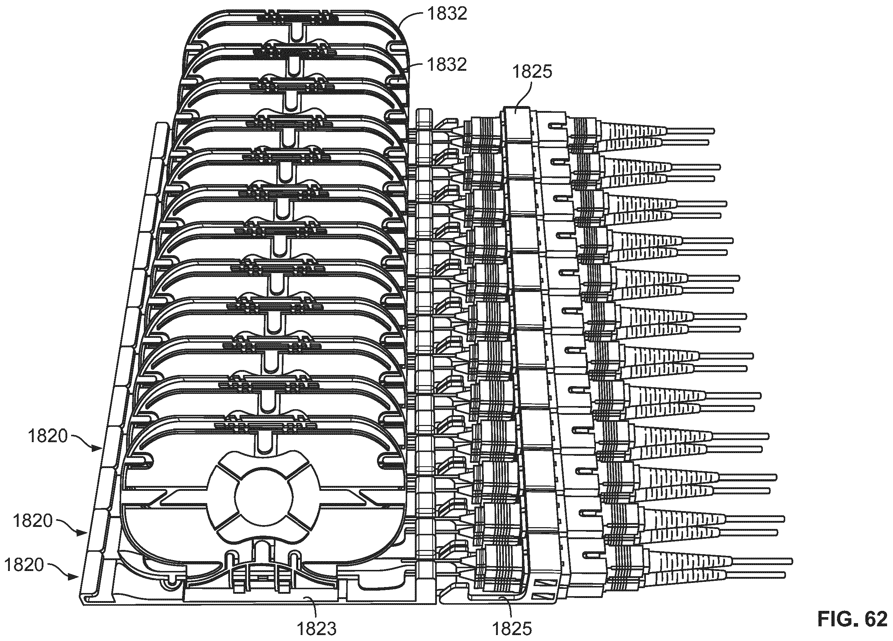

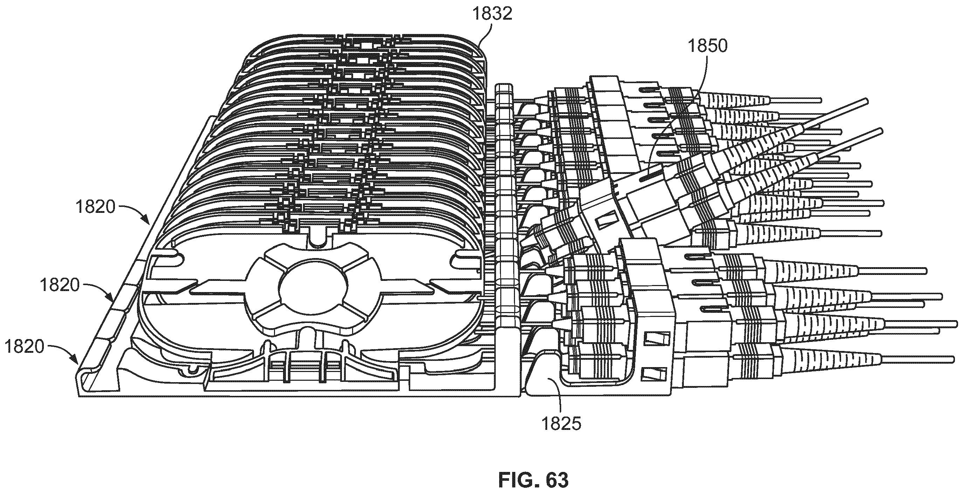

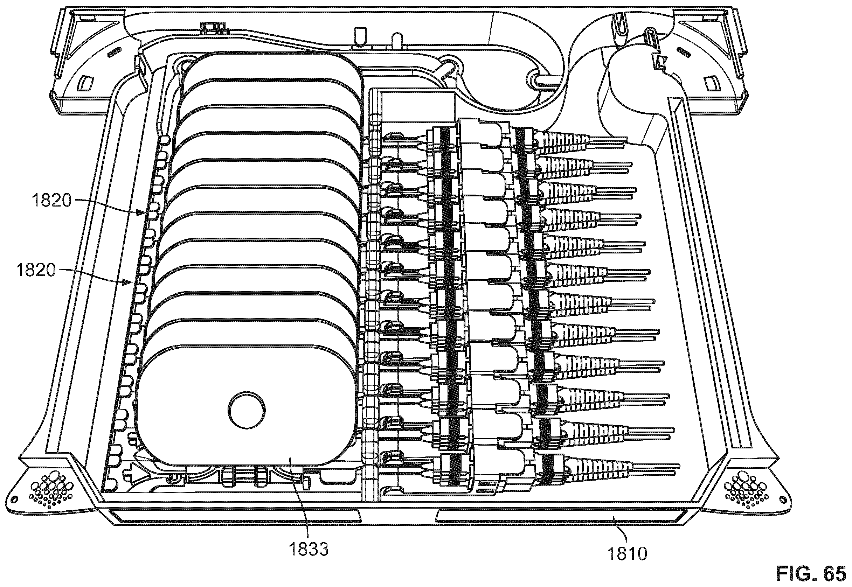

A plurality of the pivotal termination arrangements 1820 may be provided in a horizontally stacked configuration when mounted in a telecommunications drawer 1810, as shown in FIGS. 61-64. In FIG. 65, a horizontal stack of termination arrangements 1820 is shown mounted in a telecommunications drawer 1810, where each splice tray 1832 also includes a cover 1833 to protect the fibers therein, as will be discussed in further detail below.

In certain embodiments, instead of a termination arrangement including only one splice tray 1832 and a single adapter holder portion 1825, a number of termination arrangements 1820 can be integrated together in a side-by-side configuration to form a larger termination arrangement that includes a number of splice trays 1832 and a number of adapter holder portions 1825. For example, the stacked termination arrangements 1820 illustrated in FIG. 61 can be provided as a single termination arrangement where the individual support members 1823 are integrally formed or bonded together. In this manner, such larger blocks of termination arrangements can be placed within desired telecommunications equipment.

However, as discussed above, if desired, the termination arrangements can certainly be added to a fixture one at a time in a modular format.

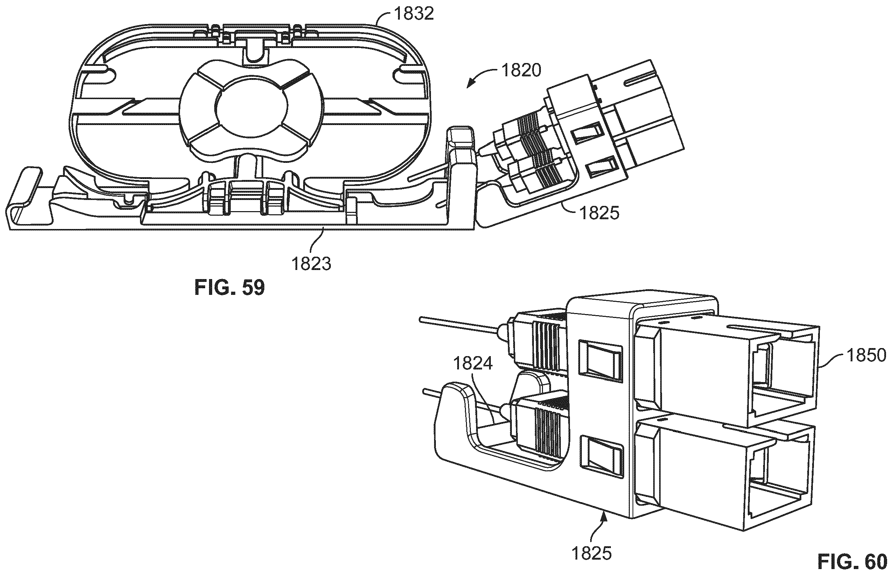

The adapter holder portion 1825 (shown in isolation in FIG. 60) of each termination arrangement 1820 is configured to receive and hold at least one optical adapter 1850. In certain implementations, the adapter holder portion 1825 may receive and hold multiple optical adapters 1850 (e.g., two, four, etc.). The adapter holder portion 1825 can be configured to hold simplex, duplex, or quad adapters 1850. And, even though the adapters 1850 depicted in FIGS. 58-65 are of the SC type, the inventive aspects of the present disclosure are fully applicable to any format adapter, such as SC, LC, MPO, etc.

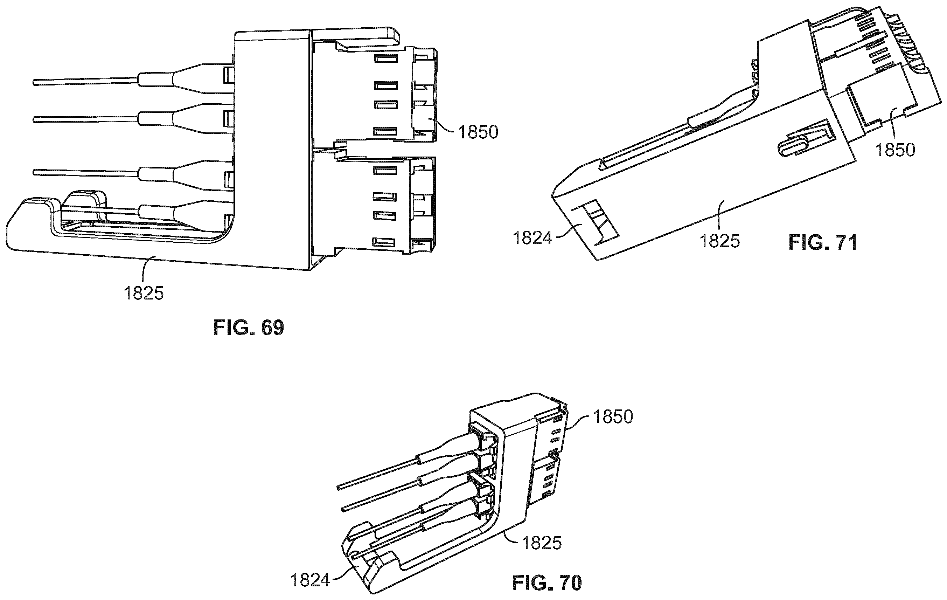

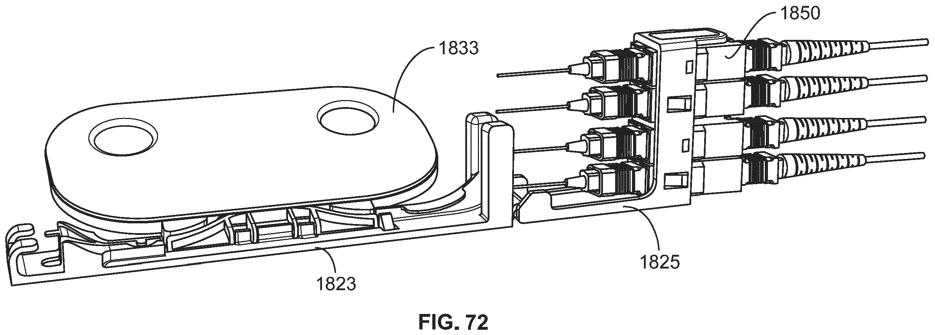

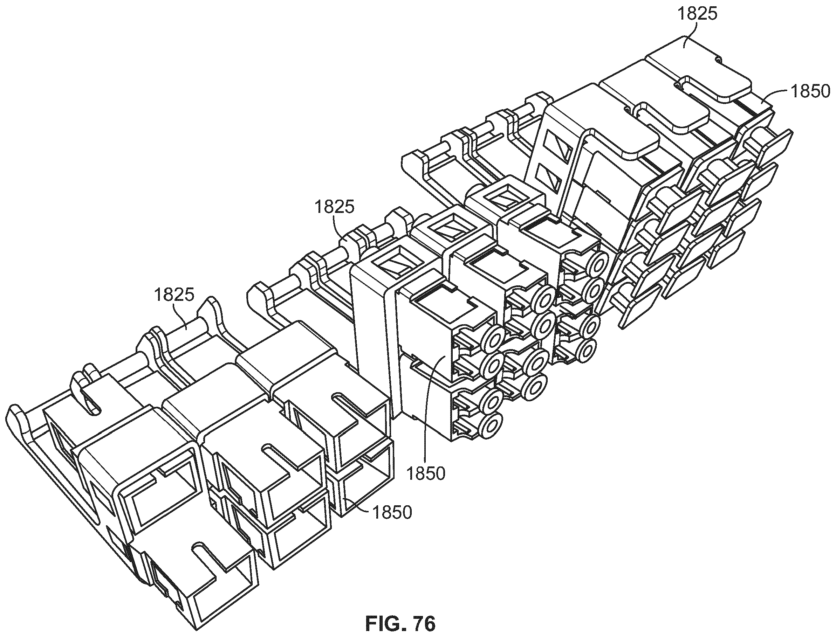

For example, in FIGS. 69-71, a version of an adapter holder 1825 that is configured to hold two LC Duplex adapters 1850 is shown. In FIG. 72, a version of an adapter holder 1825 that is configured to hold four SC adapters 1850 is shown. FIG. 76 illustrates some of the different formats, numbers, and layouts of the adapters 1850 that can be used on the termination arrangements of the present disclosure.

It should also be noted that since the adapter holder portion 1825 is completely removable from the rest of the termination arrangement 1820, this provides a modular system where adapter formats can be changed. Also, if a fiber or connector is damaged or not functioning properly, the removability of the adapter holder portions 1825 allow full replacement of that portion.

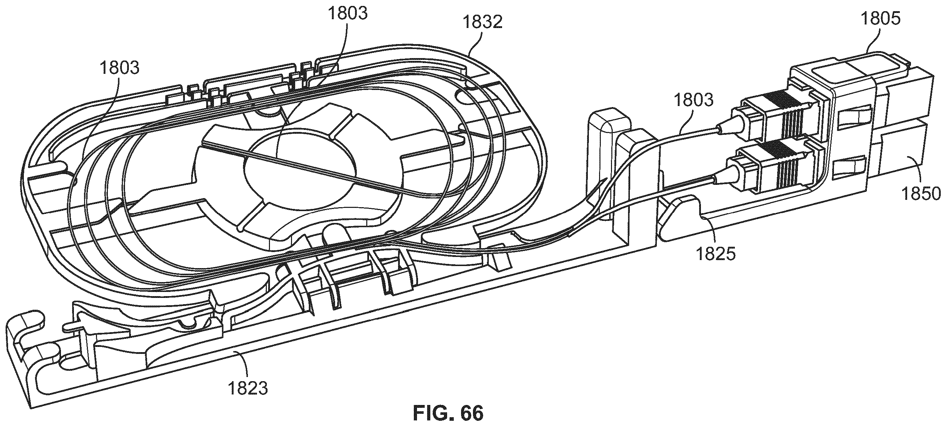

Referring now to FIGS. 66-68, the termination arrangements 1820 can be provided as a stand-alone sub assembly and can come as a pre-terminated unit from the factory level. As shown in FIG. 66, fibers 1803 that are connectorized at a first end and coupled to the adapters 1850 of the holder portion 1825 may be spooled within the splice trays 1832 at the factory level. The ends of the fibers 1803 to be spliced at the splice trays 1832 may be removably fixed to the splice trays 1832, for example, such as with a piece of adhesive tape, ready for a future splicing operation. In the depicted example shown in FIG. 66, 900 micron fibers 1803 leading from the adapter holder portion 1825 of the termination arrangement 1820 may be stripped at a transition point to 250 micron fibers 1803. The 250 micron fibers 1803 may then be coiled up within the splice trays 1832 with the ends fixed as noted above. The transition between the 900 micron fibers 1803 and the 250 micron fibers 1803 may be provided by stripping or providing an outer tube.

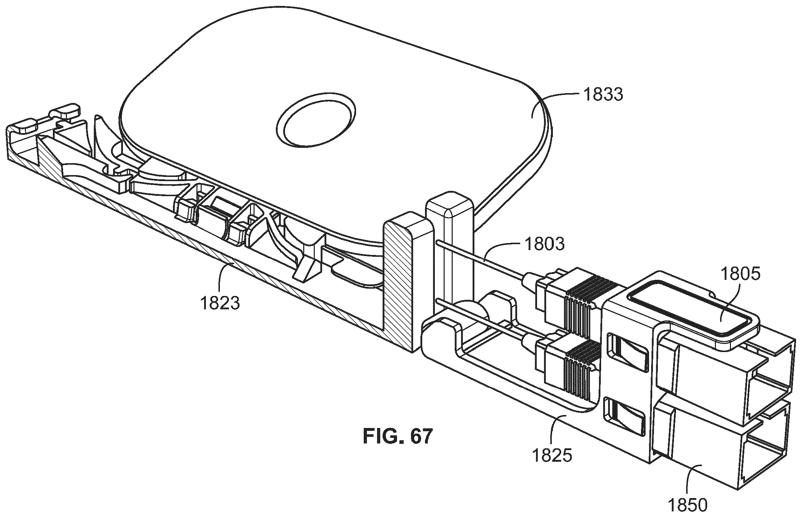

As noted above, once the fibers 1803 have been coiled inside the splice tray 1832 and fixed therein ready to be supplied to a customer for a future splice operation, a snap-on cover 1833 may be used to protect the fibers 1803 within the splice tray 1832. The cover 1833 is shown in FIG. 67.

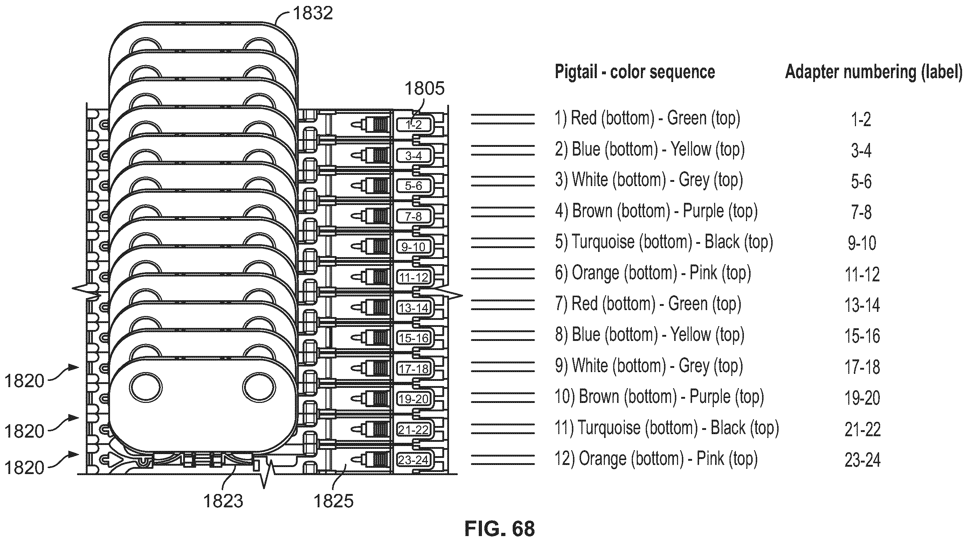

FIG. 68 illustrates an example of a packaging sequence where twelve termination arrangements 1820 according to a customer's color-code have been provided for placement within a telecommunications drawer such as the drawer 1810. As shown, numbering labels 1805 may be provided on the adapter holder portions 1825 for identification purposes.

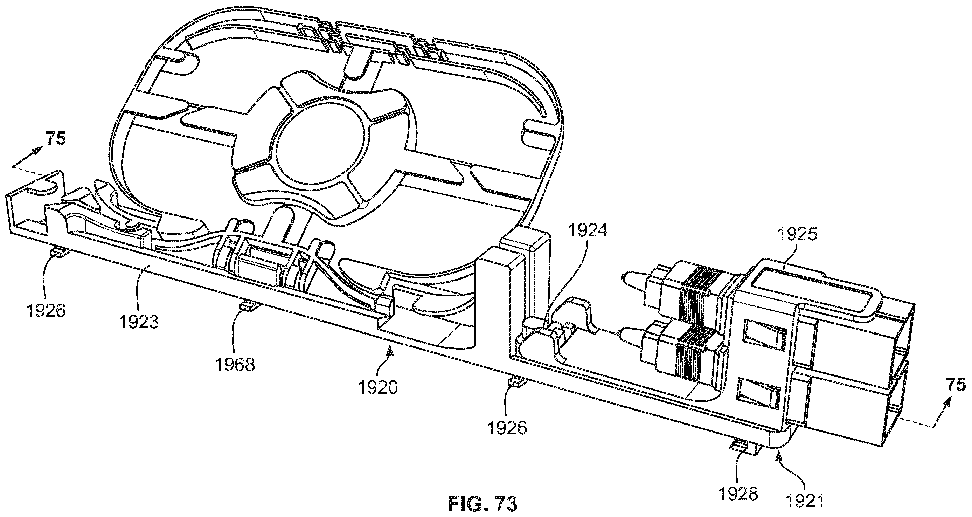

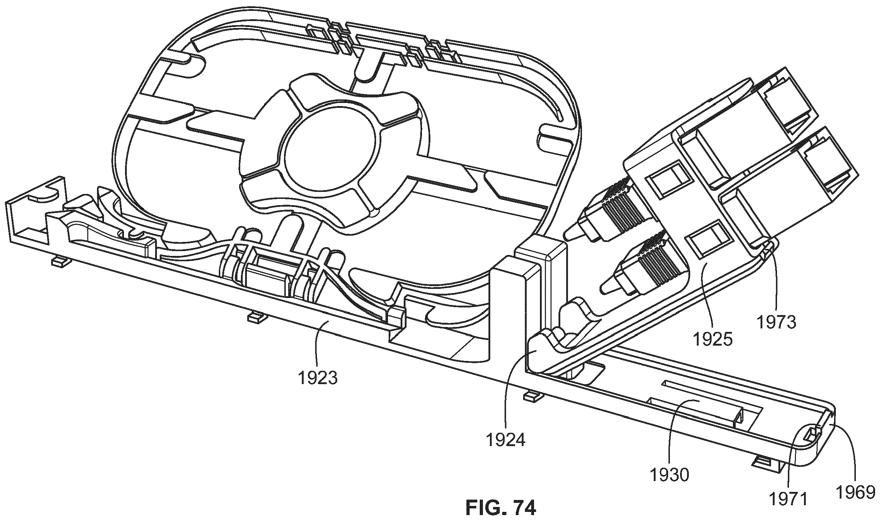

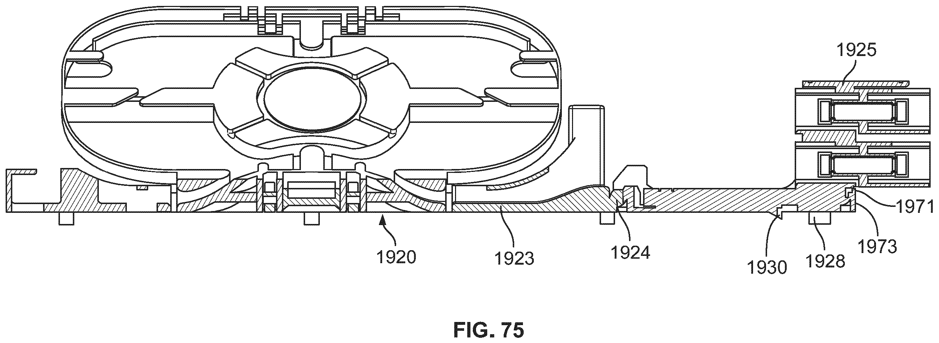

Referring now to FIGS. 73-75, another version of a termination arrangement 1920 that has features similar to the arrangements 1820 shown in FIGS. 58-72 is illustrated. The variant shown in FIGS. 73-75 includes snap-fit features 1968 at a bottom of a support member 1923 for slidable and removable mounting to a telecommunications fixture such as a drawer. As shown in FIG. 74 and as shown in the cross-sectional view in FIG. 75, the snap-fit features 1968 include dove-tail slide members 1926 along the bottom of the support member 1923, a stop member 1928 at a first end 1921, and a cantilever member 1930 positioned under an adapter holder portion 1925. As shown in the cross-sectional view in FIG. 75, the cantilever member 1930 and the stop member 1928 are configured to abut spaced-apart portions within the telecommunications fixture to lock the support member 1923 of the termination arrangement 1920 within the fixture. After slidable insertion, by the time the stop member 1928 abuts a portion of the telecommunications drawer, the cantilever 1930 elastically snaps back down to abut an opposing spaced-apart surface of the telecommunications drawer to provide a locking arrangement. The opposing abutting surfaces provided by the stop member 1928 and the cantilever member 1930 keep the support member 1923 locked with respect to a telecommunications fixture that has been designed to hold such a termination arrangement. Removal of the support member 1923, and thus the entire termination arrangement 1920, requires elastically flexing the cantilever member 1930 back upward to clear the member 1930 from the portion of the telecommunications fixture, such as with an elongate tool, screw-driver, etc.

In the version of the termination arrangement 1920 shown in FIGS. 73-75, the support member 1923 also extends past a hinge point 1924 and has a portion that is positioned under the adapter holder portion 1925. The first end 1921 of the support member 1923 defines a further snap-feature 1969 for keeping the adapter holder portion 1925 in a non-pivoted position to limit unwanted movement of the adapter holder portion 1925. As shown, a snap tab 1971 provided at the first end 1921 of the support member 1923 is configured to catch over a lip 1973 defined by the adapter holder portion 1925 in keeping the adapter holder portion 1925 in a non-pivoted position with a snap-fit interlock. The tab 1971 has to be moved just enough to clear the lip 1973 to pivot the adapters for access.

Now referring to FIGS. 77-79, another version of a termination arrangement 2020 that has features similar to the arrangements 1820 and 1920 shown in FIGS. 58-76 is illustrated. The variant shown in FIGS. 77-79, however, is configured with an adapter holder portion 2025 that can elastically flex or deform to enhance connector access or optical adapter port access, similar to the versions shown in FIGS. 41-51. As shown, adapter holder portion 2025 is configured to be removably attached to a first end 2021 of a support member 2023 and is configured to elastically flex relative thereto about the Y axis.

The adapter holder portion 2025 defines a mount portion 2027 that is slidably inserted into a mount channel 2029 defined underneath the support member 2023. The mount portion 2027 and the mount channel 2029 define intermating dovetail formations 2069 for the slidable insertion. A cantilever member 2030 is provided on the mount portion 2027 of the adapter holder 2025 that rides over and snaps over a tapered tab 2028 positioned within the mount channel 2029 of the support member 2023 for locking the two parts together. The mount portion 2027 of the adapter holder 2025 is configured with a thin profile and is flexible enough to provide elastic bending of the adapter holder portion 2025 for access once the mount portion 2027 has been locked to the support member 2023.

In the version of the termination arrangement 2020 shown in FIGS. 77-79, the support member 2023 may include bosses or pins 2068 (similar to the version of the arrangement shown in FIGS. 58-72) for mounting to mating openings defined on a telecommunications fixture.

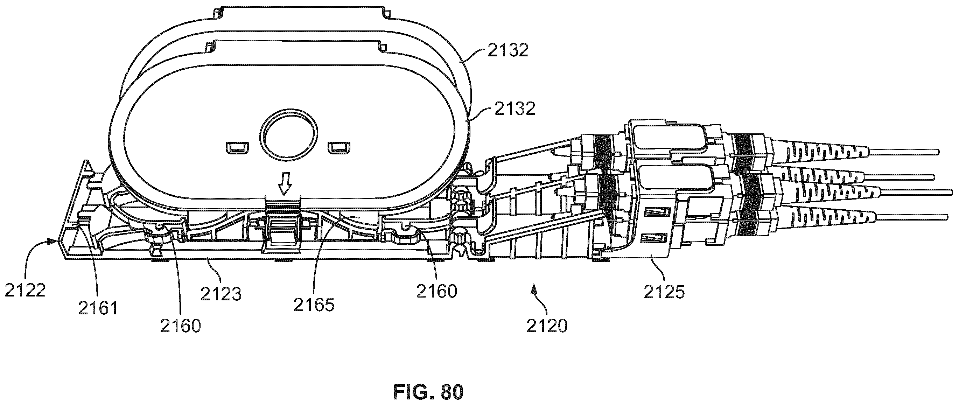

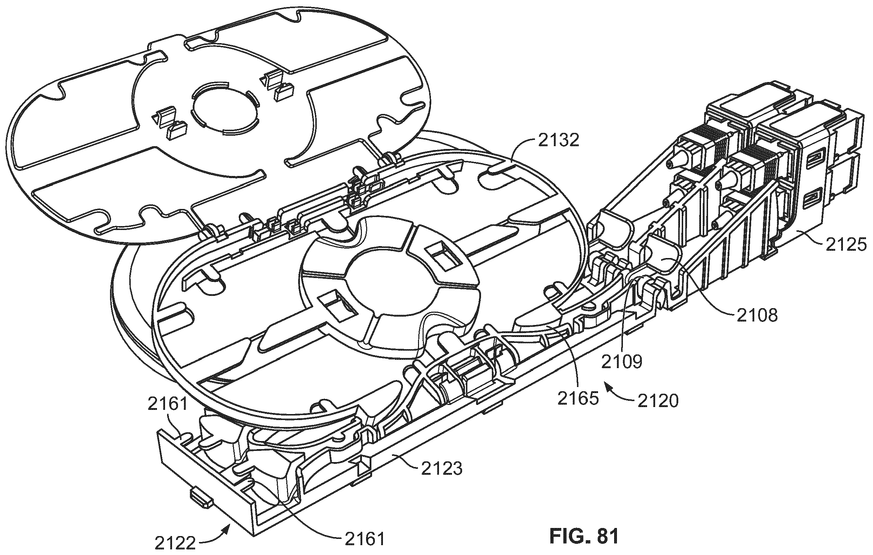

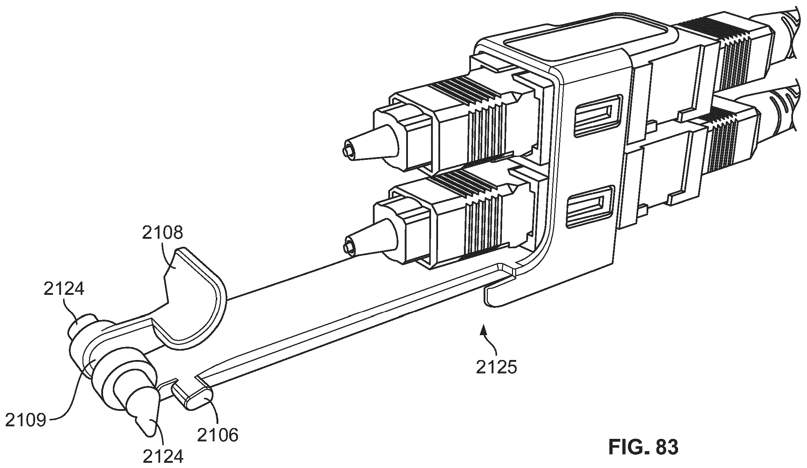

FIGS. 80-101 illustrate another example of a termination arrangement 2120 having features that are examples of inventive aspects in accordance with the present disclosure. The termination arrangement 2120 includes features similar to those of termination arrangement 1820 of FIGS. 58-60, however, with a number of differences.

The termination arrangement 2120 is similar in concept to the termination arrangement 1820 shown in FIGS. 58-60 in that at least one splice tray 2132 is integrally incorporated onto a support member 2123 of the termination arrangement 2120 and is hingable with respect to the termination arrangement 2120 along the X-axis and at least one adapter holder portion 2125 is removably mounted to the support member 2123 of the termination arrangement 2120 and is hingable with respect thereto and pivotable about the Y-axis for access.

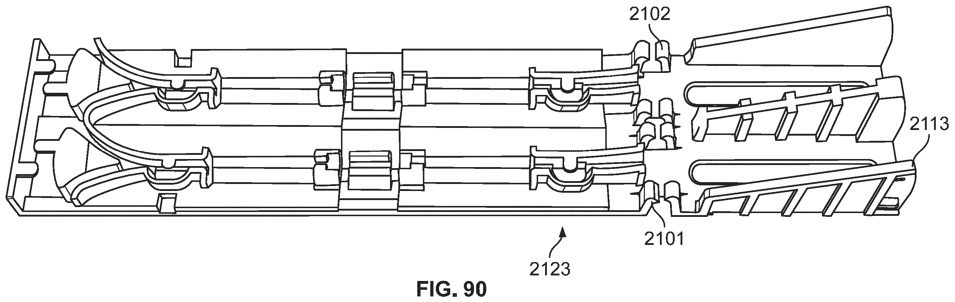

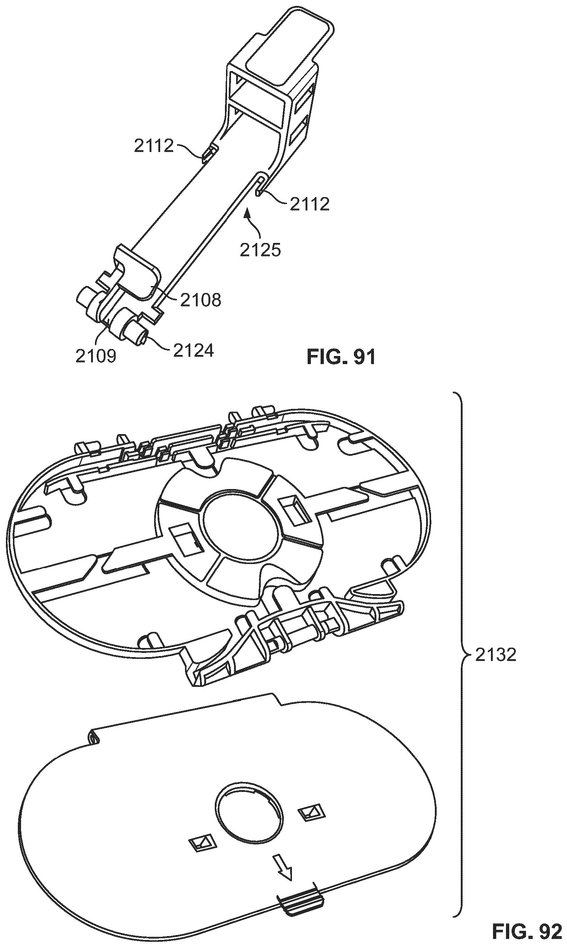

In the version of the termination arrangement 2120, the support member 2123, however, has a double-wide configuration for supporting two splice trays 2132 that are integrally incorporated onto the support member 2123 and two adapter holder portions 2125 that are separately pivotable with respect to the support member 2123. The support member 2123 is shown in isolation in FIG. 90. One of the splice trays 2132 is illustrated in isolation in an exploded configuration in FIG. 92.

As shown, each adapter holder portion 2125 of the termination arrangement 2120 is configured with a hinge pin/retainer 2124 on each side thereof that are receivable via a snap-fit interlock by spaced-apart hinge receivers 2101 located on the support member 2123. The hinge receivers 2101 are defined by elastically flexible snap hooks 2102. The cooperation of the hinge retainers 2124 and the hinge receivers 2101 allow pivotal motion for the adapter holder portions 2125. One of the adapter holder portions 2125 is shown in isolation in FIG. 91.

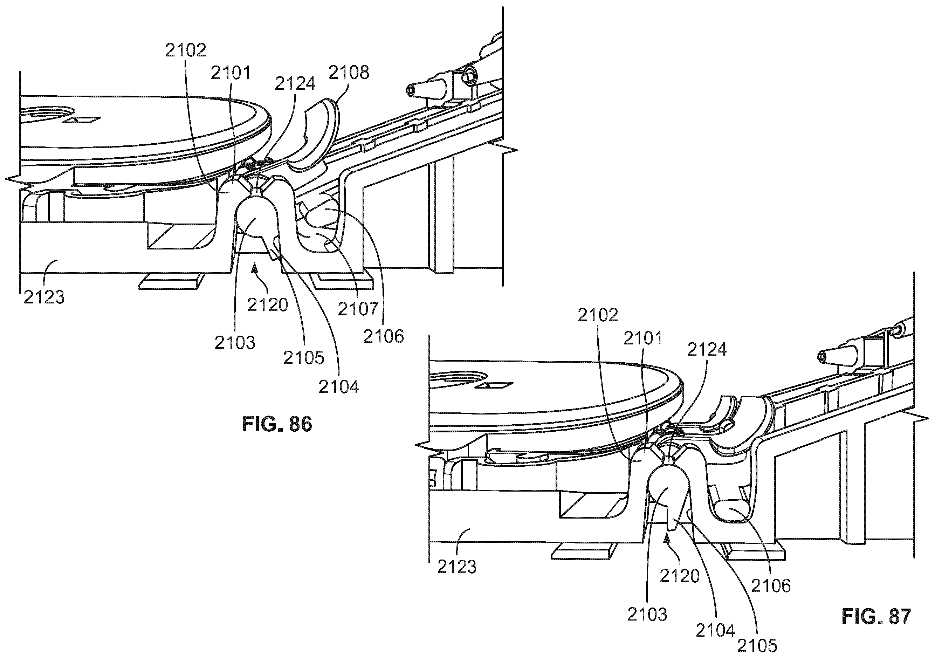

Referring to the close-up views in FIGS. 86 and 87, as shown, each hinge retainer 2124 is provided with a curved portion 2103 for allowing pivotal motion within the hinge receiver 2101. And, each hinge retainer 2124 is also provided with a secondary overpull protection tab 2104 that extends from the curved portion 2103. The secondary overpull protection tab 2104 is configured to abut internal vertical walls 2105 defined by the snap hooks 2102 of the hinge receiver 2101 to stop the retainer 2124 at a pre-specified pivoted angle. According to one example embodiment, the secondary overpull protection tab 2104 is designed to abut the snap-hook 2102 when the adapter holder portion 2125 has been pivoted about 20 degrees from the horizontal. The tab 2104 prevents or limits the retainer 2124 from being pulled past 20 degrees, which, in most examples, has proven to be an optimal angle to provide enough finger access at both sides of an adapter supported by the adapter holder portion 2125 for cleaning and inspection and minimize the amount of fiber/cable displacement or pull.

Each adapter holder portion 2125 is also configured with a rib 2106 on each side thereof that is configured to fit within a pocket 2107 defined adjacent the hinge receiver 2101 on each side of the support member 2123. The rib 2106 is designed to limit the deflection of the snap hooks 2102 defining the hinge receivers 2101 once the hinge retainers 2124 have been snap-fit into the hinge receivers 2101. The rib 2106 also absorbs any deflection forces applied on the snap hooks 2102.

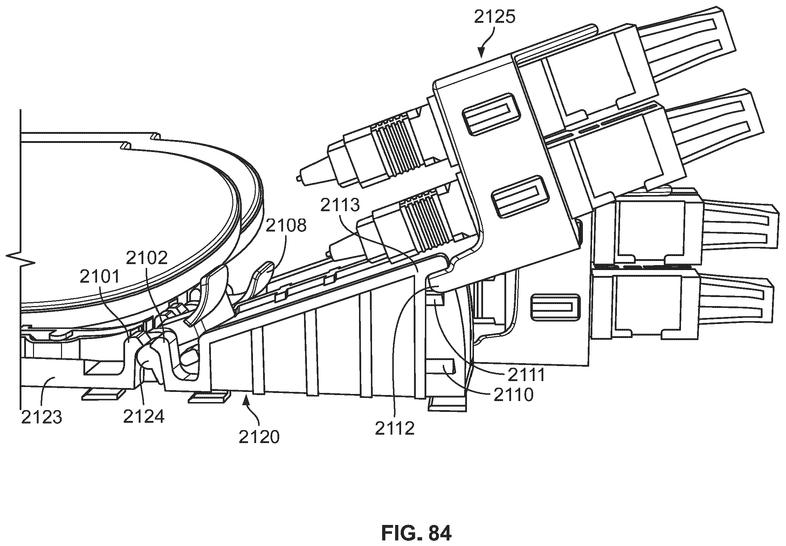

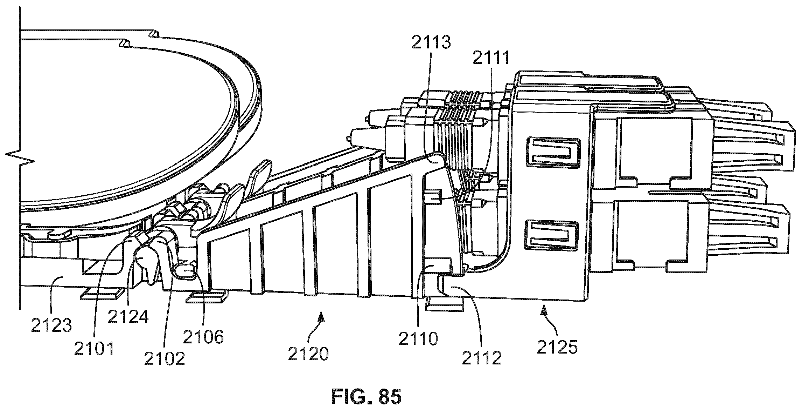

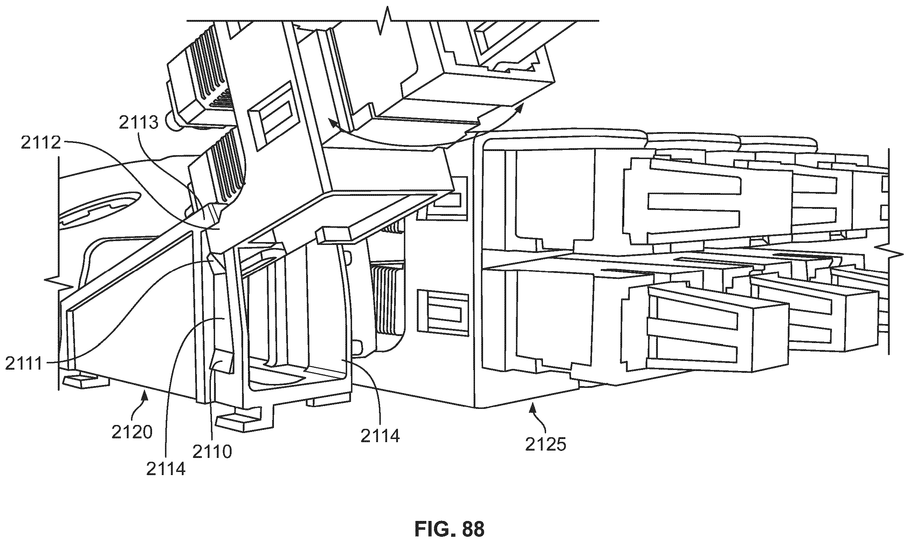

FIG. 84 is a close-up view of the termination arrangement 2120 with one of the adapter holder portions 2125 shown in a pivoted position. FIG. 85 is a close-up view of the termination arrangement 2120 of FIG. 80 with the adapter holder portions 2125 shown in a non-pivoted neutral position. FIG. 86 illustrates a close-up view of the hinge retainer 2124 of an adapter holder portion 2125 of the termination arrangement 2120 of FIG. 80, with one of the adapter holder portions 2125 shown in a pivoted position. FIG. 87 illustrates a close-up view of the hinge retainer 2124 of FIG. 86 when the adapter holder portions 2125 are at a non-pivoted neutral position. And, FIG. 88 is a close-up front perspective view of a plurality of the termination arrangements 2120 of FIG. 80 with one of the adapter holder portions 2125 shown in a pivoted position.

Referring back to FIG. 86, as shown, when the adapter holder portion 2125 is at a pivoted position, the rib 2106 allows enough spacing for the snap hooks 2102 to deflect during removal or insertion of the hinge retainers 2124. The adapter holder portion 2125 is shown in a neutral position in FIG. 87 where the rib 2106 blocks any deflection of the snap hooks 2102.

The adapter holder portion 2125 also defines a cable management structure 2108 adjacent the hinge retainer 2124. The cable management structure 2108 is configured to keep cables/fibers coming from each of the adapters downward toward the hinge point and through a cable channel 2109 that is defined between the hinge retainers 2124 on each side of the adapter holder portion 2125. In this manner, the cables/fibers are generally at the same height as the pivot axis, limiting the amount of pull or displacement on the cables/fibers.

In the example shown, the cable management structure 2108 is configured to allow cables/fibers to come in under the structure from only one side, which can provide extra side protection and retention for the cables.

From the cable channel 2109 defined by the adapter holder portion 2125, the fibers are led by cable management structures 2160 on the support member 2123 to the trays 2132 for a splice operation, similar to the termination arrangements discussed above. The cable management structures 2160 are positioned at a cable channel 2165 that is defined on the support member 2123 for routing the fibers all the way from the adapters to a second end 2122 of the support member 2123. Fibers spliced at the trays 2132 that exit the termination arrangement 2120 are managed out of the support member 2123 by further cable management structures 2161 that are positioned at the second end 2122 of the support member 2123. The cable management structures 2161 allow the fibers to lead to a right or left side from the splice trays 2132 as shown.

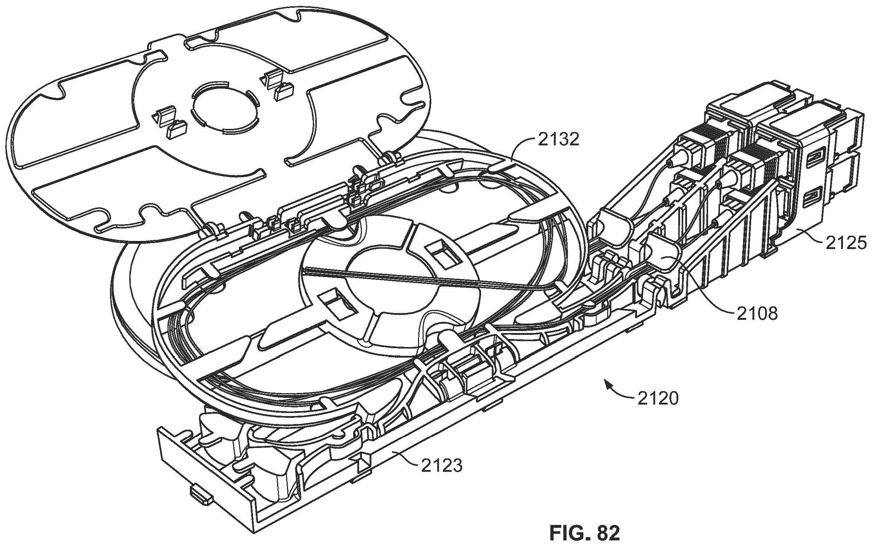

FIG. 82 illustrates the termination arrangement 2120 in a pre-terminated configuration with cabling at a factory level ready for installation.

While the adapter holder portion 2125 is configured to be pivotable about the Y-axis for access to the individual adapters, the support member 2123, in the depicted embodiment, is configured to be fixedly mounted to a telecommunications fixture such as a telecommunications drawer 1810 (as shown in FIGS. 64-65) similar to that illustrated for the termination arrangements shown in FIGS. 20-79. Each support member 2123 may include a mounting structure such as a boss or a pin for mounting to mating openings defined on the telecommunications fixture.

Still referring to FIGS. 80-101, the support member 2123 is designed at the front end with a lower snap 2110 and an upper snap 2111. Both the lower and upper snaps 2110, 2111 cooperate with hook portions 2112 defined on the adapter holder portion 2125 to keep the adapter holding portion 2125 at about 0 degrees (neutral, non-pivoted position) and about 20 degrees (pivoted position), respectively. As shown in FIG. 84, the hooks 2112 also abut a lip portion 2113 defined at the front end to prevent the adapter holder portion 2125 from being pulled to more than 20 degrees, where the lip 2113 acts as a positive stop.

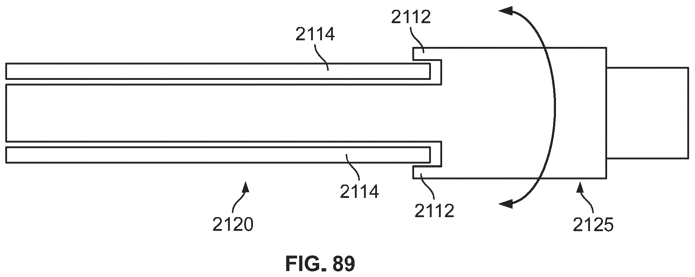

As shown diagrammatically in FIG. 89, the hooks 2112 and sidewalls 2114 defined toward the front end of the support member 2123 cooperate to prevent sideway flexing of the adapter holder portion 2125. The hooks 2112 grip around and abut the sidewalls 2114 of the support member 2123 to avoid bending of the sidewalls 2114 when putting lateral forces on the adapter holder portion 2125. FIG. 89 is a diagrammatic top view of one of the adapter holder portions 2125 of the termination arrangement 2120 showing the interaction of the hooks 2112 and the sidewalls 2114 of the support member 2123.

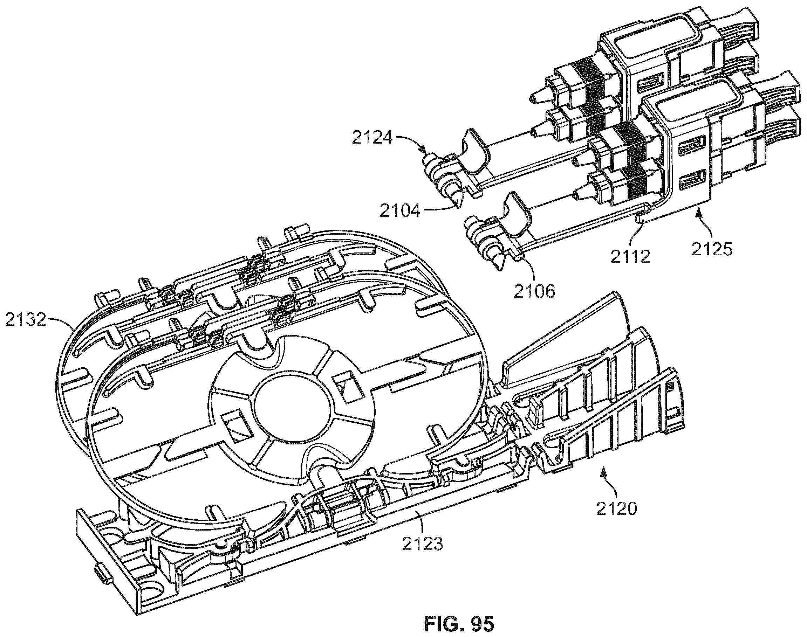

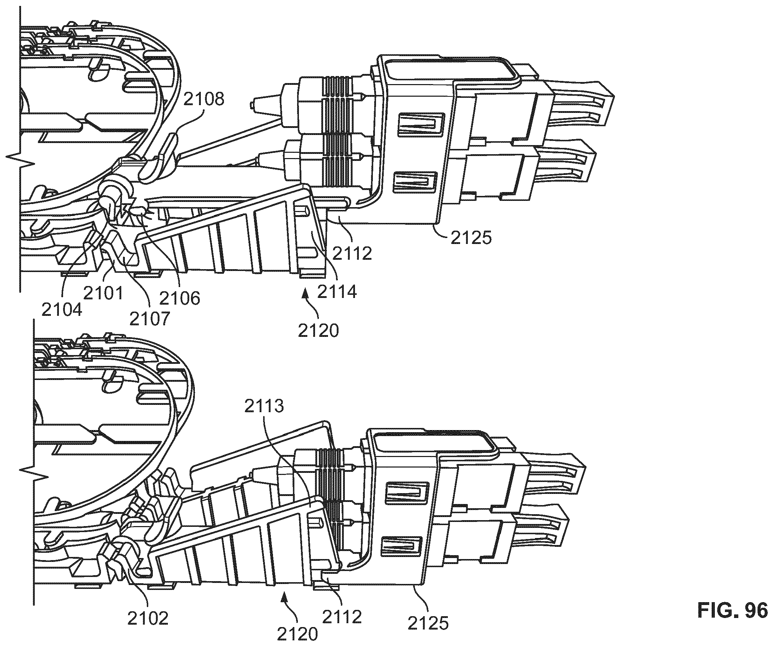

Referring now generally to FIGS. 95 and 96, the relative positioning of the hooks 2112, the hinge retainers 2124 (including the secondary overpull protection tabs 2104), and the ribs 2106 on the adapter holder portions 2125 require a certain sequence to be followed when mounting the adapter holder portions 2125 to the support member 2123. The hooks 2112 are first aligned over the sidewalls 2114 under the lip 2113 of the support member 2123 at the front end and the adapter holder portion 2125 is slid rearwardly before the hinge retainers 2124 are snapped into the snap hooks 2102. The secondary overpull protection tabs 2104 have to be angled at a predetermined angle such that the ribs 2106 will allow deflection of the snap hooks 2102 in receiving the hinge retainers 2124 into the hinge receivers 2101.

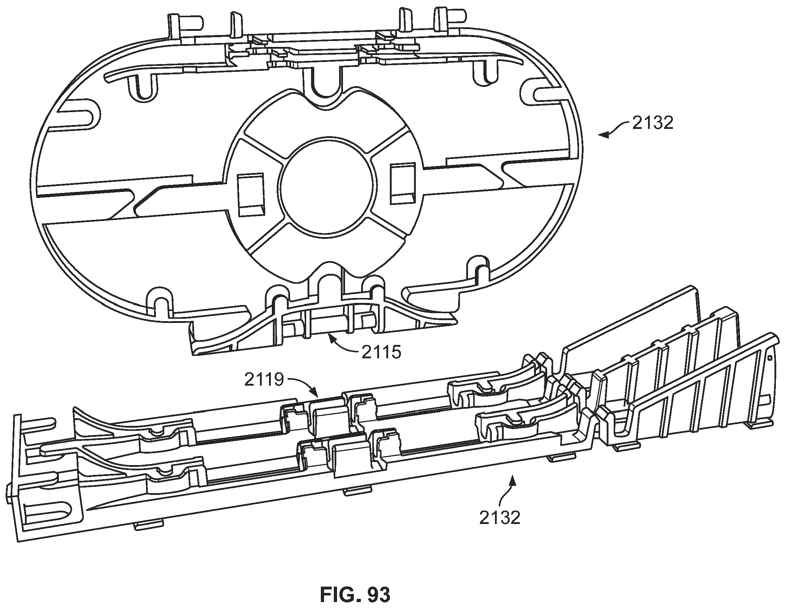

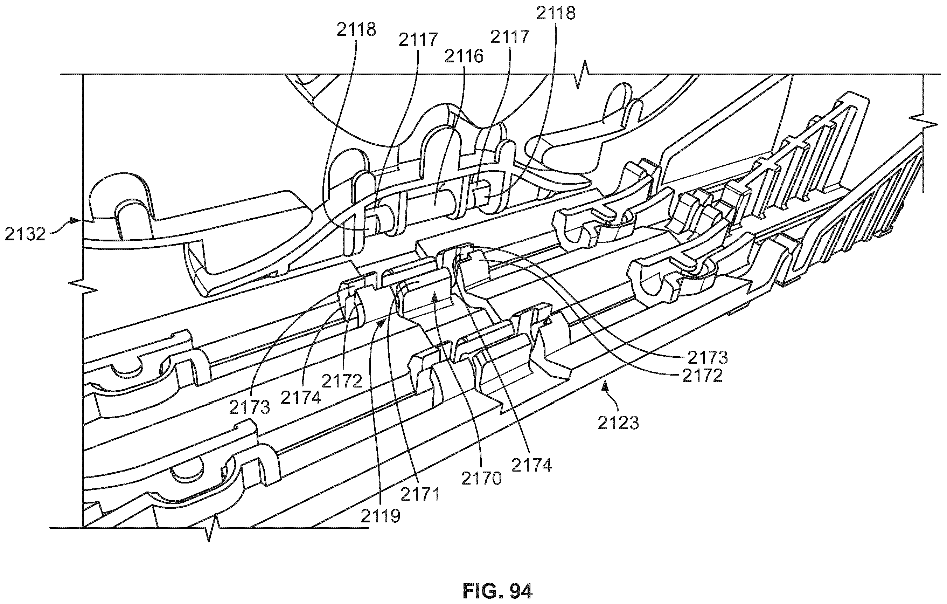

Now referring to FIGS. 93 and 94, the coupling of the splice trays 2132 to the support member 2123 is illustrated. As shown, each splice tray 2132 defines a hinge retainer 2115 that has a center rounded portion 2116 and keyed side portions 2117 defining a flat 2118. The hinge retainer 2115 is configured to be snap-fit into a hinge receiver 2119 defined on the support member 2123. The hinge receiver 2119, similar to the hinge retainer 2115 of each splice tray 2132, defines a center portion 2170 with spaced-apart elastic hooks 2171 and two side portions 2172 that are keyed for receiving the keyed side portions 2117 of the hinge retainer 2115. As shown, in the depicted example, a given splice tray 2132 has to be oriented about 90 degrees from the horizontal when being coupled to the support member 2123. The center rounded portion 2116 of the hinge retainer 2115 is simply clicked into the center portion 2170 of the hinge receiver 2119 while the flats 2118 defined on the side portions 2117 of the hinge retainer 2115 have to be aligned with matching openings 2173 defined on the side portions 2172 of the hinge receiver 2119 during insertion. Thus, the insertion of the splice trays 2132 to the support member 2123 require a snap-fit lock for the center portions 2116, 2170 of the hinge retainers and receivers, respectively, while the side portions 2117, 2172 require a sliding interaction. After the flats 2118 are slid through the matching openings 2173, the flats 2118 clear lips 2174 defined by the keyed side portions 2172 of the hinge receivers 2119 and are free to rotate within the hinge receivers 2119. Removal of the splice trays 2132 requires the trays 2132 to be pivoted to about 90 degrees for aligning the flats 2118 defined by the keyed side portions 2117 of the hinge retainers 2115 with the matching openings 2173 on the hinge receivers 2119 and performing a sliding operation.

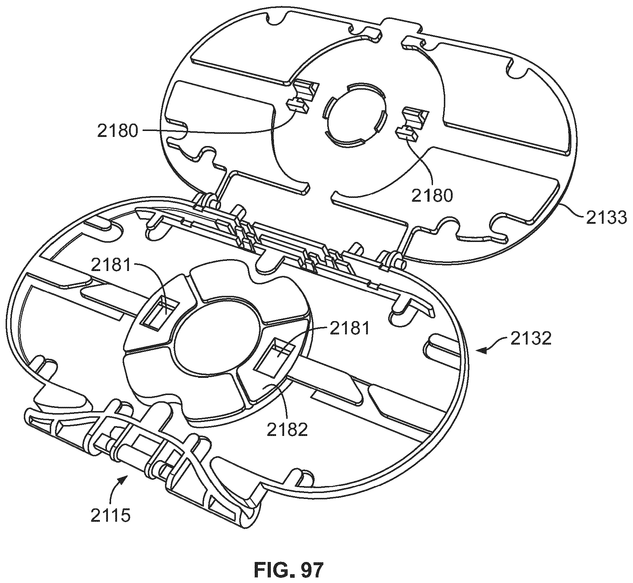

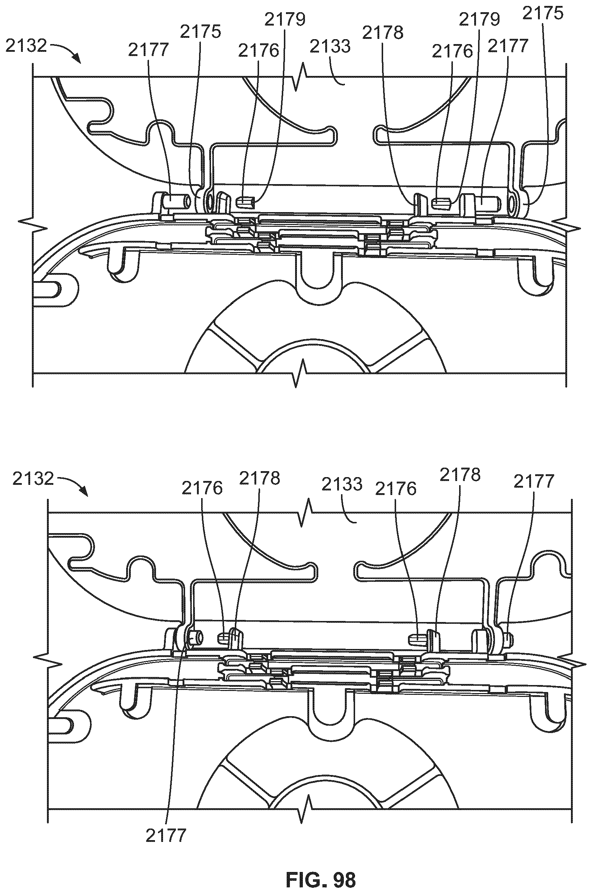

Now referring to FIGS. 97 and 98, splice tray covers 2133 of the splice trays 2132 also require a certain method in mounting the covers 2133 to the trays 2132. As shown, each cover 2133 defines hinge openings 2175 and ramped tabs 2176 that are spaced from the hinge openings 2175. Hinge pins 2177 defined on each tray 2132 are slidably inserted into the hinge openings 2175 while retention tabs 2178 defined on the trays 2132 slide over the ramped tabs 2176 and are locked in against vertical stop surfaces 2179 defined by the ramped tabs 2176. In this manner, the covers 2133 are limited from removal unless the double directional removal method is used.

As also shown in FIG. 97, the cover 2133 may include a pair of elastic snap hooks 2180 that are inserted into mating openings 2181 provided at a center cable management portion 2182 of the splice trays 2132 for keeping the cover 2133 in a closed configuration when access is not needed.

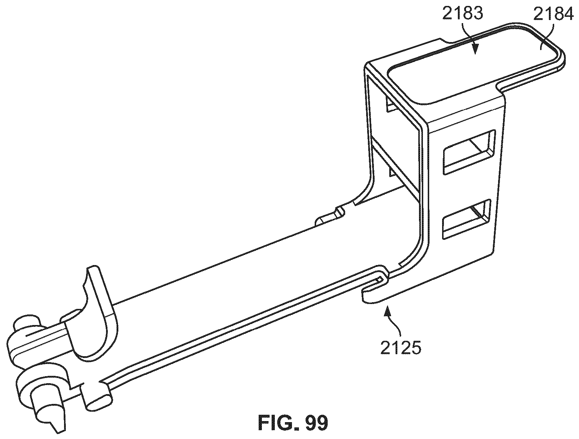

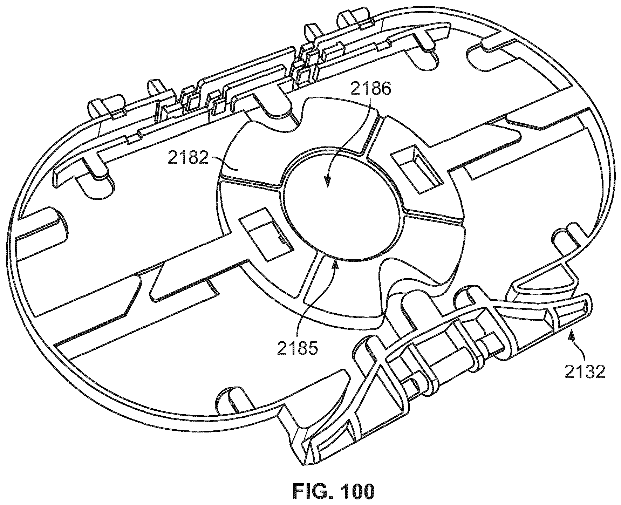

Referring now to FIGS. 99 and 100, as shown, certain portions of the termination arrangement 2120 can be used for labeling purposes to provide connectivity information regarding the termination arrangement 2120. As shown specifically in FIG. 99, a label application area 2183 may be provided at an upper face 2184 defined on the adapter holder portion 2125 of the termination arrangement 2120. And, as shown in FIG. 100, another label application area 2185 may be provided at a center portion 2186 of each tray 2132 in the middle of the cable management spool 2182 of the splice tray 2132.

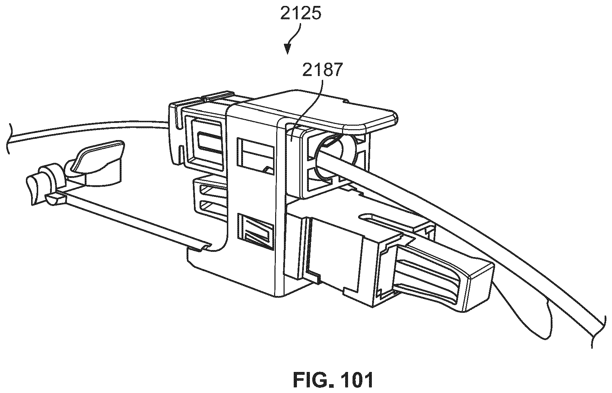

Referring now to FIG. 101, adapters at the adapter holder portion 2125 of the termination arrangement can be replaced by other devices such as, for example, a cable termination unit (CTU) 2187, as shown. The types of devices can be selected depending upon the desired connectivity. When a CTU 2187 is used, the adapter holder portion 2125 provides a bypass where a fixed splice connection is provided.

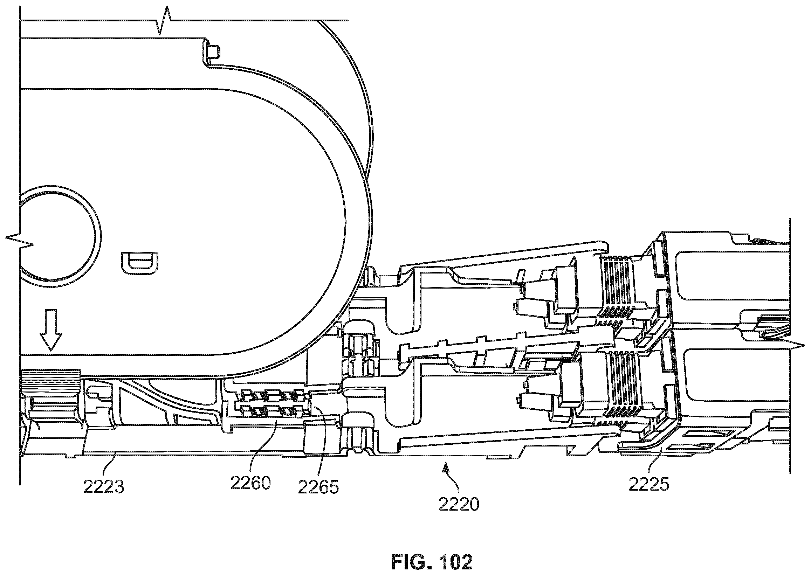

Now referring to FIG. 102, another example of a termination arrangement 2220 having certain features that are similar to those shown on the termination arrangement 2120 is shown. The termination arrangement 2220 includes a support member 2223 that is provided with a peigne feature 2260 defining a portion of a cable channel 2265 on the support member 2223. The peigne feature 2260 is designed to provide frictional retention to fiber optic cables to limit displacement or removal of such cables during either movement of the adapter holder portions 2225 or during removal of the inner connectors from the adapters positioned on the adapter holder portion 2225 of the termination arrangement 2220.

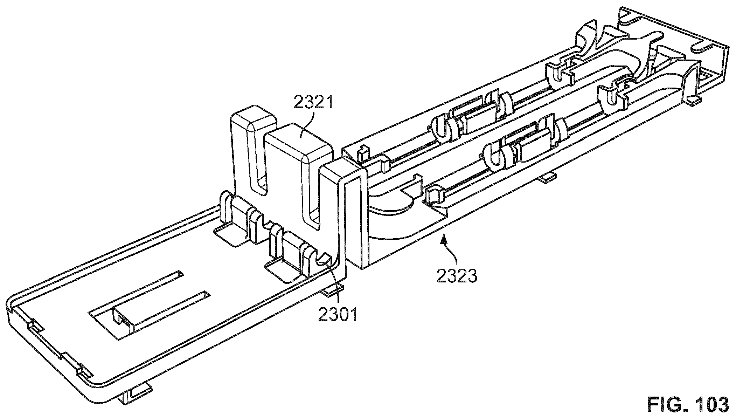

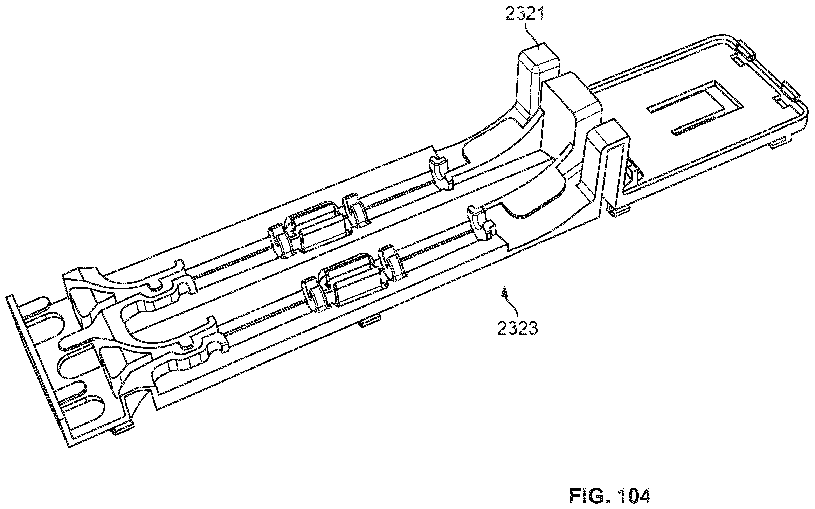

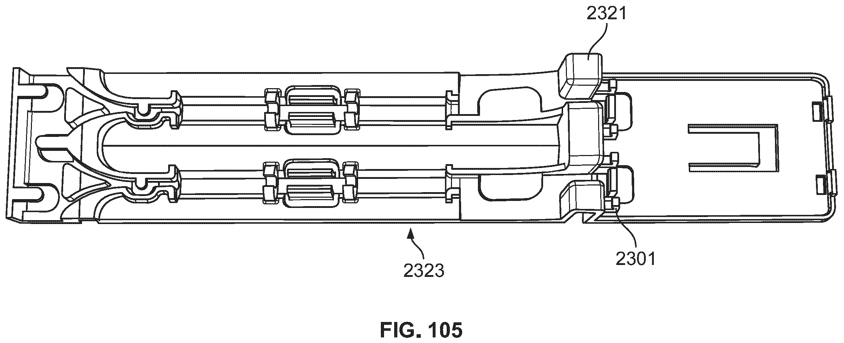

FIGS. 103-105 illustrate a variation on a support member 2323 that can be used on a termination arrangement similar to the arrangement 2120 of FIGS. 80-101 or the arrangement 2220 of FIG. 102. The support member 2323, similar to the support members 2123 and 2223, has a double-wide configuration for supporting two splice trays that are integrally incorporated onto the support member 2323 and two adapter holder portions that are removably mounted and separately pivotable with respect to the support member 2323. The support member 2323 shown in isolation in FIGS. 103-105 has a different hinge receiver 2301 configuration than those shown for the support members 2123 and 2223.

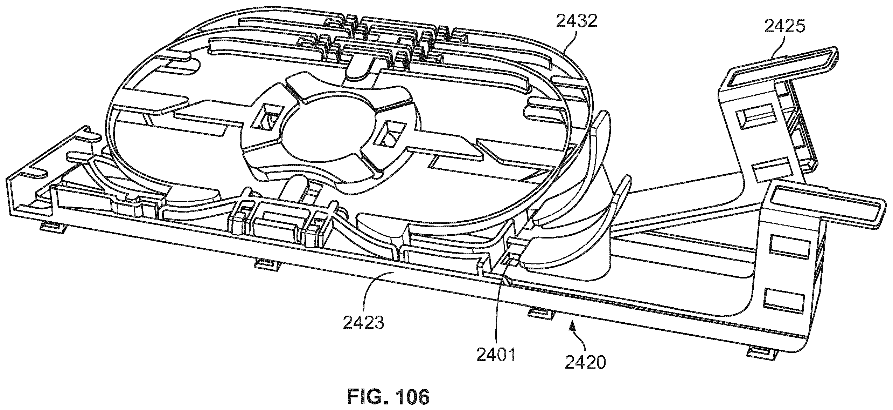

Referring now to FIG. 106, another example embodiment of a termination arrangement 2420 having certain features that are similar to those shown on the termination arrangement 2120 of FIG. 80 is illustrated. Similar to the termination arrangement 2120 of FIG. 80, the termination arrangement 2420 also includes a support member 2423 having a double-wide configuration for supporting two splice trays 2432 that are integrally incorporated onto the support member 2423 and two adapter holder portions 2425 that are separately pivotable with respect to the support member 2423.

In the example termination arrangement 2420 shown in FIG. 106, the support member 2423 is similar in configuration to the support member 2323 in that the support member 2423 extends all the way under and supports pivotable adapter holder portions 2425. The support member 2423, however, includes a generally different hinge receiver 2401 than the support member 2323 and lacks a vertical divider wall 2321 that separates the pivoting adapter holder portions and the splice tray mounting area on the support member 2323 that is shown for the termination arrangement 2320 of FIGS. 103-105.

In the termination arrangement 2420, the adapter holder portions 2425 include cable management structures 2408 adjacent the hinge retainers 2424. The cable management structures 2408 are designed to keep cables/fibers down close to the hinge point as the cables/fibers extend from each of the adapters such that the cables/fibers are generally at the same height as the pivot axis, limiting the amount of pull or displacement on the cables/fibers.

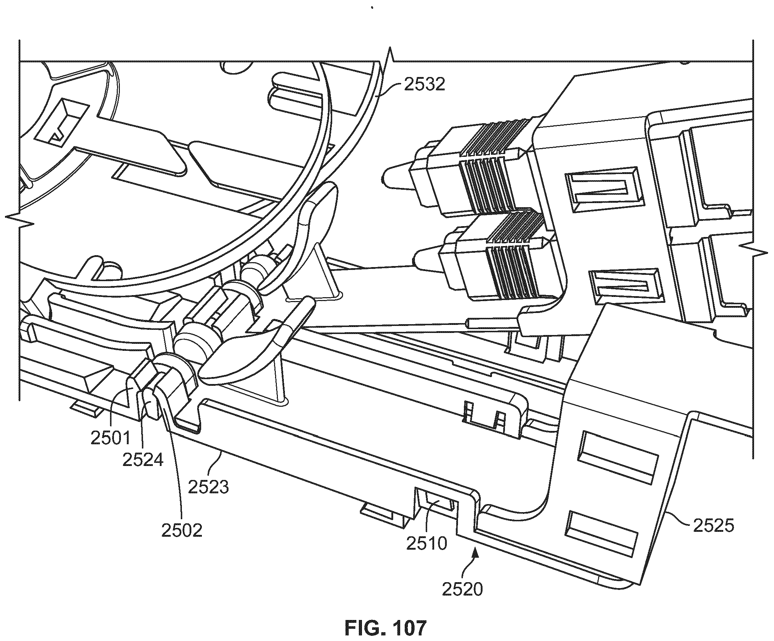

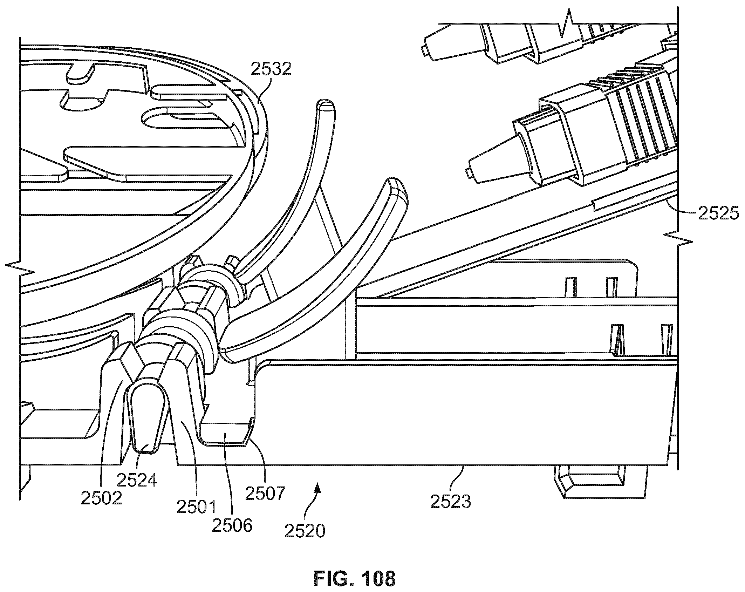

FIGS. 107-109 illustrate another example embodiment of a termination arrangement 2520 having certain features that are similar to those shown on the termination arrangement 2120 of FIG. 80. Similar to the termination arrangement 2120 of FIG. 80, the termination arrangement 2520 also includes a support member 2523 that has a double-wide configuration for supporting two splice trays 2532 that are integrally incorporated onto the support member 2523 and two adapter holder portions 2525 that are separately pivotable with respect to the support member 2523.

Hinge retainers 2524 of the adapter holder portions 2525 and hinge receivers 2501 of the support member 2523 are similar in configuration to that shown for the termination arrangement 2120. The support member 2523, similar to that shown for 2123, also includes a pocket 2507 that is configured to receive a rib 2506 defined on each side of the adapter holder portions 2525. As noted above for termination arrangement 2120, the rib 2506 is designed to limit the deflection of the snap hooks 2502 defining the hinge receiver 2501 once the hinge retainers 2524 have been snap-fit into the hinge receivers 2501. The rib 2506 also absorbs any deflection forces applied on the snap hooks 2502.

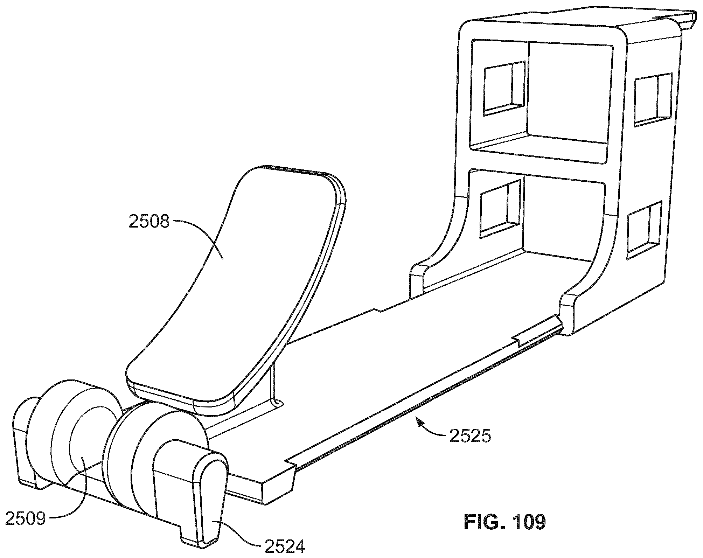

Similar to the termination arrangement 2120, the support member 2523 of termination arrangement 2520 includes snaps 2510 for keeping the adapter holder portions 2525 at a non-pivoted neutral position. FIGS. 107-108 illustrate a close-up view of the adapter holder portions 2525 of the termination arrangement 2520. FIG. 109 illustrates one of the adapter holder portions 2525 of the termination arrangement 2520 in isolation.

As shown, the adapter holder portion 2525, similar to that shown for the termination arrangement 2120, defines a cable management structure 2508 adjacent the hinge retainer 2524, where the cable management structure 2508 is configured to keep cables/fibers coming from each of the adapters down close to the hinge point and through a cable channel 2509 that is defined between the hinge retainers 2524 on each side of the adapter holder portion 2525. Again, in this manner, the cables/fibers are generally at the same height as the pivot axis, limiting the amount of pull or displacement on the cables/fibers.

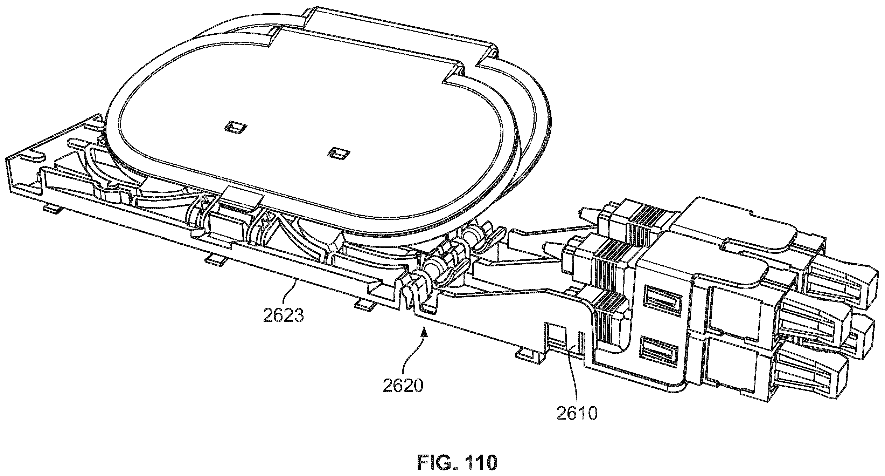

Referring now to FIGS. 110-114, another example embodiment of a termination arrangement 2620 is illustrated. The termination arrangement 2620 includes features that are similar to the termination arrangement 2520 shown in FIGS. 107-109. Similar to the termination arrangement 2520, a support member 2623 of termination arrangement 2620 includes snaps 2610 for keeping adapter holder portions 2625 at a non-pivoted neutral position. As shown, the snaps 2610 are provided as integral portions extending from raised sidewalls 2614 defined on the support member 2623. The sidewalls 2614 are raised as compared to the termination arrangement 2520 of FIGS. 107-109 to provide further protection to the fibers extending from the adapters.

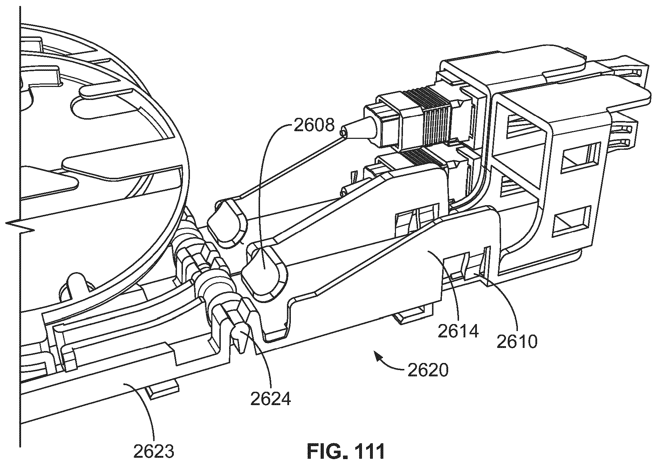

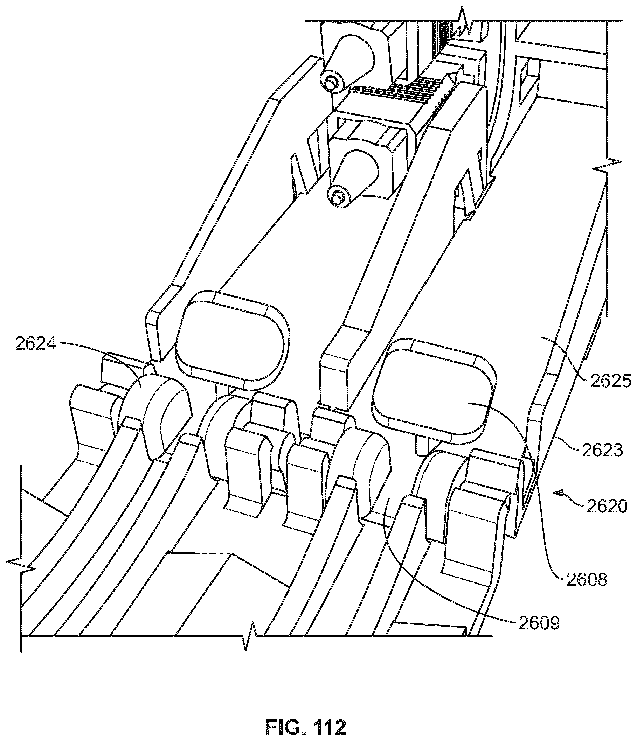

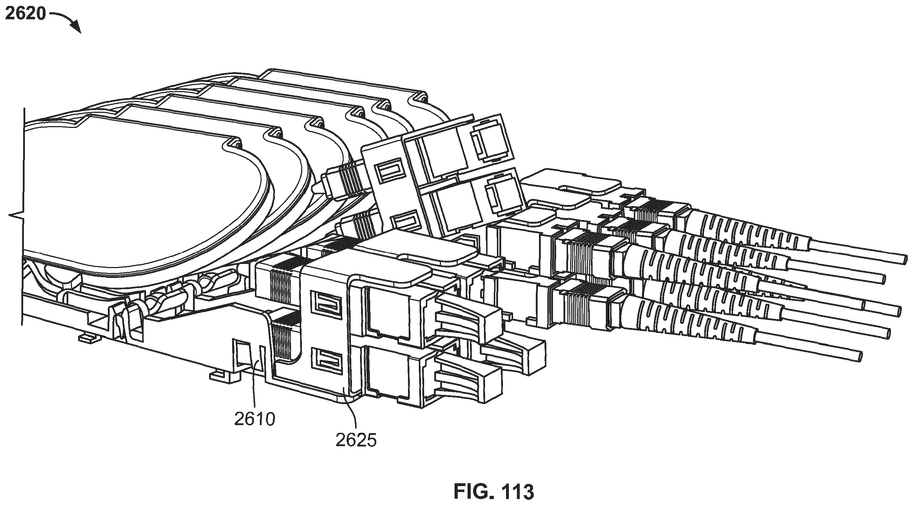

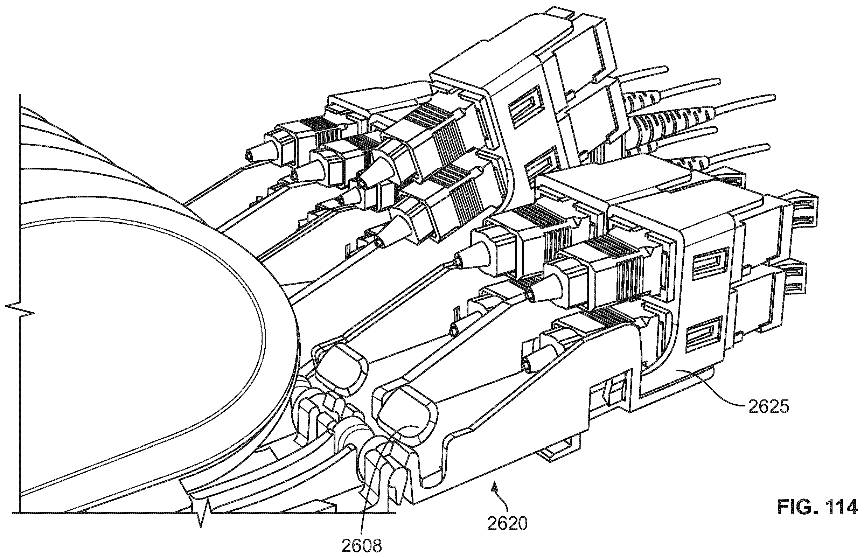

Still referring to FIGS. 110-114, each adapter holder portion 2625, similar to that shown for the termination arrangement 2520, defines a cable management structure 2608 adjacent the hinge retainer 2624 that is configured to keep cables/fibers coming from each of the adapters down toward the hinge point and through a cable channel 2609 that is defined between the hinge retainers 2624 on each side of the adapter holder portion 2625. The cable management structures 2608 of the adapter holder portions 2625 of the termination arrangement 2620, however, are smaller in design to facilitate connector access at the adapter holder portions 2625. FIGS. 111 and 112 illustrate close-up views of the adapter holder portions 2625 of the termination arrangement 2620 of FIG. 110. And, FIGS. 113 and 114 illustrate close-up views of a plurality of the termination arrangements 2620 of FIG. 110 with one of the adapter holder portions 2625 shown in a pivoted position.

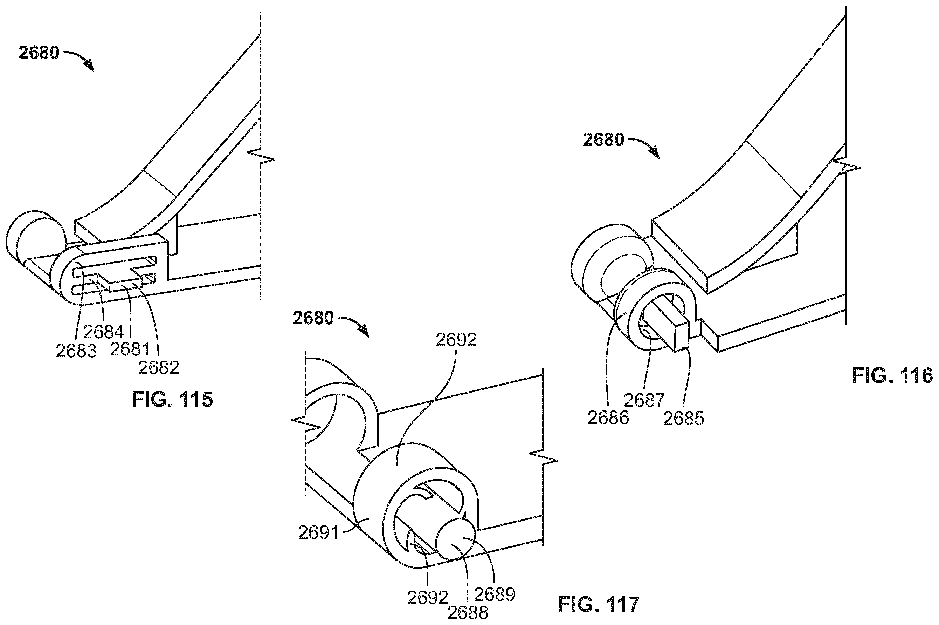

Referring now to FIGS. 115-119, a number of variations on the hinge retainer/pin parts of an adapter holder portion 2680 are shown. The types of hinge retainers that are illustrated in FIGS. 115-119 are all designed to provide self-biasing for returning pivoted adapter holder portions 2680 to a neutral position.

For example, the version of the hinge retainer 2681 illustrated in FIG. 115 includes bars 2682 that are configured to fit mating receptacles within a hinge receiver. The bars 2682 are connected to a hinge structure 2683 with arms 2684 that become elastically deformed during pivotal rotation of adapter holder portions 2680. The arms 2684 that get elastically deformed provide a bias force to return the adapter holder portions 2680 back to a neutral position.

FIG. 116 illustrates a variation where bars 2685 that are configured to fit mating receptacles in a hinge receiver are integrally connected to or molded with a hinge structure 2686. Portions 2687 that integrally connect the bars 2685 to the rest of the hinge structure 2686 are designed to be elastically deformed during pivotal rotation of the adapter holder portions 2680. The portions 2687 that get elastically deformed provide a bias force to return the adapter holder portions 2680 back to a neutral position.

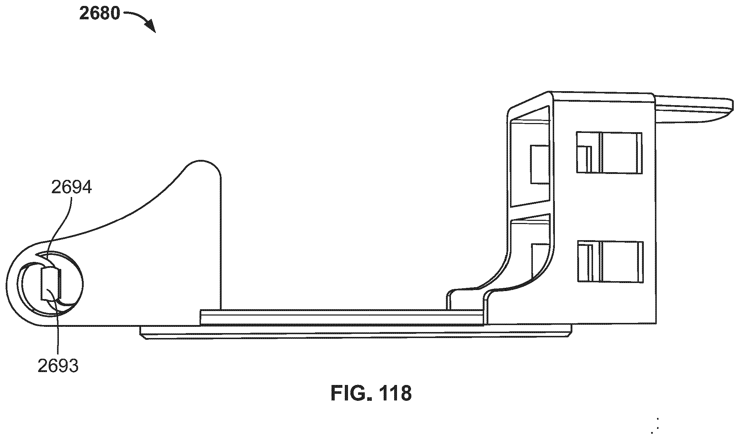

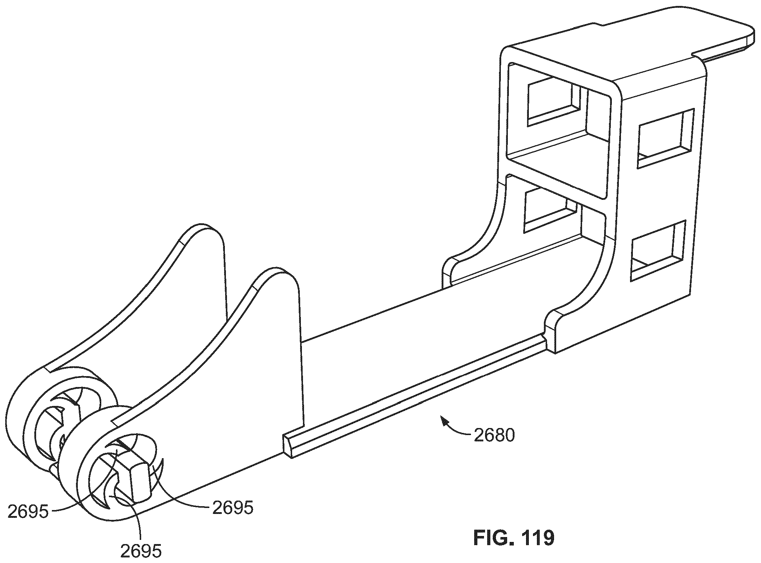

FIG. 117 generally illustrates a version of a hinge retainer 2688 where a center pivot pin 2689 is connected to a hub 2690 of a hinge structure 2691 with elastically deformable spokes 2692. FIG. 118 illustrates a version where a pin 2693 is non-circular and is connected via two elastically deformable spokes 2694, and FIG. 119 illustrates a version with three elastically deformable spokes 2695.

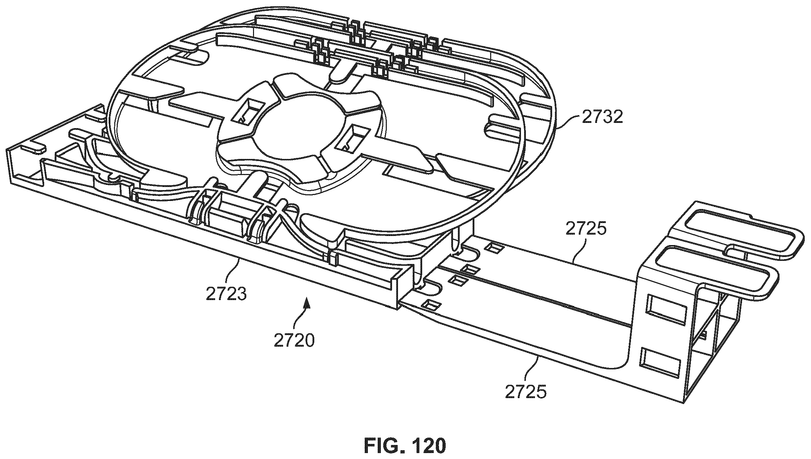

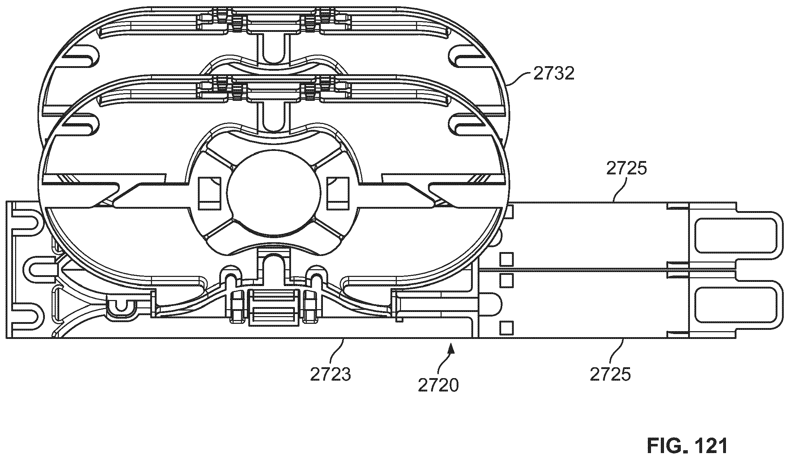

Now referring to FIGS. 120 and 121, another example of a termination arrangement 2720 having certain features that are similar to those shown on the termination arrangement of FIG. 80 is illustrated. Similar to the termination arrangement illustrated in FIG. 80, the termination arrangement 2720 also includes a support member 2723 that has a double-wide configuration for supporting two splice trays 2732 that are integrally incorporated onto the support member 2723 and two adapter holder portions 2725 that are separately pivotable with respect to the support member 2723 for access. However, the termination arrangement 2720, in contrast to the hinged adapter holder portions on the termination arrangement 2120 shown in FIG. 80, utilizes removable and elastically flexible adapter holder portions 2725 that are similar in structure and function to those shown on the termination arrangement 2020 of FIGS. 77-79.

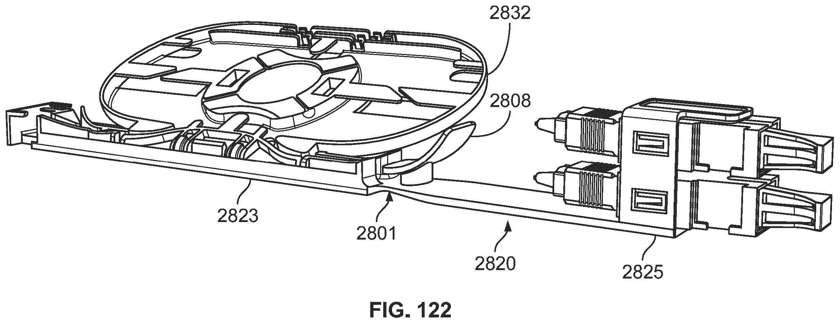

FIGS. 122-124 illustrate another example of a termination arrangement 2820. The example termination arrangement 2820 is shown as utilizing a single-wide support member 2823, a splice tray 2832 that is integrally incorporated onto the support member 2823, and a single adapter holder portion 2825. However the features shown are fully applicable to double-wide versions discussed above.

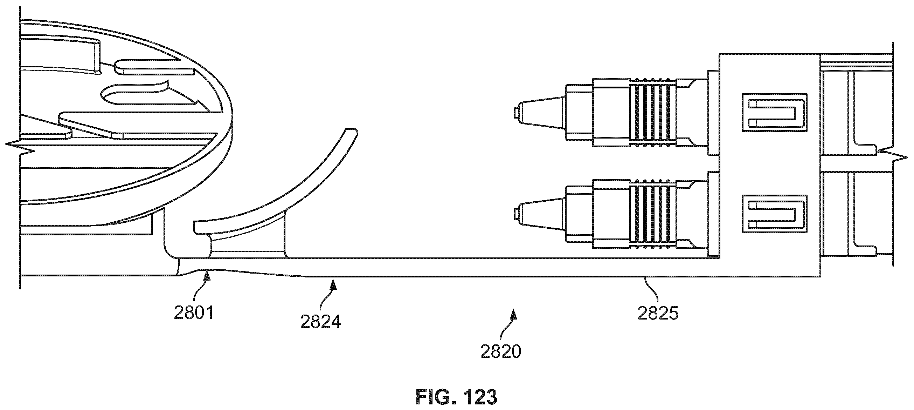

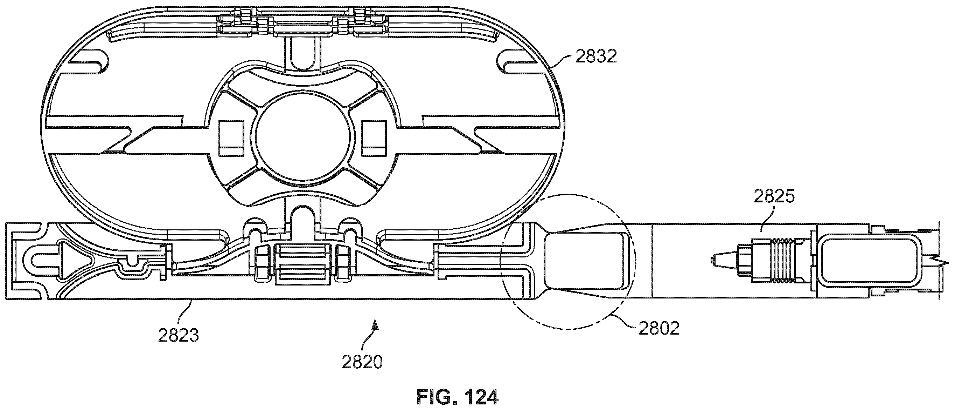

As shown, the adapter holder portion 2825 of the termination arrangement 2820 is integrally formed or molded with and elastically flexible with respect to the support member 2823. FIG. 123 illustrates a side view of the termination arrangement 2820 showing a close-up of a flexible portion 2824 of the support member 2823 for pivoting the adapter holder portion 2825, where the flexible portion 2824 is provided with a reduced thickness 2801 to simulate a hinge. FIG. 124 illustrates a top view of the termination arrangement 2820 showing a reduced width 2802 of the support member to simulate a hinge and to facilitate the elastic flexing. In the example of the termination arrangement 2820 shown, a cable management structure 2808 is provided at the reduced thickness and width portions 2801, 2802 of the support member 2823. The cable management structure 2808 is designed to keep cables/fibers coming from each of the adapters down toward the hinge point and lead the fibers through a cable channel 2865 toward splice trays 2832. The cable management structure 2808 is designed to retain the cables/fibers close to the hinge point, generally around the same height as the pivot axis, to limit the amount of pull or displacement on the cables/fibers during pivotal movement of the adapter holder portion 2825.

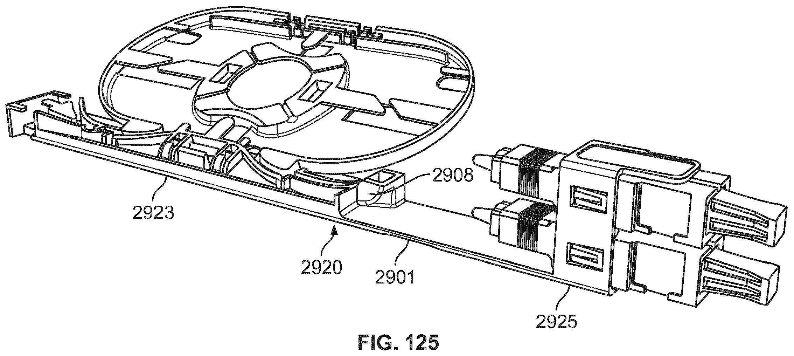

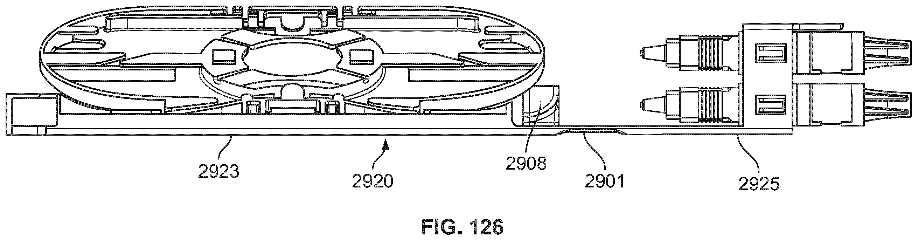

FIGS. 125-126 illustrate another example of a termination arrangement 2920 having certain features that are similar to those shown on the termination arrangement 2820 of FIGS. 122-124. Similar to the termination arrangement 2820, an adapter holder portion 2925 of the termination arrangement 2920 is integrally molded with and elastically flexible with respect to a support member 2923. However, in the termination arrangement 2920, a cable management structure 2908 is provided at a position that is set farther back from a reduced thickness portion 2901 that defines a hinge point. In this manner, the hinge point is positioned in the middle of the portion of the support member 2923 that holds the adapters and the cable management structure 2908, where these structures are supported by full thickness portions of the support member 2923.

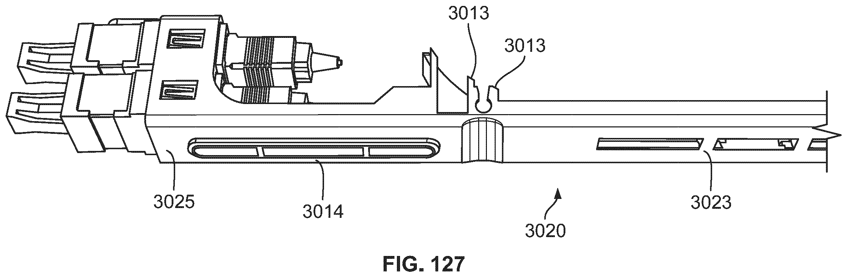

FIG. 127 illustrates yet another example of a termination arrangement 3020 having certain features that are similar to those shown on the termination arrangements 2820 and 2920. Similar to the termination arrangements 2820 and 2920, an adapter holder portion 3025 of the termination arrangement 3020 is integrally molded with and elastically flexible with respect to a support member 3023. However, the support member 3023 defines spaced-apart flex stop portions 3013 that are positioned on each side of a flex point. The flex stop portions 3013 are configured to abut each other to provide a hard stop when the adapter holder portion 3025 has been pivoted to a pre-specified angle. In the examples given, the pre-specified angle may be around 20 degrees as noted above.

As shown in FIG. 127, the adapter holder portion 3025 that is elastically pivotable with respect to the rest of the support member 3023 may also be provided with a stiffening rib 3014 for additional strength to this area.

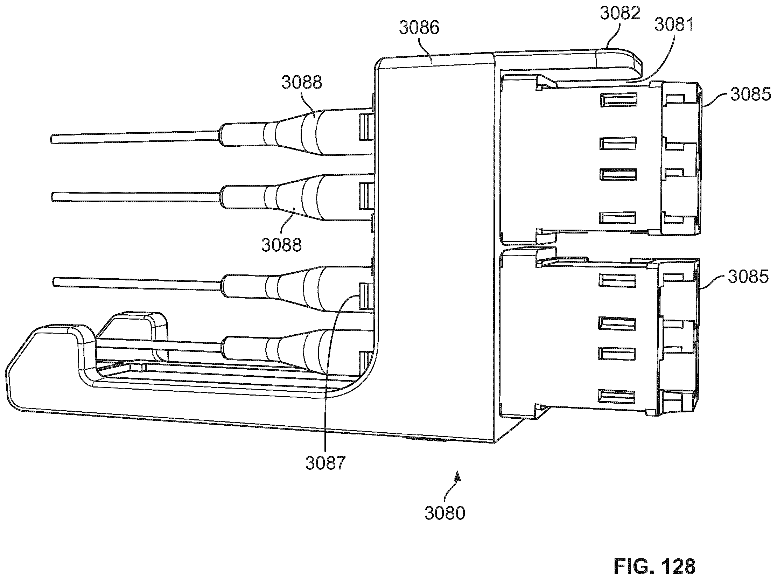

FIGS. 128-130 illustrate a variation on the adapter holder portion 3080 that can be mounted on termination arrangements such as those shown in FIGS. 80-114. As depicted in FIGS. 128-130, the adapter holder portion 3080 is designed to receive adapters 3085 in a vertical orientation, as opposed to a horizontal orientation shown in, for example, FIGS. 80-127.

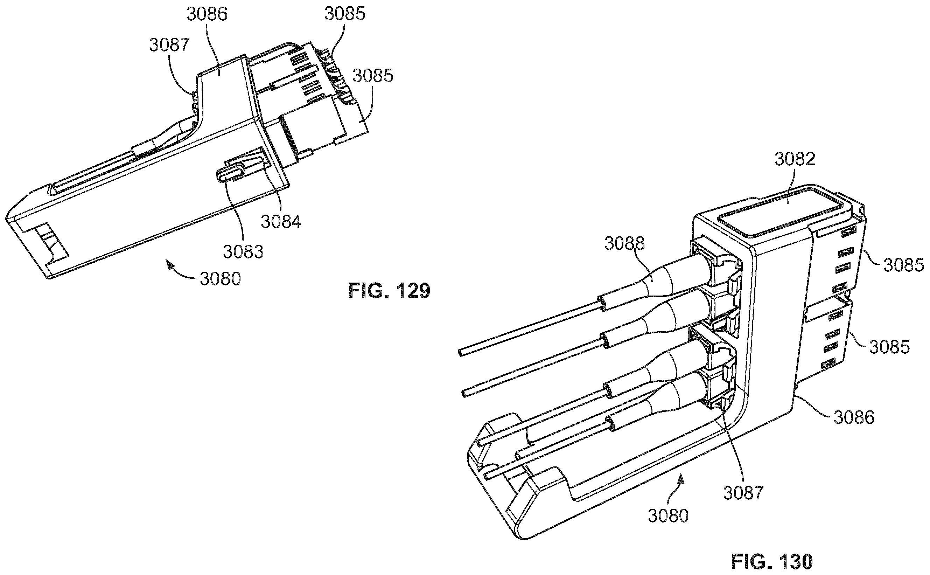

FIG. 128 shows a side view of the adapter holder portion 3080 illustrating a gap 3081 that may be provided under a label plate 3082 for facilitating access. FIG. 129 shows the adapter holder portion 3080 from a bottom perspective view, illustrating a tab 3083 that might be provided at the bottom of the adapter holder portion 3080 that is configured to receive a latching clip 3084 that can be provided on the adapters 3085. As shown, the latching clip 3084 may be designed to be asymmetric for keeping right-hand and left-hand adapter versions separate and providing a keying function during insertion into the adapter holder portion 3080.

When the adapters 3085 are stacked in a vertical orientation as shown in FIGS. 128-130, the overall width of the adapter holder portion 3080, the support member, and thus the termination arrangement can be reduced. According to certain examples, when the adapters 3085 are vertically stacked, the overall width may be reduced by 3mm. The thickness of sidewalls 3086 of the adapter holder portions 3080 may have to be adjusted to accommodate latches 3087 of connectors 3088 being mounted to the adapters 3085 such that the latches 3087 of the sideway-mounted connectors 3088 do not extend outward past the sides of the adapter holder portions 3080 to create a snag issue.

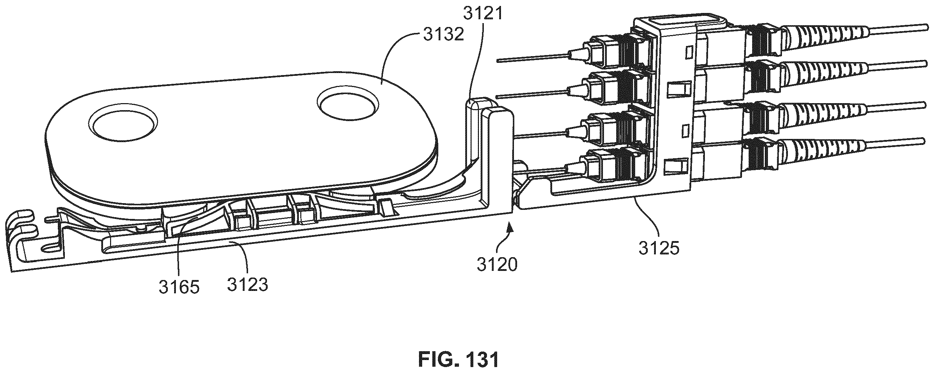

FIG. 131 illustrates another example of a termination arrangement 3120. The termination arrangement 3120 includes certain features that are similar to those shown on the termination arrangement 1820 of FIG. 58 of the present application. The termination arrangement 3120 includes a splice tray 3132 integrally incorporated onto a support member 3123 of the termination arrangement 3120, where an adapter holder portion 3125 is separately removable and pivotable with respect to the support member 3123. In the termination arrangement 3120, the adapter holder portion 3125 is configured to receive four adapters stacked in a horizontal orientation, similar to one of the versions shown in FIG. 76. The support member 3123 of the termination arrangement 3120 is shown with a vertical divider wall 3121 that separates the pivoting adapter holder portion 3125 and a splice tray mounting area on the support member 3123. It should be noted that the height of such a divider wall 3121 may depend on the height of the adapter stack (and the number of adapters) used on the adapter holder portion 3125. The design of the support member 3123 including the width of fiber channels 3165 and the tray configurations and numbers thereof may also depend on the number of adapters provided on the adapter holder portion 3125.

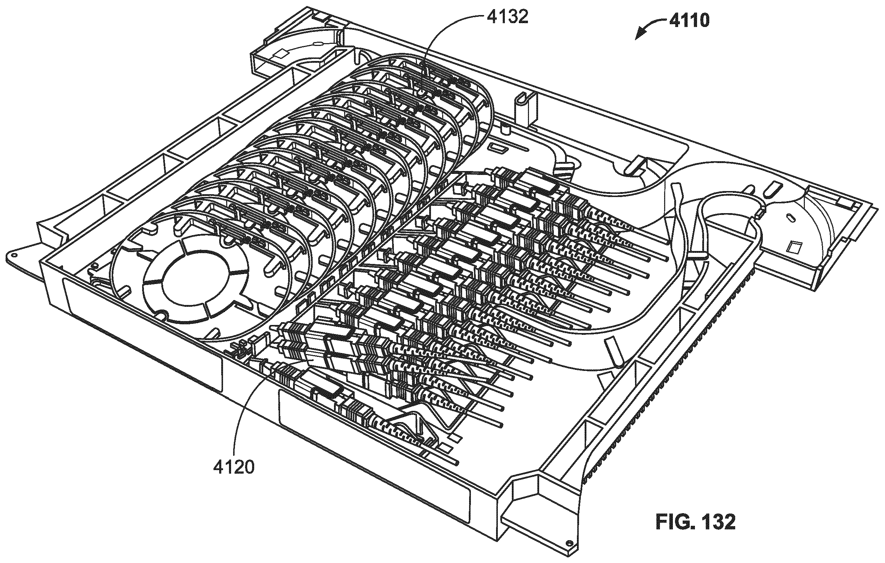

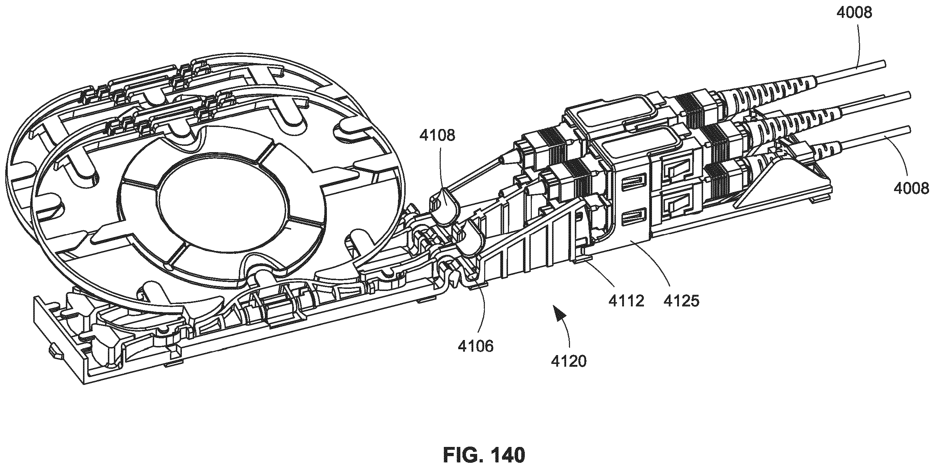

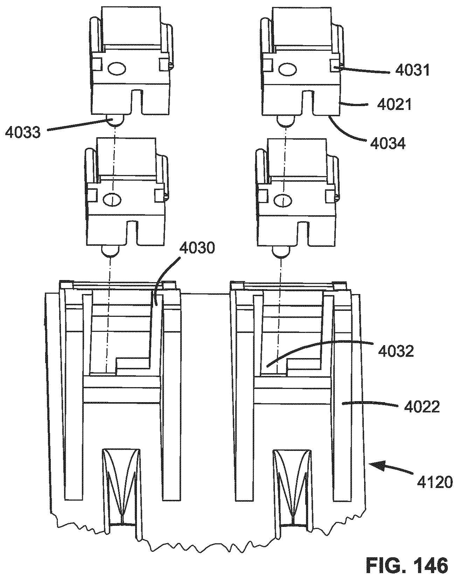

FIGS. 132-152 generally illustrate another example embodiment of a termination arrangement 4120 having certain features that are examples of inventive aspects according to the principles of the present disclosure. The termination arrangement 4120, while similar in certain aspects to the termination arrangements of FIGS. 80-131, includes features that are examples of inventive aspects the details of which will be discussed further.

A plurality of the termination arrangements 4120 are shown as being mounted in a telecommunications drawer 4110 similar to those shown in FIGS. 21-24, 30-38, 40, 52-56, 64, and 65. It should be noted that the drawer 4110 may form part of a telecommunications distribution element similar to those described in PCT Publication Nos. WO 2016/156611 and WO 2020/148296.

Referring to FIGS. 132-138 and 144, the termination arrangements 4120 are shown as being provided in a stacked arrangement extending from a front 4001 of the drawer 4110 toward a back 4002 of the drawer 4110.

As will be discussed in further detail below, the termination arrangement 4120 is similar in concept to the termination arrangement 2120 shown in FIGS. 80-101 in that at least one splice tray 4132 is integrally incorporated onto a support member 4123 of the termination arrangement 4120 and is hingable with respect to the termination arrangement 4120 along the X-axis (as illustrated diagrammatically in FIG. 52) and at least one adapter holder portion 4125 is removably mounted to the support member 4123 of the termination arrangement 4120 and is hingable with respect thereto and pivotable about the Y-axis for access (as illustrated diagrammatically in FIG. 52).

In the version of the termination arrangement 4120 shown, the support member 4123 has a double-wide configuration for supporting two splice trays 4132 that are integrally incorporated onto the support member 4123 and two adapter holder portions 4125 that are separately pivotable with respect to the support member 4123.

It should be noted that all of the concepts discussed herein for the termination arrangement 4120 are also applicable to single-wide versions.

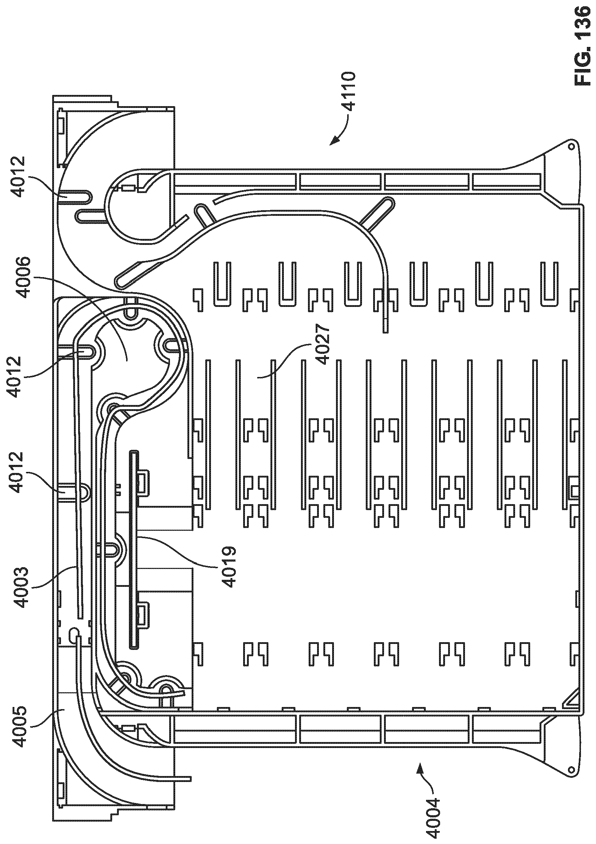

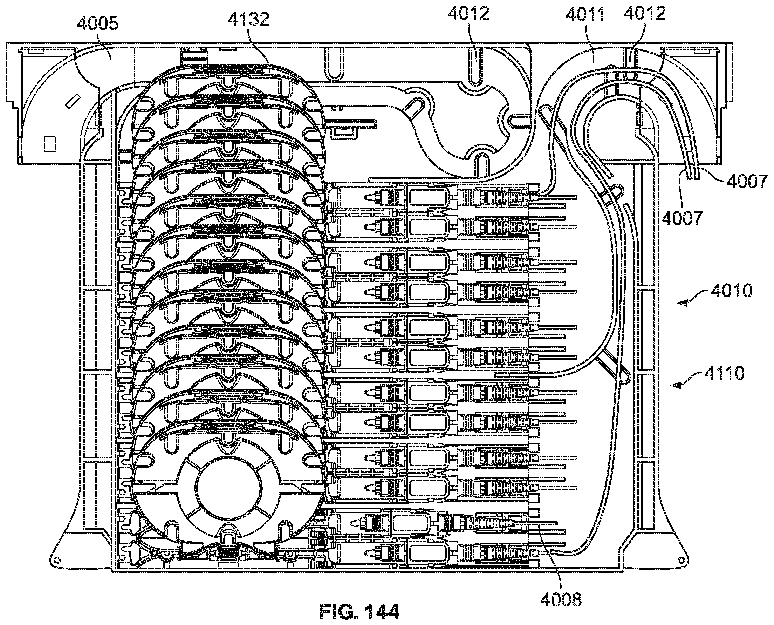

Referring to FIG. 136, as shown, incoming fibers 4003 (e.g. 900 micron) to be spliced at the splice trays 4132 may enter the drawer 4110 at a left side 4004 of the drawer 4110. After being routed within a cable-entry channel 4005, around a radius-limiting spool 4006, the fibers 4003 are led toward each of the termination arrangements 4120 provided in a stacked arrangement within the drawer 4110 for splicing. As shown in FIG. 144, outgoing fibers 4007 (either in the form of connectorized pigtails 4008 (e.g., 900 micron) or pass-through fibers 4009 (e.g., 900 micron) that have been directly spliced to the incoming fibers 4003 within the trays 4132 are led out of a right side 4010 of the drawer 4110 after being guided through a cable-exit channel 4011.

The drawer 4110, as shown, may include cable management fingers 4012 at various locations therewithin that extend partially into the cable-entry and cable-exit channels 4005, 4011 to manage and retain the fibers within the channels.

Referring now to FIGS. 132-144, similar to the versions discussed above, each termination arrangement 4120 may include mounting features 4168 at a bottom 4212 of the support member 4123 for removable mounting to a telecommunications fixture such as the drawer 4110. As shown, the mounting features 4168 may include dove-tail shaped members 4126 along the bottom 4212 of the support member 4123 that are configured to cooperate with respective slots 4013 provided on the drawer 4110 for insertion and slidable locking of the termination arrangements 4120 to the drawer 4110.

Once the termination arrangements 4120 are mounted within the drawer 4110 in a stacked arrangement, a cover 4014 may be placed over all of the splice trays 4132. The cover 4014 is provided both to protect the splices within the trays 4132 and to act as part of a safety measure to prevent closure of the drawer 4110 if any of the splice trays 4132 are still in a pivoted, access position. Placement of the cover 4014 over the splice trays 4132 when the splice trays 4132 are all in a flat position ensures that the drawer 4110 is ready to be slidably moved to a closed position and that none of the splice trays 4132 are exposed to potential damage.

The cover 4014 and the drawer 4110 may include cooperating latching features for removable mounting of the cover 4014. For example, the cover 4014 may include tabs 4015 that are inserted into recesses 4016 provided at front and rear walls 4017, 4018 of the drawer 4110 to provide a snap-fit interlock.

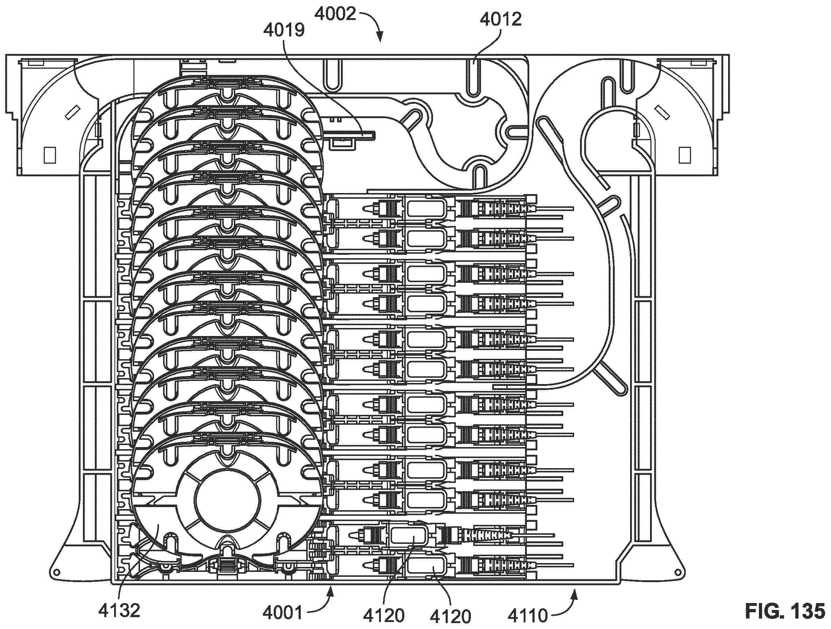

In FIGS. 132 and 135, the drawer 4110 is shown populated at full capacity with all of the termination arrangements 4120 mounted therein. In the depicted embodiment, the drawer 4110 is configured to support six double-wide termination arrangements 4120. Each termination arrangement 4120 includes two splice trays 4132 for a total of twelve splice trays 4132 within the drawer 4110. Each splice tray 4132 provides fibers to two adapters 4085 (e.g., SC format) mounted in a stacked arrangement on the adapter holder portion 4125, providing a total of twenty-four connections within a drawer 4110. Since each depicted termination arrangement 4120 includes two hingedly attached adapter holder portions 4125, each termination arrangement 4120 provides for four connections.

As noted above and as will be discussed in further detail below, the fibers that are spliced at the exit side of the splice trays 4132 may be routed out of the drawer 4110 by being part of a pair of connectorized pigtails 4008 that are mated through the adapters 4085 on the adapter holder portions 4125 or may be provided as pass-through fibers 4009 that do not use the adapters 4085.

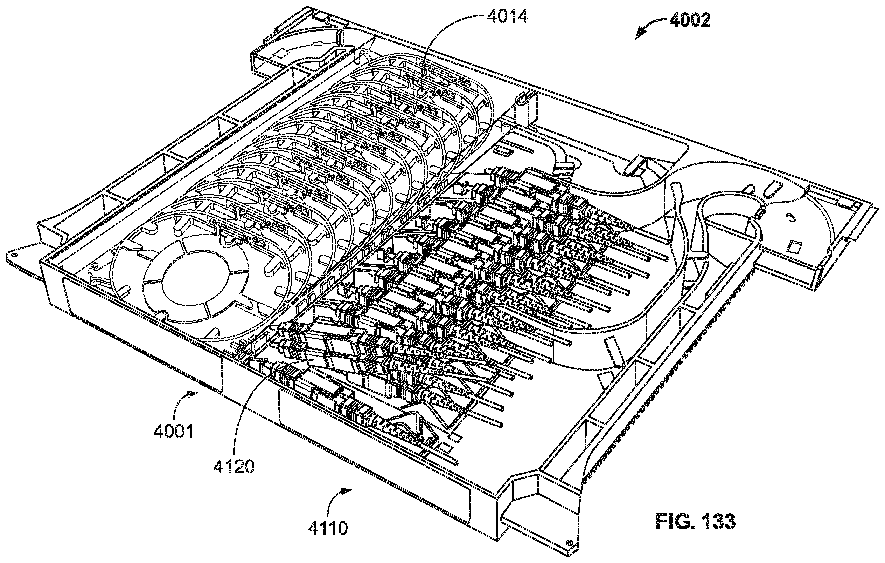

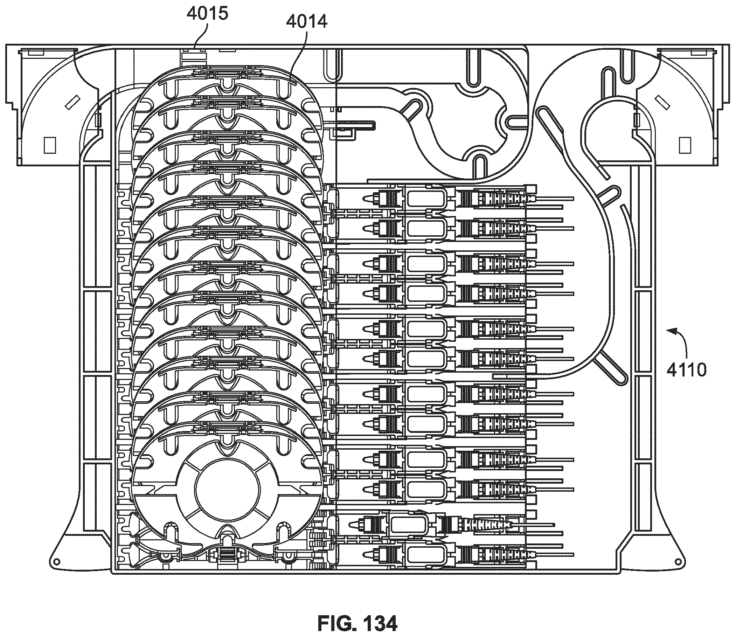

FIGS. 133 and 134 illustrate the drawer 4110 with the cover 4014 mounted for protecting the splice trays 4132 of the termination arrangements 4120.

FIG. 136 shows the drawer 4110 in an empty configuration illustrating an example cable routing for the incoming fibers 4003. FIG. 144 illustrates an example cable routing for the outgoing fibers 4007.

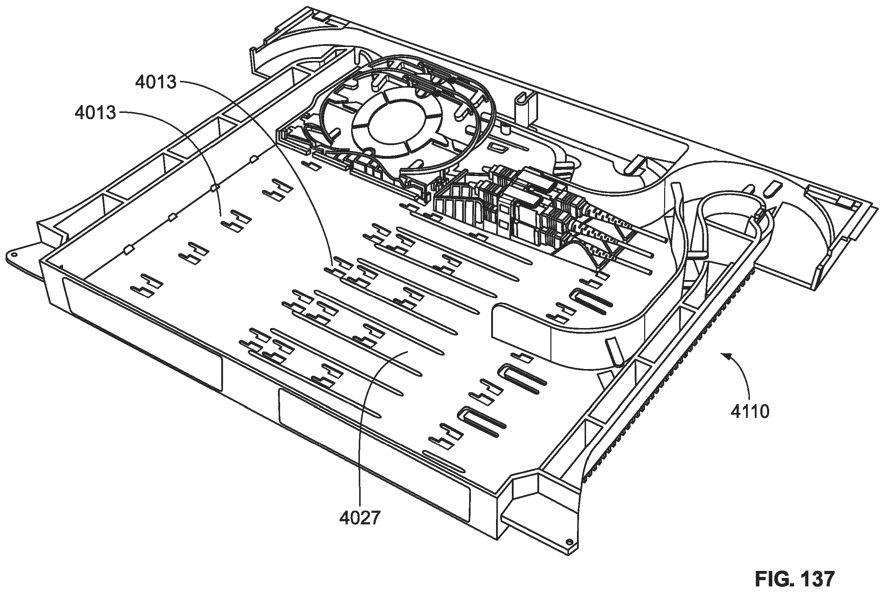

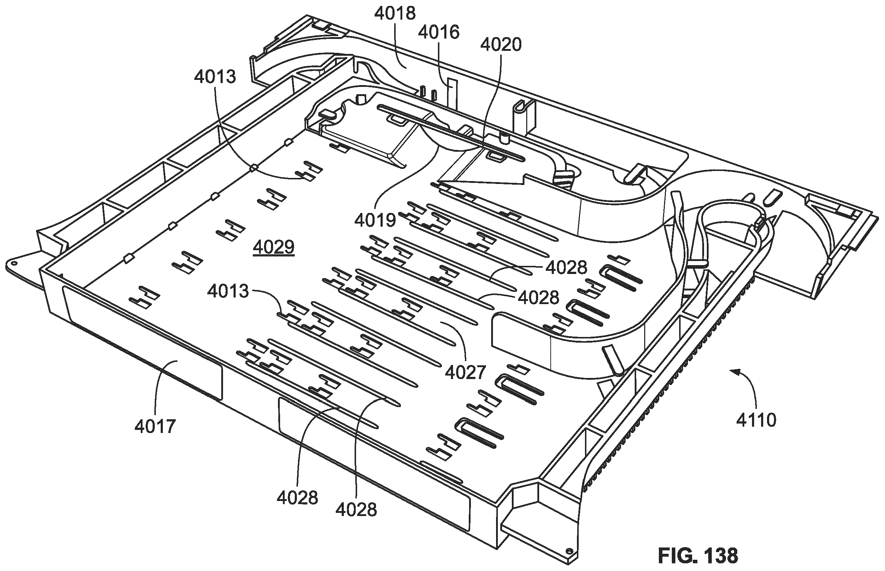

FIG. 137 shows the drawer 4110 in a partially empty configuration to illustrate the slots 4013 that are configured to cooperate with the dove-tail shaped members 4126 of the termination arrangements 4120 for slidable locking to the drawer 4110. FIG. 138 shows the drawer 4110 in a completely empty configuration to illustrate some of the latching features on the drawer 4110 (e.g., recesses 4016) for removable mounting of the cover 4014.

Still referring to FIG. 138, another feature that is shown in the empty drawer 4110 is a fiber routing tool 4019 that may be provided as part of the drawer 4110. As shown, the fiber routing tool 4019 is a hand-held, elongate member that can be used to reach and manipulate fibers in certain areas within the drawer 4110 where finger access by a user may be limited. The fiber routing tool 4019 may be provided as part of the drawer 4110, removably snap-fit within a tool pocket 4020 located toward the back 4002 of the drawer 4110.

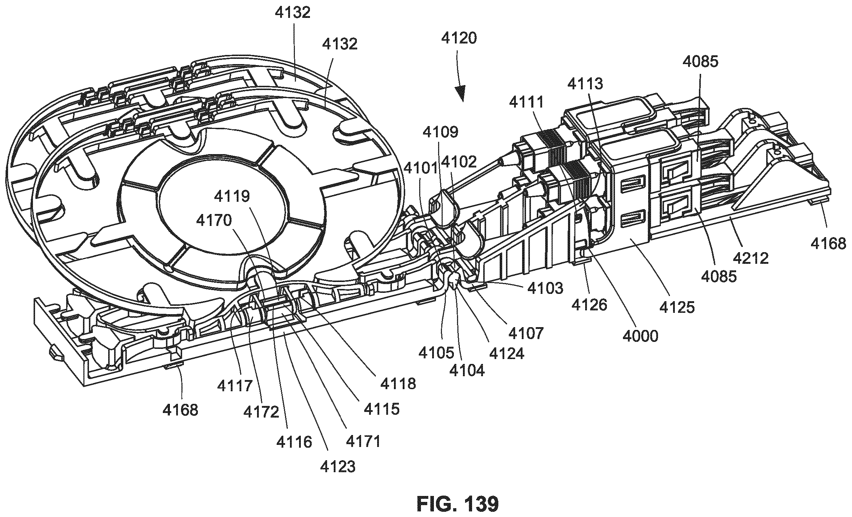

Now referring to FIGS. 139-143 and 145-152, one of the termination arrangements 4120 removed from the drawer 4110 is shown in isolation. As noted above, the termination arrangement 4120, while similar in certain aspects to the termination arrangements 2120 of FIGS. 80-131, includes certain features that are examples of inventive aspects according to the present disclosure.

As noted above, the termination arrangement 4120 includes a pair of splice trays 4132 integrally incorporated onto the support member 4123 of the termination arrangement 4120 that are hingable with respect to the termination arrangement 4120 along the X-axis. The termination arrangement 4120 also includes a pair of adapter holder portions 4125 that are removably mounted to the support member 4123 of the termination arrangement 4120 that are hingable with respect thereto and pivotable about the Y-axis for access. As such, each termination arrangement 4120 within the drawer 4110 provides a double-wide configuration for supporting two splice trays 4132 that are integrally incorporated onto the support member 4123 and two adapter holder portions 4125 that are separately pivotable with respect to the support member 4123 for access.

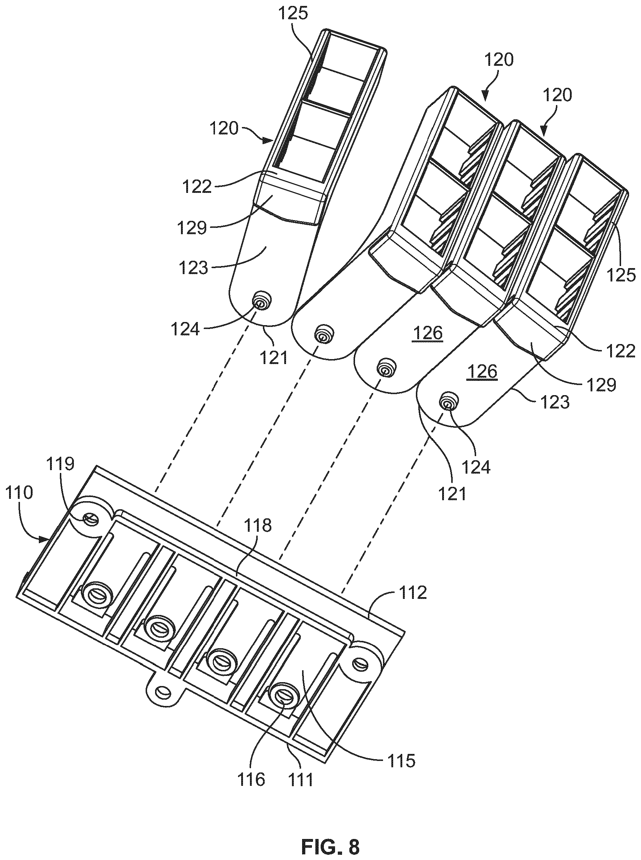

Similar to the termination arrangements shown in FIGS. 8-101, each adapter holder portion 4125 of the termination arrangement 4120 may be configured with a hinge pin/retainer 4124 on each side thereof that are receivable via a snap-fit interlock by spaced-apart hinge receivers 4101 located on the support member 4123. The hinge receivers 4101 are defined by elastically flexible snap hooks 4102. The cooperation of the hinge retainers 4124 and the hinge receivers 4101 allow pivotal motion for the adapter holder portions 4125.

Referring to FIGS. 139-143, each hinge retainer 4124 is provided with a curved portion 4103 for allowing pivotal motion within the hinge receiver 4101. And, each hinge retainer 4124 is also provided with a secondary overpull protection tab 4104 that extends from the curved portion 4103. The secondary overpull protection tab 4104 is configured to abut internal vertical walls 4105 defined by the snap hooks 4102 of the hinge receiver 4101 to stop the retainer 4124 at a pre-specified pivoted angle. According to one example embodiment, the secondary overpull protection tab 4104 is designed to abut the snap hook 4102 when the adapter holder portion 4125 has been pivoted about 20 degrees from the horizontal. The tab 4104 prevents or limits the retainer 4124 from being pulled past 20 degrees, which, in most examples, has proven to be an optimal angle to provide enough finger access at both sides of an adapter supported by the adapter holder portion 4125 for cleaning and inspection and minimize the amount of fiber/cable displacement or pull.

Each adapter holder portion 4125 is also configured with a rib 4106 on each side thereof that is configured to fit within a pocket 4107 defined adjacent the hinge receiver 4101 on each side of the support member 4123. The rib 4106 is designed to limit the deflection of the snap hooks 4102 defining the hinge receivers 4101 once the hinge retainers 4124 have been snap-fit into the hinge receivers 4101. The rib 4106 also absorbs any deflection forces applied on the snap hooks 4102.

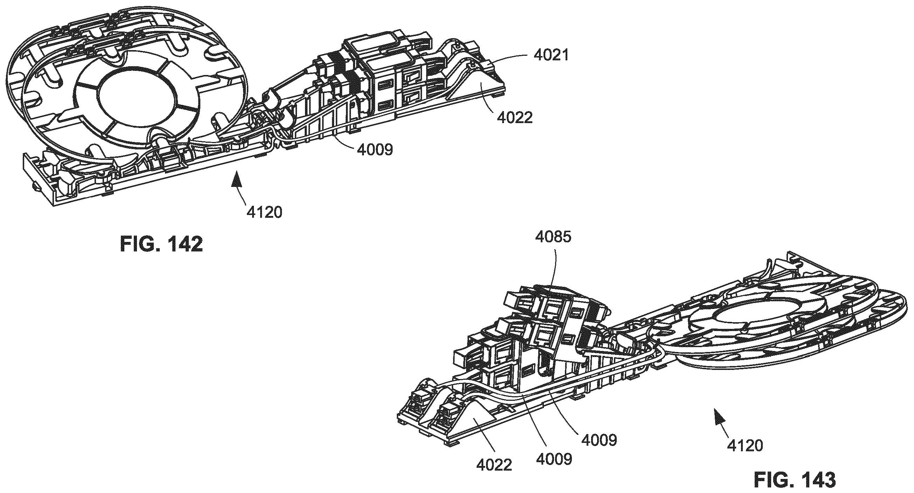

FIG. 143 illustrates one of the termination arrangements 4120 with one of the adapter holder portions 4125 shown in a pivoted position. When the adapter holder portion 4125 is at a pivoted position, the rib 4106 allows enough spacing for the snap hooks 4102 to deflect during removal or insertion of the hinge retainers 4124.

The adapter holder portion 4125 also defines a cable management structure 4108 adjacent the hinge retainer 4124. The cable management structure 4108 is configured to keep cables/fibers coming from each of the adapters downward toward the hinge point and through a cable channel 4109 that is defined between the hinge retainers 4124 on each side of the adapter holder portion 4125. In this manner, the cables/fibers 4008 are generally at the same height as the pivot axis, limiting the amount of pull or displacement on the cables/fibers 4008.

In the example shown, the cable management structure 4108 is configured to allow cables/fibers 4008 to come in under the structure from only one side, which can provide extra side protection and retention for the cables.

While the adapter holder portion 4125 is configured to be pivotable about the Y-axis for access to the individual adapters, the support member 4123, in the depicted embodiment, is configured to be fixedly mounted to the drawer 4110 as noted above.

Still referring to FIGS. 139-143, the support member 4123 is designed adjacent the adapter holder portion 4125 with a lower snap 4000 and an upper snap 4111. Both the lower and upper snaps 4000, 4111 cooperate with hook portions 4112 defined on the adapter holder portion 4125 to keep the adapter holding portion 4125 at about 0 degrees (neutral, non-pivoted position) and about 20 degrees (pivoted position), respectively. As shown in FIG. 143, the hooks 4112 also abut a lip portion 4113 to prevent the adapter holder portion 4125 from being pulled to more than 20 degrees, where the lip 4113 acts as a positive stop.

Still referring to FIGS. 139-143, the coupling of the splice trays 4132 to the support member 4123 are similar to that shown for the termination arrangement 2120 as discussed above and illustrated in FIGS. 93-94.

Similar to discussed above, each splice tray 4132 defines a hinge retainer 4115 that has a center rounded portion 4116 and keyed side portions 4117 defining a flat 4118. The hinge retainer 4115 is configured to be snap-fit into a hinge receiver 4119 defined on the support member 4123. The hinge receiver 4119, similar to the hinge retainer 4115 of each splice tray 4132, defines a center portion 4170 with spaced-apart elastic hooks 4171 and two side portions 4172 that are keyed for receiving the keyed side portions 4117 of the hinge retainer 4115.

Similar to that discussed above with respect to termination arrangement 2120, a given splice tray 4132 has to be oriented about 90 degrees from the horizontal when being coupled to the support member 4123. The center rounded portion 4116 of the hinge retainer 4115 is simply clicked into the center portion 4170 of the hinge receiver 4119 while the flats 4118 defined on the side portions 4117 of the hinge retainer 4115 have to be aligned with matching openings 4173 defined on the side portions 4172 of the hinge receiver 4119 during insertion.

In the version of the termination arrangement 4120 shown in FIGS. 132-152, the hinge retainer 4115 of the splice trays 4132 and the hinge receivers 4119 of the support members 4123 are configured such that the splice trays 4132 generally lie at an angle of about 15 degrees to the horizontal when brought to a flat position. In this manner, the splice trays 4132 can lie flatter than those shown in FIGS. 80-101, which allows each splice tray 4132 to be provided increased in size as compared to the trays discussed above and which allows a single large cover 4014 to be placed over the splice trays 4132 for protection. In the depicted embodiment, each splice tray 4132, due to its larger size, can provide an R30 bend radius versus, for example, an R20 bend radius provided in the earlier examples.

Now referring to FIGS. 139-152, as mentioned above, in certain applications, the fibers that are spliced at the exit side of the splice trays 4132 may be provided as pass-through fibers 4009 that do not use the adapters 4085 of the adapter holder portions 4125. In such an application, one or more of the adapters 4085 at the adapter holder portion 4125 of the termination arrangement 4120 can be replaced by other devices such as, for example, a cable termination unit (CTU) 4021. The CTU 4021 may also be referred to as a cable strength member fixation device. An example of this configuration is shown for the termination arrangement 2120 in FIG. 101 where a CTU 2187 has been provided in place of an adapter 2085 within the adapter holder portion 2125. The types of devices that can provide the pass-through option can be selected depending upon the desired connectivity.

The inventive aspects of the termination arrangement 4120 provide a pass-through option for direct splicing without replacement of the adapters 4085 mounted at the adapter holder portion 4125 as shown in FIGS. 139-152.

As shown, the support member 4123 of the termination arrangement 4120 defines a pair of CTU mounts 4022 adjacent a front end 4023 of the support member 4123, in front of and spaced away from the pivotable adapter holder portions 4125. Each CTU mount 4022 is configured to removably receive a pair of CTU's 4021 while allowing the adapters 4085 to remain on the pivotable adapter holders 4125. If the adapters 4085 are not going to be used for mating a pair of connectorized pigtails 4008 and if a direct pass-through is going to be implemented via the CTU's 4021, connectors can simply be removed from the adapters 4085 while leaving the adapters 4085 mounted, and optical fiber(s) 4009 that have been spliced at the splice tray(s) 4132 can be routed directly to the CTU's 4021.

As shown, each CTU mount 4022 is configured to mount two CTU's 4021 to match the number of adapters 4085 on a respective adapter holder portion 4125.

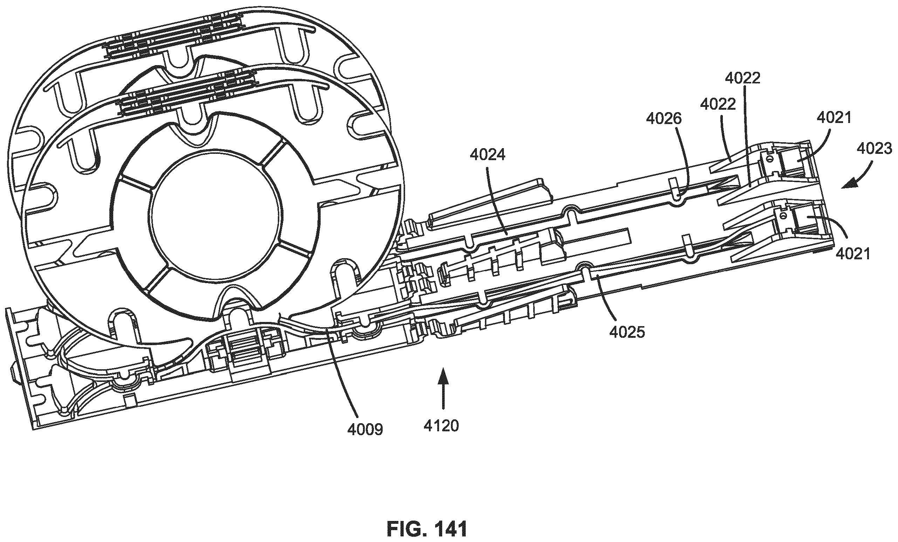

Referring now to FIGS. 141-143, the support member 4123 defines a pair of cable channels 4024 that are positioned underneath the pivotable adapter holder portions 4125 for accommodating the fibers 4009 that are directly routed to the CTU's 4021 adjacent the front 4023 of the support member 4123. The channels 4024 may be provided as cut-outs 4025 in the support member 4123. The support member 4123 may include cable retention fingers 4026 for keeping the pass-through fibers 4009 within the cutouts 4025 as shown. In this manner, the pass-through fibers 4009 can be routed directly under the adapter holder portions 4125 without interfering with the positioning or the function of the adapter holder portions 4125.

It should be noted that, in order to accommodate any spacing needed for the pass-through fibers 4009 that are positioned within the channels 4024, the mounting slots 4013 within the drawer 4110 are provided at recessed areas 4027 as seen in FIGS. 137 and 138. Each recessed area 4027 is flanked by a pair of walls 4028. The dove-tail shaped mounting features 4126 of the termination arrangements 4120 and the walls 4028 are configured such that a certain amount of space is provided between a bottom surface of the support members 4123 and a floor 4029 of the drawer 4110 to accommodate the pass-through fibers 4009 that are in the channels 4024.

The pass-through fibers 4009 that are routed underneath the adapter holder portions 4125 enter the channels 4024 at the hinging points of the adapter holder portions 4125 as shown in FIG. 142.

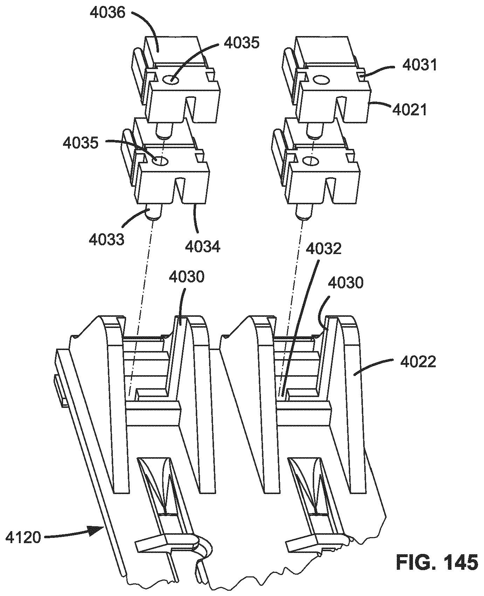

FIGS. 145-147 illustrate further details of the CTU mounts 4022 and the removable mounting of the CTU's 4021 to the termination arrangement 4120.

As shown, each CTU mount 4022 defines a pair of vertical flanges 4030 that are configured to slide within a pair of notches 4031 on opposite sides of the CTU 4021 when vertically receiving the CTU's 4021. A pocket 4032 is provided adjacent a bottom side of each CTU mount 4022 for accommodating a pin 4033 that protrudes from a bottom 4034 of each CTU 4021. The pins 4033 may cooperate with openings 4035 provided on top 4036 of each CTU 4021 for vertically aligning and stacking the CTU's 4021 in a locked manner.

When the CTU's 4021 are vertically slid into the CTU mounts 4022, the flanges 4030 cooperate with the notches 4031 to limit axial movement of the CTU's 4021, and, therefore, axial movement of any cabling terminated to the CTU's 4021, as will be discussed in further detail below.

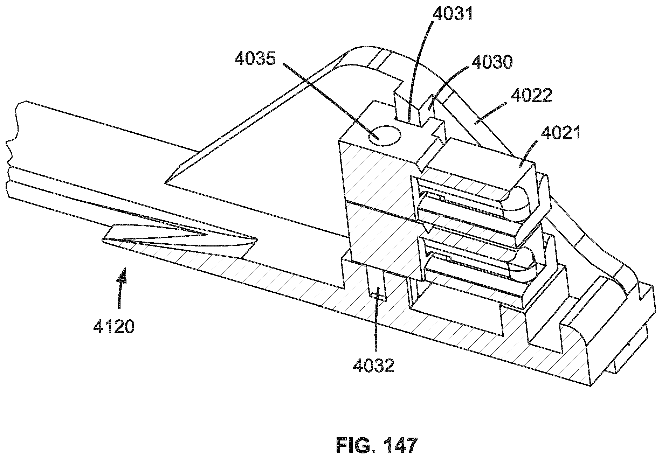

A cross-sectional view bisecting the CTU's 4021 is shown in FIG. 147 to illustrate the cooperatively-mating parts.

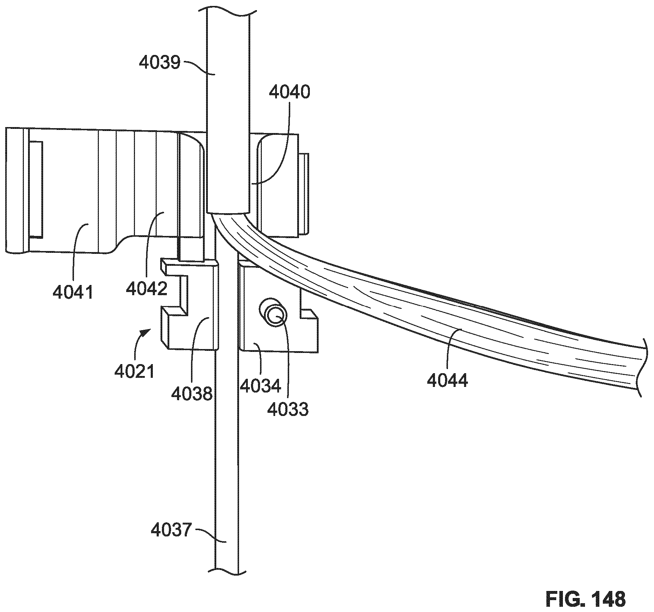

Now referring to FIGS. 148-152, the use of the depicted CTU's 4021 in providing termination of the pass-through cables/fibers 4009 so as to provide strength-member fixation is shown.

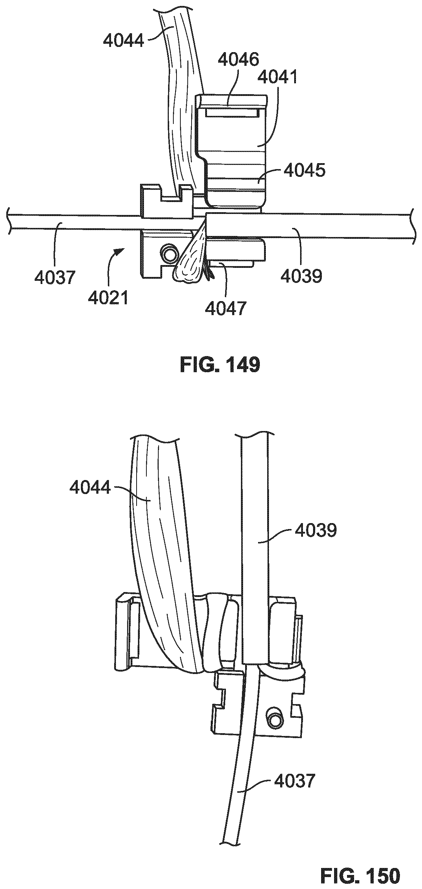

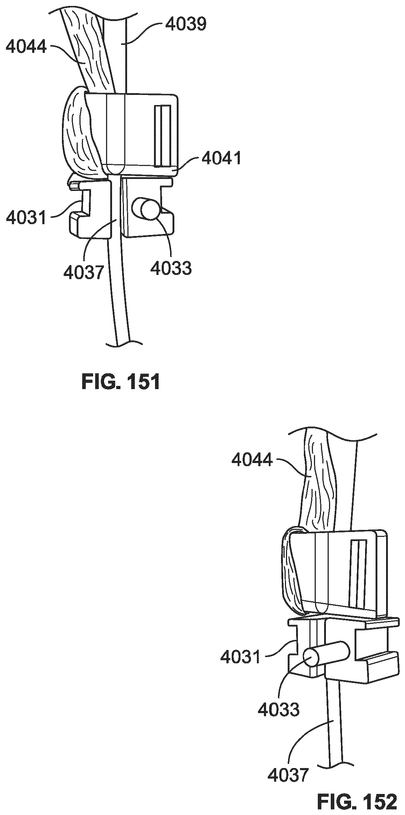

Referring to FIG. 148, an example of a CTU 4021 as usable within the termination arrangement 4120 is depicted from the bottom side 4034 of the CTU 4021. As shown, a buffer tube 4037 of a cable 4009 that has been spliced at the splice tray 4132 is positioned within a tube channel 4038 while an outer jacket 4039 is positioned within a jacket channel 4040 of the CTU 4021. A pivotable snap cover 4041 of the CTU 4021 that is provided with a living hinge 4042 on the CTU 4021 is used to clamp the outer jacket 4039 of the pass-through cable 4009 adjacent a front end 4043 of the CTU 4021. Before the snap cover 4041 is used to clamp the outer jacket 4039 within the jacket channel 4040, strength members 4044 in the form of aramid yarns may be wrapped around the perimeter of the CTU 4021 (as shown in FIG. 149) and further wrapped around in the axial direction (as shown in FIG. 150) around a pocket 4045 provided adjacent the living hinge portion 4042 of the CTU 4021. Once the aramid fibers 4044 have been wrapped in two perpendicular directions on the CTU 4021, the snap cover 4041 may be pivotally closed, with a lip 4046 of the cover 4041 catching over a tab 4047 on the opposing side of the CTU 4021 (as shown in FIGS. 151-152).

In this manner, each CTU 4021 provides cable pull protection by axially fixing the strength members 4044 of pass-through cables 4009 (e.g., 900 micron, as noted above).

As shown in FIG. 144, outgoing fibers 4007 (either in the form of connectorized pigtails 4008 (e.g., 900 micron) or pass-through fibers 4009 (e.g., 900 micron) that have been directly spliced to the incoming fibers 4003 within the trays 4132 and that have been fixed against cable pull via the CTU's 4021 are led out a right side 4010 of the drawer 4110 after being guided through the cable-exit channel 4011.

Thus, each termination arrangement 4120 allows a direct pass through of the spliced fibers 4009 by simply removing the connectors, while leaving the adapters 4085 mounted, an advantage not provided by the earlier discussed versions of the termination arrangements. The termination arrangements 4120, thus, provide further flexibility and modularity for different desired connectivity needs.

Having described the preferred aspects and implementations of the present disclosure, modifications and equivalents of the disclosed concepts may readily occur to one skilled in the art.

## Claims

1. A termination arrangement (4120) configured for mounting on a telecommunications fixture (4110), the termination arrangement (4120) comprising:
a support member (4123) extending between opposite first and second ends, the support member (4123) including mounting features (4168) for mounting on the telecommunications fixture (4110);
at least one splice tray (4132) attached to the support member (4123);
at least one adapter holder (4125) removably mounted to the support member (4123), the adapter holder (4125) structured to hold at least one optical adapter (4085); and
at least one cable strength member fixation device (4021) mounted to the support member (4123), wherein the at least one adapter holder (4125) is positioned between the at least one splice tray (4132) and the at least one cable strength member fixation device (4021), wherein the support member (4123) is configured such that an optical fiber (4009) spliced within the at least one splice tray (4132) can be terminated to a first connector to be mated to a second connector via the at least one optical adapter (4085), wherein the support member (4123) is also configured such that an optical fiber (4009) spliced within the at least one splice tray (4132) can be directly routed to the at least one cable strength member fixation device (4021) without removal of an adapter (4085) from the at least one adapter holder (4125), the cable strength member fixation device (4021) configured for clamping a strength member (4044) of a fiber optic cable carrying the optical fiber (4009) routed directly from the splice tray (4132) such that the cable strength member fixation device (4021) absorbs pulling forces acting on the fiber optic cable terminated via the termination arrangement (4120), wherein the support member (4123) defines a channel (4024) positioned underneath the at least one adapter holder (4125) for directly routing an optical fiber (4009) spliced within the at least one splice tray (4132) to the at least one cable strength member fixation device (4021) without removal of an adapter (4085) from the at least one adapter holder (4125).

2. A termination arrangement (4120) according to claim 1, wherein the at least one adapter holder (4125) is movably mounted to the support member (4123), wherein movement of the adapter holder (4125) relative to the support member (4123) allows the at least one optical adapter (4085) to move away from the telecommunications fixture (4110) for access.

3. A termination arrangement (4120) according to claim 2, wherein the at least one adapter holder (4125) is pivotally attached to the support member (4123) via a hinge arrangement (4115, 4119).

4. A termination arrangement (4120) according to claim 1, wherein the at least one splice tray (4132) is movably mounted to the support member (4123).

5. A termination arrangement (4120) according to claim 4, wherein the at least one splice tray (4132) is pivotally attached to the support member (4123).

6. A termination arrangement (4120) according to claim 5, wherein the at least one adapter holder (4125) is also pivotally attached to the support member (4123) such that the splice tray (4132) and the adapter holder (4125) pivot about perpendicular axes.

7. A termination arrangement (4120) according to claim 1, wherein the adapter holder (4125) is structured to hold a plurality of optical adapters (4085) in a stack.

8. A termination arrangement (4120) according to claim 1, wherein the adapter holder (4125) is configured to hold an SC or LC format optical adapter (4085).

9. A termination arrangement (4120) according to claim 1, wherein the termination arrangement (4120) includes an equal number of cable strength member fixation devices (4021) and optical adapters (4085).

10. A termination arrangement (4120) according to claim 1, further comprising a plurality of optical adapters (4085) mounted to the adapter holder (4125), each optical adapter (4085) defining oppositely facing ports having connector insertion axes that are parallel to the support member (4123).

11. A telecommunications fixture (4110) comprising:
a plurality of the termination arrangements (4120) according to claim 1 mounted to the telecommunications fixture (4110) with a snap-fit interlock.

## Patentansprüche

1. Abschlussanordnung (4120), die zur Befestigung an einer Telekommunikationsbefestigung (4110) konfiguriert ist, wobei die Abschlussanordnung (4120) Folgendes umfasst:
ein Stützelement (4123), das sich zwischen einem entgegengesetzten ersten und zweiten Ende erstreckt, wobei das Stützelement (4123) Befestigungsmerkmale (4168) zur Befestigung an der Telekommunikationsbefestigung (4110) beinhaltet;
mindestens ein Spleißmodul (4132), das an dem Stützelement (4123) angebracht ist;
mindestens einen Adapterhalter (4125), der entfernbar an dem Stützelement (4123) befestigt ist, wobei der Adapterhalter (4125) so strukturiert ist, dass er mindestens einen optischen Adapter (4085) hält; und
mindestens eine Kabelzugelement-Fixierungsvorrichtung (4021), die an dem Stützelement (4123) befestigt ist, wobei der mindestens eine Adapterhalter (4125) zwischen dem mindestens einen Spleißmodul (4132) und der mindestens einen Kabelzugelement-Fixierungsvorrichtung (4021) positioniert ist, wobei das Stützelement (4123) so konfiguriert ist, dass ein Lichtwellenleiter (4009), der innerhalb des mindestens einen Spleißmoduls (4132) gespleißt ist, an einem ersten Verbinder abgeschlossen werden kann, der mit einem zweiten Verbinder über den mindestens einen optischen Adapter (4085) zusammengefügt werden soll, wobei das Stützelement (4123) auch so konfiguriert ist, dass ein Lichtwellenleiter (4009), der innerhalb des mindestens einen Spleißmoduls (4132) gespleißt ist, direkt zu der mindestens einen Kabelzugelement-Fixierungsvorrichtung (4021) geführt werden kann, ohne einen Adapter (4085) von dem mindestens einen Adapterhalter (4125) zu entfernen, wobei die Kabelzugelement-Fixierungsvorrichtung (4021) zum Klemmen eines Zugelements (4044) eines Lichtwellenleiterkabels konfiguriert ist, das den direkt von dem Spleißmodul (4132) geführten Lichtwellenleiter (4009) trägt, sodass die Kabelzugelement-Fixierungsvorrichtung (4021) Zugkräfte aufnimmt, die auf das über die Abschlussanordnung (4120) abgeschlossene Lichtwellenleiterkabel einwirken, wobei das Stützelement (4123) einen unterhalb des mindestens einen Adapterhalters (4125) angeordneten Kanal (4024) zum direkten Führen eines Lichtwellenleiters (4009), der innerhalb des mindestens einen Spleißmoduls (4132) gespleißt ist, zu der mindestens einen Kabelzugelement-Fixierungsvorrichtung (4021), ohne einen Adapter (4085) von dem mindestens einen Adapterhalter (4125) zu entfernen, definiert.

2. Abschlussanordnung (4120) nach Anspruch 1, wobei der mindestens eine Adapterhalter (4125) beweglich an dem Stützelement (4123) befestigt ist, wobei eine Bewegung des Adapterhalters (4125) relativ zu dem Stützelement (4123) ermöglicht, dass sich der mindestens eine optische Adapter (4085) für einen Zugang von der Telekommunikationsbefestigung (4110) weg bewegt.

3. Abschlussanordnung (4120) nach Anspruch 2, wobei der mindestens eine Adapterhalter (4125) über eine Gelenkanordnung (4115, 4119) schwenkbar an dem Stützelement (4123) angebracht ist.

4. Abschlussanordnung (4120) nach Anspruch 1, wobei das mindestens eine Spleißmodul (4132) beweglich an dem Stützelement (4123) befestigt ist.

5. Abschlussanordnung (4120) nach Anspruch 4, wobei das mindestens eine Spleißmodul (4132) schwenkbar an dem Stützelement (4123) angebracht ist.

6. Abschlussanordnung (4120) nach Anspruch 5, wobei der mindestens eine Adapterhalter (4125) ebenfalls schwenkbar an dem Stützelement (4123) angebracht ist, sodass das Spleißmodul (4132) und der Adapterhalter (4125) um senkrechte Achsen schwenken.

7. Abschlussanordnung (4120) nach Anspruch 1, wobei der Adapterhalter (4125) so strukturiert ist, dass er eine Vielzahl von optischen Adaptern (4085) in einem Stapel hält.

8. Abschlussanordnung (4120) nach Anspruch 1, wobei der Adapterhalter (4125) so konfiguriert ist, dass er einen optischen Adapter (4085) im SC- oder LC-Format hält.

9. Abschlussanordnung (4120) nach Anspruch 1, wobei die Abschlussanordnung (4120) eine gleiche Anzahl von Kabelzugelement-Fixierungsvorrichtungen (4021) und optischen Adaptern (4085) beinhaltet.

10. Abschlussanordnung (4120) nach Anspruch 1, die ferner eine Vielzahl von optischen Adaptern (4085) umfasst, die an dem Adapterhalter (4125) befestigt sind, wobei jeder optische Adapter (4085) einander gegenüberliegende Anschlüsse definiert, die Verbindereinführachsen aufweisen, die parallel zu dem Stützelement (4123) sind.

11. Telekommunikationsbefestigung (4110), umfassend:
eine Vielzahl der Abschlussanordnungen (4120) nach Anspruch 1, die mit einer Schnappverriegelung an der Telekommunikationsbefestigung (4110) befestigt sind.

## Revendications

1. Agencement de terminaison (4120) configuré pour le montage sur un montage de télécommunications (4110), l'agencement de terminaison (4120) comprenant :
un organe support (4123) s'étendant entre des première et deuxième extrémités opposées, l'organe support (4123) comportant des éléments de montage (4168)
pour le montage sur le montage de télécommunications (4110) ;
au moins un plateau d'épissure (4132) fixé à l'organe support (4123) ;
au moins un porte-adaptateur (4125) monté de manière amovible sur l'organe support (4123), le porte-adaptateur (4125) étant structuré pour maintenir au moins un adaptateur optique (4085) ; et
au moins un dispositif de fixation d'organe de renfort de câble (4021) monté sur l'organe support (4123), dans lequel l'au moins un porte-adaptateur (4125) est positionné entre l'au moins un plateau d'épissure (4132) et l'au moins un dispositif de fixation d'organe de renfort de câble (4021), dans lequel l'organe support (4123) est configuré de telle sorte qu'une fibre optique (4009) épissée au sein de l'au moins un plateau d'épissure (4132) peut se terminer vers un premier connecteur pour être accouplée à un deuxième connecteur par l'intermédiaire de l'au moins un adaptateur optique (4085), dans lequel l'organe support (4123) est également configuré de telle sorte qu'une fibre optique (4009) épissée au sein de l'au moins un plateau d'épissure (4132) peut être directement acheminée vers l'au moins un dispositif de fixation d'organe de renfort de câble (4021) sans retirer un adaptateur (4085) de l'au moins un porte-adaptateur (4125), le dispositif de fixation d'organe de renfort de câble (4021) étant configuré pour serrer un organe de renfort (4044) d'un câble à fibre optique portant la fibre optique (4009) acheminée directement depuis le plateau d'épissure (4132) de sorte que le dispositif de fixation d'organe de renfort de câble (4021) absorbe les forces de traction agissant sur le câble à fibre optique qui se termine par l'intermédiaire de l'agencement de terminaison (4120), dans lequel l'organe support (4123) définit un canal (4024) positionné sous l'au moins un porte-adaptateur (4125) pour acheminer directement une fibre optique (4009) épissée au sein de l'au moins un plateau d'épissure (4132) vers l'au moins un dispositif de fixation d'organe de renfort de câble (4021) sans retirer un adaptateur (4085) de l'au moins un porte-adaptateur (4125).

2. Agencement de terminaison (4120) selon la revendication **1,** dans lequel l'au moins un porte-adaptateur (4125) est monté de manière mobile sur l'organe support (4123), dans lequel le mouvement du porte-adaptateur (4125) par rapport à l'organe support (4123) permet à l'au moins un adaptateur optique (4085) de s'éloigner du montage de télécommunications (4110) pour un accès.

3. Agencement de terminaison (4120) selon la revendication 2, dans lequel l'au moins un porte-adaptateur (4125) est fixé de manière pivotante à l'organe support (4123) par l'intermédiaire d'un agencement de charnière (4115, 4119).

4. Agencement de terminaison (4120) selon la revendication 1, dans lequel l'au moins un plateau d'épissure (4132) est monté de manière mobile sur l'organe support (4123).

5. Agencement de terminaison (4120) selon la revendication 4, dans lequel l'au moins un plateau d'épissure (4132) est fixé de manière pivotante à l'organe support (4123).

6. Agencement de terminaison (4120) selon la revendication 5, dans lequel l'au moins un porte-adaptateur (4125) est également fixé de manière pivotante à l'organe support (4123) de telle sorte que le plateau d'épissure (4132) et le porte-adaptateur (4125) pivotent autour d'axes perpendiculaires.

7. Agencement de terminaison (4120) selon la revendication 1, dans lequel le porte-adaptateur (4125) est structuré pour maintenir une pluralité d'adaptateurs optiques (4085) en un empilement.

8. Agencement de terminaison (4120) selon la revendication 1, dans lequel le porte-adaptateur (4125) est configuré pour maintenir un adaptateur optique (4085) de format SC ou LC.

9. Agencement de terminaison (4120) selon la revendication 1, dans lequel l'agencement de terminaison (4120) comporte un nombre égal de dispositifs de fixation d'organe de renfort de câble (4021) et d'adaptateurs optiques (4085).

10. Agencement de terminaison (4120) selon la revendication 1, comprenant en outre une pluralité d'adaptateurs optiques (4085) montés sur le porte-adaptateur (4125), chaque adaptateur optique (4085) définissant des ports se faisant face de manière opposée ayant des axes d'insertion de connecteur qui sont parallèles à l'organe support (4123).

11. Montage de télécommunications (4110) comprenant :
une pluralité d'agencements de terminaison (4120) selon la revendication 1 montés sur le montage de télécommunications (4110) avec un verrouillage par encliquetage.
